(19) Europäisches Patentamt
European Patent Office
Office européen des brevets

(11) **EP 1 110 408 B1**

(12) **EUROPEAN PATENT SPECIFICATION**

(45) Date of publication and mention
of the grant of the patent:
**14.05.2003 Bulletin 2003/20**

(51) Int Cl.$^7$: **H04N 7/26**, H04N 7/50, H04N 7/36

(21) Application number: **99944529.9**

(22) Date of filing: **26.08.1999**

(86) International application number:
**PCT/EP99/06288**

(87) International publication number:
**WO 00/013420 (09.03.2000 Gazette 2000/10)**

(54) **COMPRESSION AND DECOMPRESSION SYSTEM FOR DIGITAL VIDEO SIGNALS**

KOMPRESSIONS- UND DEKOMPRESSIONSSYSTEM FÜR DIGITALE VIDEOSIGNALE

SYSTEME DE COMPRESSION ET DE DECOMPRESSION POUR DES SIGNAUX VIDEO NUMERIQUES

(84) Designated Contracting States:
**AT BE CH CY DE DK ES FI FR GB GR IE IT LI LU MC NL PT SE**

(30) Priority: **28.08.1998 FR 9810837**
**30.12.1998 FR 9816679**

(43) Date of publication of application:
**27.06.2001 Bulletin 2001/26**

(73) Proprietor: **Holding B.E.V. S.A.**
**2953 Luxembourg (LU)**

(72) Inventor: **PIRIM, Patrick**
**F-75013 Paris (FR)**

(74) Representative: **Catherine, Alain**
**Cabinet Harlé & Phélip**
**7, rue de Madrid**
**75008 Paris (FR)**

(56) References cited:
**EP-A- 0 543 197**        **EP-A- 0 679 032**
**WO-A-95/20863**          **WO-A-96/14711**
**FR-A- 2 712 449**        **US-A- 5 495 292**
**US-A- 5 777 678**

- **AD HOC GROUP ON MPEG-4 VIDEO VM EDITING: "APPENDIX A: COMBINED MOTION SHAPE TEXTURE CODING" MPEG-4 VIDEO VERIFICATION MODEL VERSION 7.0 - ISO/IEC JTC1/SC29/WG11 MPEG97/N1642, pages 195-203, XP002090865**
- **MARTUCCI S A ET AL: "A ZEROTREE WAVELET VIDEO CODER" IEEE TRANSACTIONS ON CIRCUITS AND SYSTEMS FOR VIDEO TECHNOLOGY, vol. 7, no. 1, 1 February 1997 (1997-02-01), pages 109-118, XP000678884**

**Description**

This invention relates to a compression and decompression system (process and device) for digital video signals.

The system according to the invention enables, in its compression portion, to compress the digital video signals from various sources, such as a digital video camera, an analogue video camera followed by an analogue/digital converter, a cinema film reader transmitting digital video signals, either directly or via an analogue/digital converter, a video cassette recorder or a digital output computer, a compact disc, a laser disc, a D.V.D., a picturephone (telephone with video camera), fixed or portable, a digital video signal with image sequence, a video signal from a data processing device (P.C.I. interface, U.S.B, Firebus), whereas the camera may, among other things, consist of a simplified micro-camera, an MOS imager or a CCD with its associated electronics on an electronic chip, while the signals can be in various video systems, such as PAL, NTSC, SECAM, HDTV (high fidelity television), in black and white as well as in colours with various components *RGB, YCbCr* and *CMYK,* representing animated scenes in the form of a flow of digital video signals.

The compressed digital signals, available at the output of the compression portion of the compression and decompression system according to the present invention, which receives at its input a succession of digital video signals to be compressed, can be either recorded on a digital image recording medium, such as a CD, a laser disc, a CD-ROM, a CDC-ROM, a DVD-ROM, a magnetic tape, with or without a signal representative of the synchronous sound, either transmitted remotely via satellite, cable, Hertzian relays or a simple telephone line thanks to their limited pass-band, in order to be recorded remotely on a digital image recording medium, directly or after decompression by the decompression portion of a compression and decompression system according to the present invention, using for the said decompression the same standard as for the compression, or to be visualised remotely, after such a decompression, on the screen of a television set, a monitor, a computer, a fixed or portable picturephone, whereby the invention is also applicable to the transmission, notably via satellite, of cinematographic films, for example to theatres from a broadcasting centre.

The system according to the invention enables to obtain further compression (in a narrower pass-band) in its compression portion, i.e. to produce at the output of this portion a shorter digital signal per video picture and/or to obtain, at the output of its decompression portion, a digital signal representing a better quality video picture, notably finer and without any apparent picture blocks.

Such a system also exhibits other advantages,

- one of which is derived from the fact that the system becomes operational very rapidly after power-up, in particular after three video signal frames, whereas prior systems must wait for approx. twelve frames before becoming operational, and
- another is derived from the fact that, in the compression channel or portion, the original pre-encoding video signals are reconstructed, upon completion of the coding and before final compression of the digital video signals, for control purposes, which enhances the reliability of the compression.

In particular, thanks to its characteristics, the compression and decompression system according to the invention enables:

- to provide a picturephone system between two sets, mobile or portable, with respectively acquisition and reconstruction of animated pictures in these sets, and transmission of the digital compressed video signals, even over a conventional telephone line, whereas the reproduced pictures are of very good quality, finding application, among others, in videoconferences;
- to record on a recording medium, one of the types mentioned previously (such as a CD, a laser disc, a CD-ROM, a CDC-ROM, a DVD-ROM) a flow of digital video information flow (for example that of a cinema or video film, an electronic game or an interactive system) which is much larger than it has been until now, by the digital video signal compression and decompression systems, in particular, to record on a single medium, a flow of information which currently requires two or three media of the same nature.

Generally speaking, the invention can be applied to the various communication systems, computers, entertainment systems, such as video games and karaoke, education and learning system, cameras, camcorders, VCRs, digital video transmitters and receivers, and more generally to all the digital data transmission and recording systems.

At the moment, different digital video signal compression and decompression standards are known, and used commercially, especially JPEG (Joint Photographic Experts Group), designed essentially for fixed pictures, MPEG (Moving Pictures Experts Group) designed essentially for animated pictures, in its versions MPEG 1 and MPEG 2 already available commercially and soon MPEG 4 whose standardisation is in progress.

These standards, notably MPEG are based on the use of The Fourier transform, while using solely the cosine component of this transform. Essentially, a digital video signal compression and decompression system according to these JPEG and MPEG standards comprises a *DCT* (Discrete Cosine Transform) filter or encoder implementing Fourier transforms and a compression - decompression set; in the compression portion of the system, the signal to be compressed is applied at the compression input of the *DCT* filter whose compression output signal (consisting of the Fourier transforms) is applied at the compression input of the said compression - decompression assembly which produces on its compression output the compressed video signal whereas, in the decompression portion of the system, the signal to be decompressed is applied at the decompression input of the said assembly whose output signal, available on the decompression output of the assembly, is applied at the decompression input of the *DCT* filter which produces, on its decompression output, the decompressed signal, whereby the decompression portion of the system performs the reverse functions of those carried out in the compression portion of the system, for the *DCT* filter as well as for the compression - decompression assembly.

More particularly, in the case of MPEG, compression consists essentially in dividing each video picture representative of an animated scene into 8 x 8 blocks covering the whole picture and in processing in succession the 64 blocks of successive pictures in a *DCT* filter or unit which carries out a Fourier transform in order to keep only the representative portion (that of the cosine component).

Then, in a first unit of the compression - decompression assembly, consisting of an adaptive quantifier, the frequency digital coefficient of the representative portion of the successive Fourier transforms thus determined, are quantified in order to reduce the number of their bits in the binary flow of «0»s and of «1»s and to increase the number of «0»s in this flow. The time-related variations of the value of each pixel (or picture-element) of the successive frames of the *DC* (Discrete Cosine) signal coming out of the *DCT* unit, which are generally low, are determined; this operation consisting in the determination of the binary variation signals or difference for each pixel and the replacement of the *DC* signals with these binary signals further reduces the size of the digital pixel signals in the data flow transmitted and increases the proportion of «0»s in this flow.

Next, the second unit of the compression-decompression assembly, consisting of an *RLC* (zero Run-Length-Coding) encoder locating the consecutive «0» sequences, performs an encoding which transforms the *DC* signals thus quantified into a set of 8 bits, the first four of which represent the number of «0» and the last four of which the number of bits representative of the signal before encoding.

Finally, the third unit of the compression-decompression assembly, consisting of a Huffman encoder which, using an encoding spreadsheet, assigns to each of the 8-bit groups mentioned previously, a binary number comprising a limited number of bits, in particular a very limited number for most frequent 8-bit groups, (the said third unit) replaces each 8-bit group with a binary number containing fewer than 8 bits as an average.

It is the flow of these binary numbers (bits) coming out of the Huffman encoder which forms the final compressed signal, output by the compression-decompression MPEG system, in its compression portion; this signal comprises most video information of the video signal entering this compression portion of the compression-decompression system, which comprises as stated above a *DCT* filter carrying out the Fourier transform and a compression-decompression assembly made of an adaptive quantifier, an *RLC* encoder and a Huffman encoder in succession.

The decompression portion of the compression-decompression MPEG system uses the same units in reverse order: a Huffman encoder, an *RLC* encoder, an adaptive quantifier (these three units forming the compression-decompression assembly) and finally a *DCT* filter, in order to obtain finally a decompressed digital video signal which enables to display a video picture relatively close to the initial picture, whose representative digital video signal has been compressed in the compression portion of the system.

It appears therefore that in the compression-decompression MPEG system, the compression portion and the decompression portion at both ends of a transmission chain (in the broadest sense) or of a recording and reading chain, must absolutely comply with the same standard, i.e. the MPEG 1 or MPEG 2 standard.

One of the shortcomings of such an MPEG system is such that in the picture obtained after decompression, there are visual parasites in the contact zones between the 8 x 8 blocks into which the initial picture has been broken down (block effect).

Implementing the JPEG and MPEG 1 or MPEG 2 standards, with corresponding units mentioned previously, is described more completely in the «Product Catalogue» of Fall 1994 of C-Cube Microsystems in Milpitas California, USA.

Another compression-decompression system suggested more recently uses, instead of the standard Fourier transform, more precisely its cosine component, another type of transform i.e. the wavelet transform.

To this end, the notion of localisation is introduced into the Fourier transform and, instead of comparing the whole signal to be processed (in particular the digital video signal to be compressed) with infinite sine waves of all possible frequencies, the amplitude associated with each frequency representing the respective importance of the sine wave of this frequency in the breakdown of the signal processed (case of the conventional Fourier transform), we introduce (in the case of the wavelet transform) a fixed-size time window which delineates the analysis interval and we compare, within this window, the signal to be broken down with an oscillating signal whose frequency is caused to vary, it then suffices to drag the window for the whole duration of the signal to be broken down in order to perform complete analysis of the said signal.

The wavelet analysis, which therefore applies a time-frequency method, is described for instance in an article entitled «Wavelet analysis» by Yves Meyer, Stéphane Saffard and Olivier Rioul in the «Science» magazine, September 1987 issue (n° 119), pages 28 to 37, in an article entitled «Wavelets: an alternative to the Fourier analysis» by Philippe Corvisier in the «Electronique» magazine, April 1997 issue (n°69), pages 47 to 50 and in the volume 1999 (sic) of the «Science au présent» magazine published in Autumn 1998 by Encyclopaedia Universalis, pages 258 to 270.

«Analogue Devices», an American company, has produced a digital video signal compression-decompression system which, in a first stage, encodes the digital video signals to be processed while implementing the wavelet analysis in a wavelet filter which constitutes the first unit of the system (which can be preceded, i.e. in case when the signal to be compressed is not already of the $Y$, $Cb$, $Cr$ type, by a preliminary unit for converting the digital video signal into a signal of the $Y$, $Cb$, $Cr$ type, whereas these three symbols represent, classically, the luminance component, the blue chrominance component, less luminance, and the red chrominance component, less luminance, respectively of the colour video signal), and, in a second stage, performs the compression of the signals encoded in the first phase, using a compression-decompression assembly (with an adaptive quantifier, an $RLC$ encoder and a Huffman encoder) of the same type as that implemented in the MPEG systems.

Such a compression-decompression system of the «Analogue Devices» company, which his designated «ADV 601», is described in an article entitled «A video compression circuit using wavelets» by Patrick Butler in the «Electronique» magazine, April 1997 (n° 69), pages 51 to 59 (further to the article of Philippe Corvisier mentioned previously).

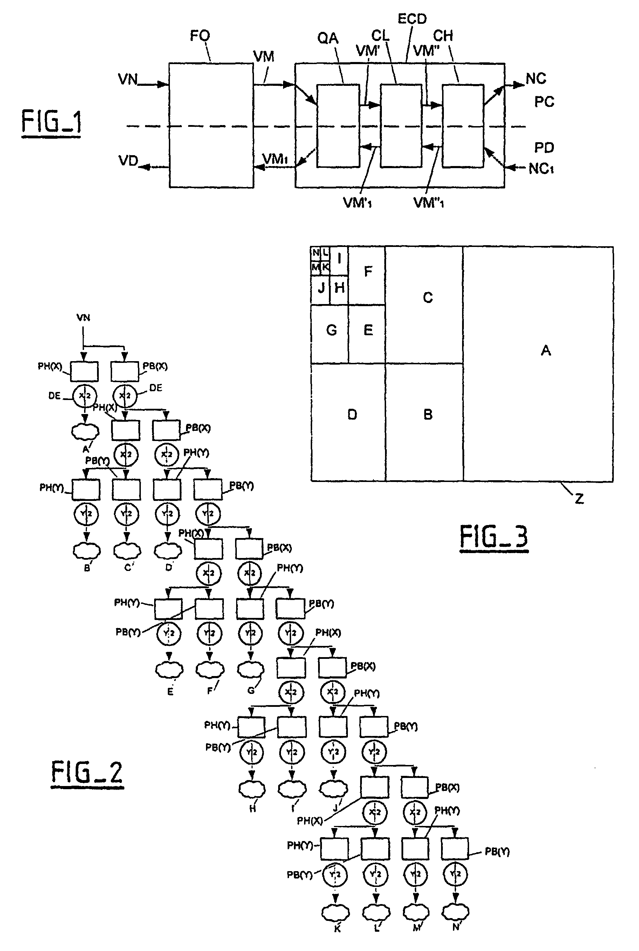

Such an «ADV 601» system is illustrated (as regards the processing of the video signal, described here) on the appended figure 1, which distinguishes the upper compression portion $PC$ and the lower decompression portion $PD$, and it comprises, in order to compress a $Y$, $Cb$, $Cr$-type digital video signal and to decompress a signal thus compressed, successively in series from left to right for compression and from right to left for decompression:

1. A conversion or encoding wavelet filter $FO$, which is based on the bi-orthogonal wavelet transform 7-9, using high-pass filters $PH$ (fitted with 7 taps) and low-pass filters $PB$ (fitted with 9 taps) arranged as a tree or a cascade (figure 2), whereas the transformation takes place one frame at a time of the input digital video signal to be compressed, designated as $VN$, in $Y$, $Cb$, $Cr$. We thus obtain 14 pictures consisting of three components $Y$, $Cb$, $Cr$, i. e. 42 sub-pictures, 14 for the luminance, 14 for the colour blue and 14 for the colour red. By designating the Cartesian co-ordinates by $X$ and $Y$, we can see that the tree of low-pass and high-pass filters, which also comprises «decimators» $DE$, suppressing half the information, either into $X$ or into $Y$ (as shown on figure 2), provides signals implementing a Mallat diagram formed of 14 boxes or blocks $A$, $B$, $C$, ... $M$, $N$ (figure 3). Figure 2 illustrates the five stages in which the scale is divided by 4 (two into X and two into Y), with the blocks $A$, $B$, $C$, ... $M$, $N$ corresponding to the blocks of the Mallat diagram, as well as the co-ordinate, $X$ or $Y$, processed by each filter $PB(X)$, $PB(Y)$, $PH(X)$, $PH(Y)$ and each half (indicated by the figure 2) suppressing decimator DE

It will be noted that the wavelet filter $FO$ does not perform any compression, but exclusively converts the digital input video signal $VN$ into an output signal $VM$ with 42 sub-pictures corresponding to the 14 blocks $A$, $B$, $C$ ... $M$, $N$ of the Mallat diagram for the three components $Y$, $Cb$, $Cr$ (42 = 14 x 3). The output signal $VM$ of the wavelet filter $FO$ consists therefore of a succession of picture mosaics.

In its reconversion (or decoding) portion, the wavelet filter $FO$ performs, not a true decompression, but a conversion of the 42 Mallat sub-pictures into a digital decompressed output video signal $VD$.

2. A compression-decompression assembly $ECD$ that, in the compression part $PC$, performs a true compression and, in the decompression part $PD$, a true decompression.

This $ECD$ assembly which receives, in its compression portion, the signal $VM$, of the image mosaic type, with 42 sub-pictures, of the Mallat type, from the conversion portion of the wavelet filter $FO$, outputs the compressed digital signal $NC$ which contains all the essential characteristics of the digital input video signal $VN$ of the ADV 601, whereas the compression resulting from the suppression of the majority of binary signals (bits) whose value is determined («zero» value) between both possible values («zero» and «one») of such signals.

The compression-decompression assembly $ECD$ (figure 1) of the ADV 601 consists, similarly to the compression-decompression assembly, of a MPEG system described above, of the following elements:

a) an adaptive quantifier $QA$ receiving the signal $VM$ mentioned previously, from the wavelet filter $FO$ and derives 42 values (for the 42 sub-pictures and hence the 14 blocks of the Mallat diagram, each with the three components $Y$, $Cr$, $Cr$); this quantifier $QA$ comprises 42 elementary quantifiers, optimal for these 42 sub-pictures, i.e. for each video frame, whereas the quantifiers calculation is performed by a particular processor of known type (not illustrated) during the vertical frame return period; the result is a signal $VM'$, available at the output of the quantifier *QA*;

b) a *RLC* (zero Run-Length-Coding)-type encoder *CL* which encodes, as in the MPEG systems, the successive input signals (*VM'* in this case) in order to assign an 8-bit binary output signal *VM"* to the said signals, whereas the first four bits represent of the number of consecutive «0»s and the last four the number of representative bits after this series of consecutive «0»s; and

c) an encoder *CH,* of Huffman encoder type, which, as in a MPEG system, assigns to each 8-bit bloc of the signal *VM"* from the encoder *CL,* a code number with a limited number of bits, notably for the most common blocks, whereas the output signal *NC* of the encoder *CH* constitutes the compression output of the compression-decompression assembly *ECD* and finally that of the ADV 601, after possible adaptations.

Figure 1 shows with full line arrows, from left to right, the progression of the signals (*VN, VM, VM', VM"*, *NC*) in the compression portion *PC* and with dotted line arrows, from right to left, the progression of the signals (*NC1, VM"1, VM'1*, *VM1*, *VD*) in the decompression portion *PD*.

The decompression of a compressed digital signal *NC1*, taking place in reverse order of the compression of a digital input video signal *VN*, is performed successively by the units *CH, CL, QA,* then *FO,* of the ADV 601, in their inverted operation, as explained in the article by Patrick Butler, mentioned previously.

A device similar to the ADV 601 has been built by VisioWave, a French company, and announced in the French magazine, «Electronique International» of 15th October 1998, page 42.

The present invention aims at perfecting the previous systems, such as JPEG, MPEG and ADV 601, in order to further reduce the pass-band width of the compressed digital signal and/or to improve the picture quality that can be obtained from this compressed signal when comparing the said signal with the corresponding picture represented by the digital video signal before compression. This is achieved by the process and devices as set out in the independent claims.

The invention implements, as the ADV 601, a wavelet filter and a compression-decompression assembly, comprising especially an adaptive quantifier, an *RLC* encoder and a Huffman encoder, but instead of processing, in the compression channel or portion of this assembly, the output of the wavelet filter, which performs the encoding during a first processing stage, it causes the signal coming out of the wavelet filter to pass through an additional encoding process, by implementing the process and the device for locating a zone in relative motion in a scene observed and for determining the speed and the oriented direction of the displacement subject matter of the application for a French patent made on 26th July 1996 and published under the n°2.751.772 and in the application for an International patent PCT published under the n° WO 98-05002 and made on 22nd July 1997 while invoking the priority of the said application for a French patent (applications designating the same inventor as the present application), which provides the compression-decompression assembly, which performs the compression in the ADV 601, with a signal having passed through two encoding operations, hence a signal different from that received by this assembly in such an ADV 601.

Conversely, in the decompression channel or portion, the invention sets forth, at the output decompression of the compression-decompression assembly, a first decoding of the output signal of this assembly, which performs the reverse operation of the said additional encoding process performed in the compression channel or portion by implementing the patent applications mentioned previously, and generates at the reverse input of the wavelet, the signal having passed through this first decoding.

On the other hand, the international patent application quoted above mentions, with reference to its figure 22, that a component of ADV 601 type can be used, in relation to a Mallat diagram, in order to take into account a wider range of displacement speeds of a zone in relative displacement in a scene observed, a zone that is delineated and whose oriented direction and whose displacement speed are appraised according to this international patent application, and to this end, the said application suggests to realise a compression which would only process the partial pictures of the Mallat diagram obtained using a complete ADV 601 unit, provided at the input of the device according to the said patent application.

It appears therefore that within the frame of the lay-out according to figure 22 of the international patent application mentioned previously, the component ADV 601 is used as such, as a whole, to perform the compression, thereby obtaining a Mallat diagram, of a digital signal representative, for each different pixel, of a zone displacement speed in a scene observed when this speed is very high, in order to reduce the number of bits of this signal, bits necessary to represent such a very high speed.

It will be noted in the following that the expression «compression-decompression assembly» normally designates an assembly capable of performing, on line, the compression of the digital signals to be compressed and, conversely, the decompression of the digital signals to be decompressed, notably in a system for the compression of digital video signals and for the decompression of digital signals compressed in the system standard, notably in telecommunication applications, such as videoconference, picturephone, in which each terminal or set performs the compression and the decompression, but also that, if the set only performs either of the compression or decompression operations, this expression «compression-decompression assembly» may designate an assembly performing only a compression, for instance in the case of a CDV recording set, video cassette or other medium, or conversely an assembly performing only a decompression, for instance in the case of a CDV reader, a magnetic tape in a VCR or other medium. The said compression andlor decompression assembly can advantageously consist of an adaptive quantifier, an *RCL* type encoder and a Huffman encoder in series.

Taking this state of the art into account, consisting of the JPEG, MPEG 1, MPEG 2 systems, with a Fourier transform filter, on the one hand, and of the ADV 601 component, with a wavelet filter, including its application in the international patent application mentioned above, on the other, the present invention aims at providing a compression-decompression system, thereby performing, in compression, additional encoding at the output of a wavelet filter in order to replace the output signals of this filter representing pictures and/or the contours of the scene observed (with different resolutions according to the Mallat diagram) with digital signals representing moving zones, i.e. zones in displacement, in this scene in case of zones whose displacement is limited, while transmitting the said wavelet filter output signals without any modification

- if the extent of the moving zones is too large and corresponds for instance to the beginning of a scene or more generally to the beginning of a shot (in the cinematographic sense) in the digital video signal processed by the said wavelet filter, simply called hereafter «beginning of sequence», or
- if the variation in value of certain pixels undergoes notable modification between two successive frames, for example in case of modification of the lighting of the scene observed.

It will be noted that the wavelet filter of the ADV 601 causes a simplifying encoding which transmits essentially the contours of the different parts of a scene (contours of a face, a body, an object, etc.), whereas within the framework of the invention, this encoding is followed by an additional encoding operation which limits the information transmitted (to the compression-decompression assembly) to the displacements of the contours, except at the beginning of the sequence.

A separation into two distinct devices, one for compression and the other for decompression, is performed in certain applications, such as respectively recording and reading video signals on a medium, such as a laser-disc, a CD-ROM, a DVD, a magnetic tape, a floppy, a hard disk, for instance, whereas the compression device is used for recording the video signals to be compressed before being recorded, while requiring reduced space on the medium, while the decompression device is used for reading such a compressed recording from a VCR, a television set, a computer, a laser-disc player, a CD-ROM player or a DVD player, a magnetic tape recorder, a floppy reader or a hard disk reader, for instance.

Conversely, in such a picturephone system, in particular for videoconferences or over the Internet network, while using video microcameras, each transmission-reception set should comprise a complete compression-decompression device according to the invention, rather than two distinct devices, one for compression and the other for decompression.

We shall now describe a preferred embodiment of a compression-decompression device according to the invention as well as a few particular applications of this process and of this device, with reference to the appended drawings on which:

Figure 1 illustrates schematically a compression-decompression device of ADV 601 type with a wavelet filter, constituting the state of the art

Figure 2 illustrates the known structure of the tree of the wavelet filter according to the device of Figure 1.

Figure 3 represents the layout of the picture mosaic of a composite frame, according to the Mallat diagram, a layout resulting from the implementation, in its compression portion, of the device of Figures 1 and 2, according to the state of the art.

Figure 4 illustrates schematically a compression-decompression device according to the invention.

Figure 5 represents, using functional blocks, the encoding unit when displacing or moving the compression portion of the device of Figure 4, a unit which performs an additional encoding of the signals generated by a wavelet filter of known type and then processed in the compression portion of compression-decompression assembly of known type.

Figure 6 represents, more in detail, in the form of functional blocks, the said movement encoding unit with its inputs and its outputs, as well as the wavelet filter arranged upstream in the compression channel.

Figure 7 illustrates, as a variation, a sub-assembly, which can be added to the unit of Figure 6.

Figure 8 is a functional flow chart of the assembly of Figure 6 with possibly that of Figure 7.

Figures 9 to 13 illustrate schematically a unit for movement decoding as well in one of the assembly blocks of Figure 6 as a preliminary decoding unit in motion in the decompression device,

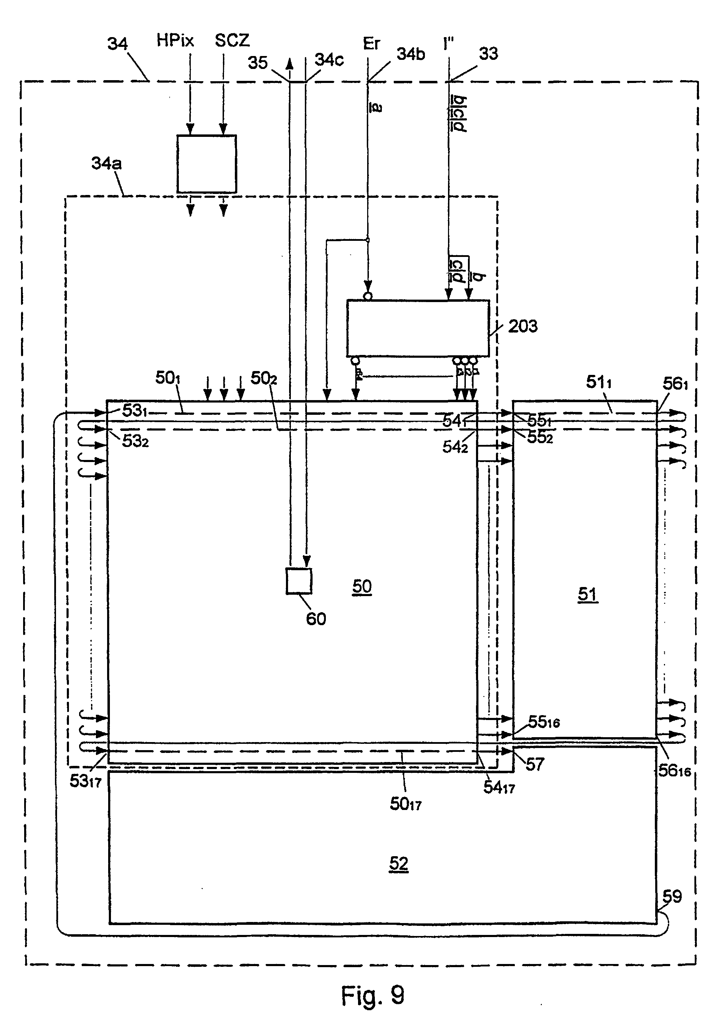

- Figure 9 illustrates the circulation of the digital signals, one frame after the other, in the «central processing unit» of the said decoding unit, with the movement processing matrix,

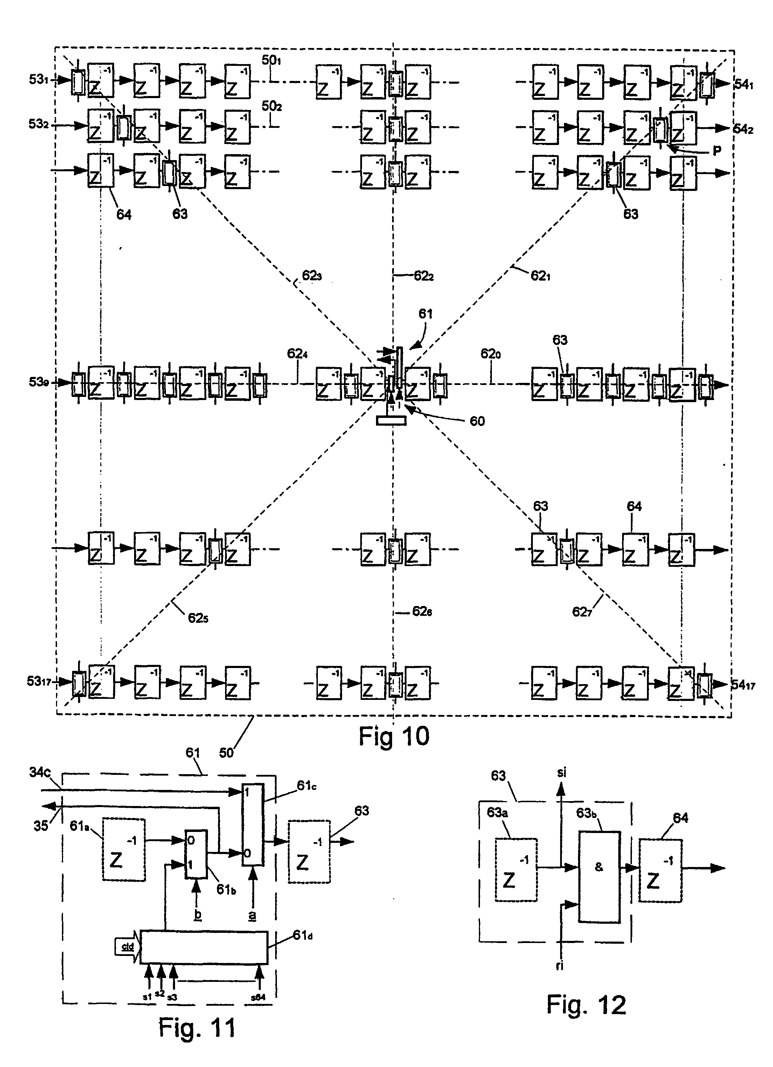

- Figure 10 illustrates the various gates provided in this central unit and the positions of these gates;
- Figures 11 and 12 represent the structure of two of these gates; and

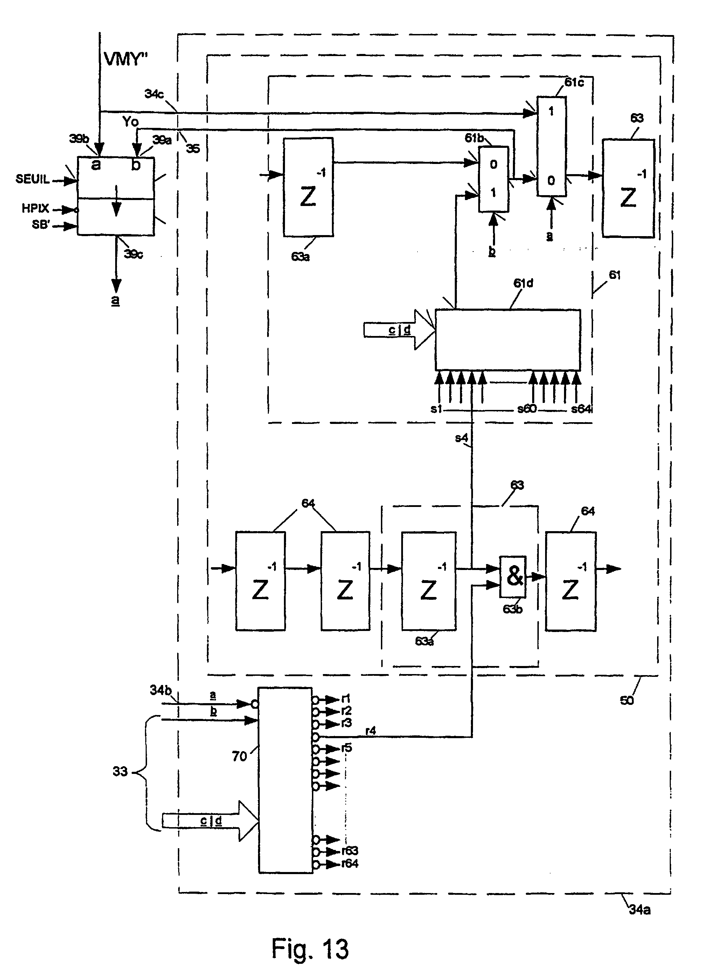

- Figure 13 illustrates the processing of a pixel.

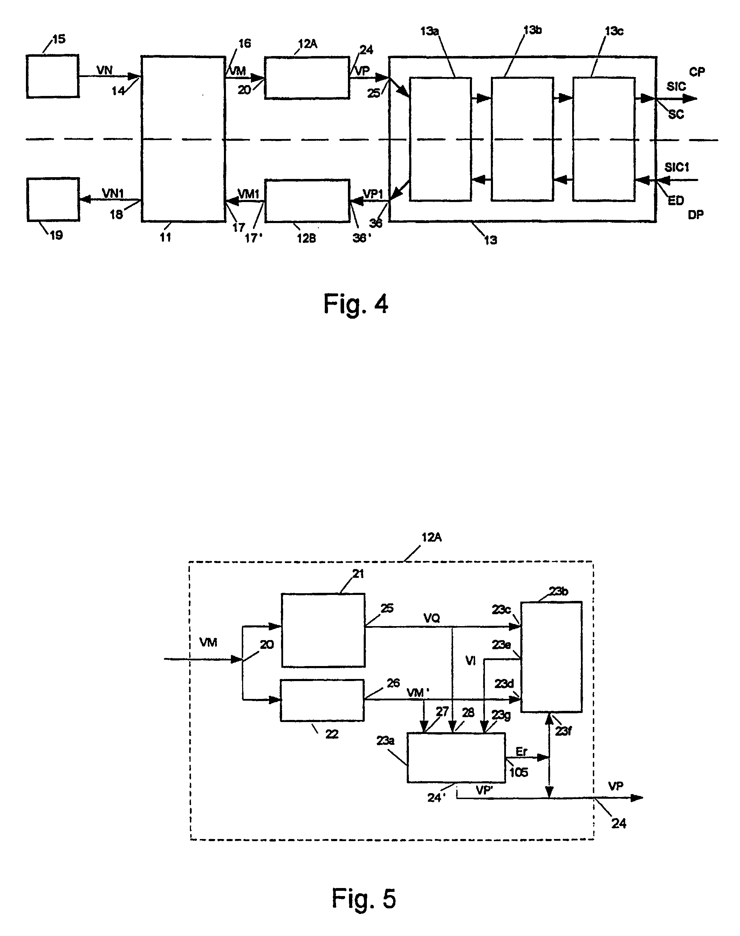

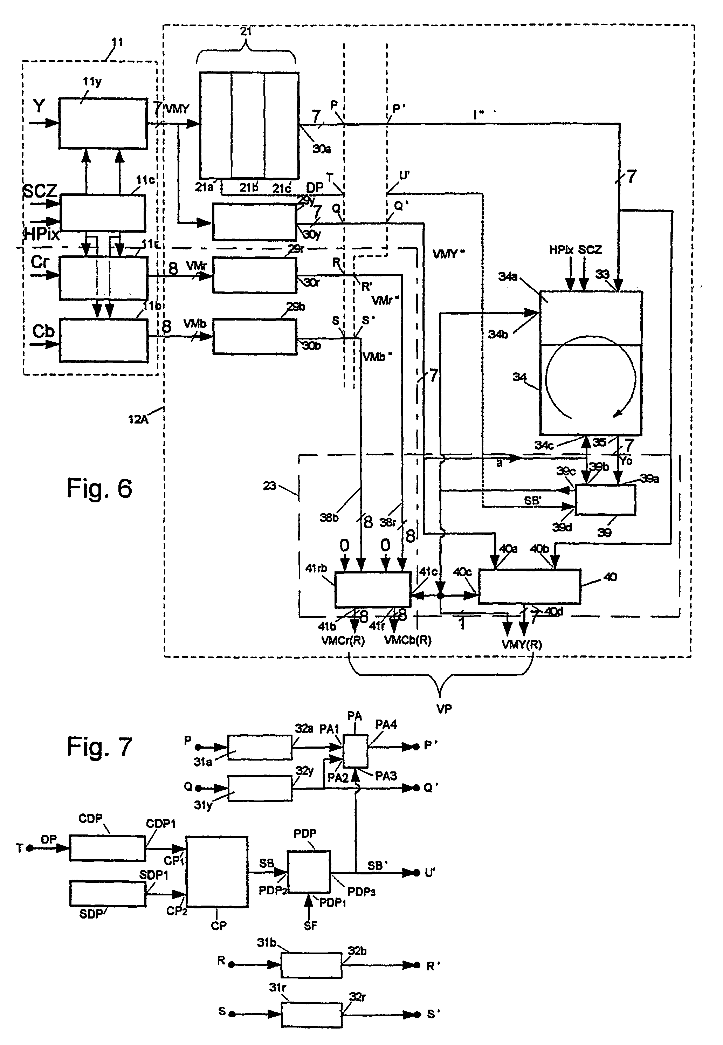

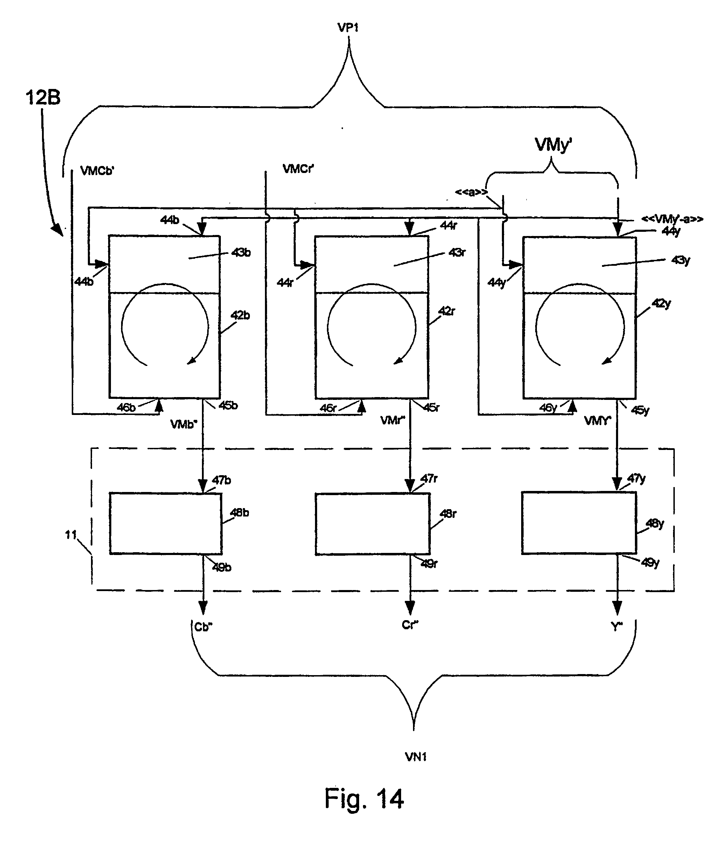

Figure 14, which is a counterpart of Figure 6, illustrates, also using functional blocks, the motion decoding unit, arranged in the decompression portion of the device of Figure 4, a unit receiving the signals from the decompression portion of the compression-decompression assembly of known type and generating signals into the decoding input of the wavelet filter.

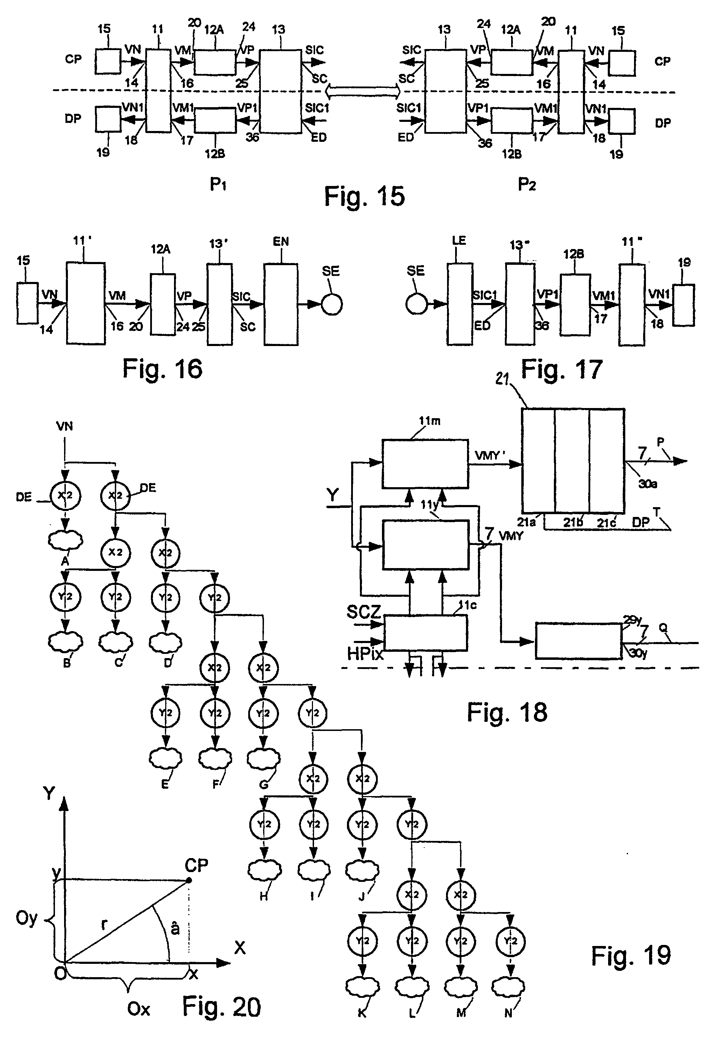

Figure 15 illustrates schematically the application of the invention to a picturephone system with a compression-decompression device at each set.

Figure 16 represents schematically a recording device on a recording medium, a recording device using a compression device according to the invention.

Figure 17 represents a reading device for a recording medium, which has been recorded by implementing the device of Figure 16, whereas this reading device comprises a decompression device according to the invention.

Figure 18 illustrates an embodiment variation of the units of the left upper corner of Figure 6.

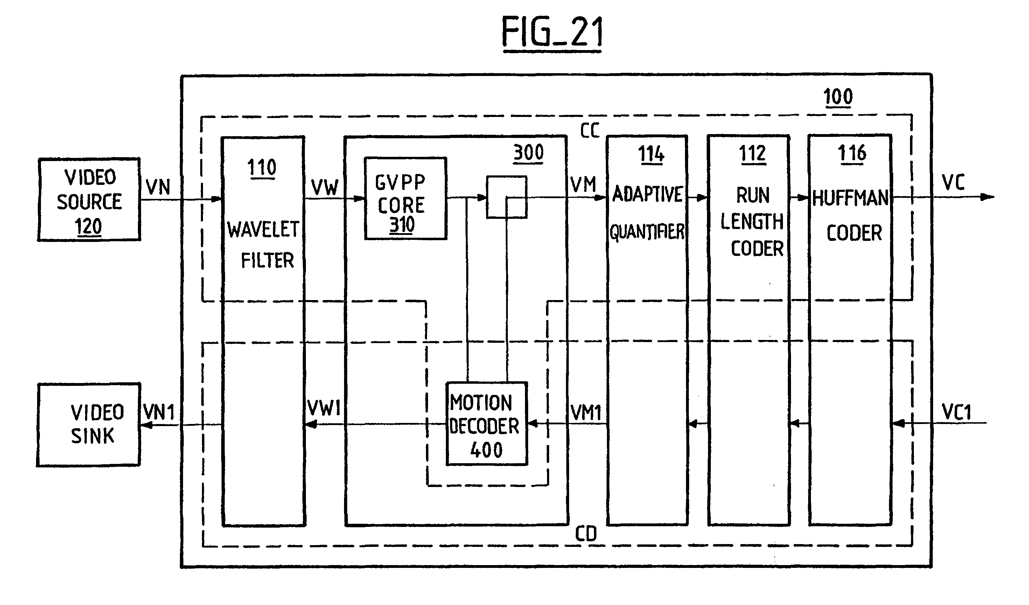

Figure 19 represents the structure of breakdown tree of the input signal tree according to the Mallat diagram, whereas this tree, corresponding to that of Figure 2, as deprived of its low-pass and high-pass filters, is used in the variation of Figure 18.

Figure 20 shows two ways to determine the colour of a pixel, i.e. in Cartesian co-ordinates and in polar co-ordinates.

Fig. 21 is a block diagram of a preferred embodiment of a compression-decompression device according to the invention.

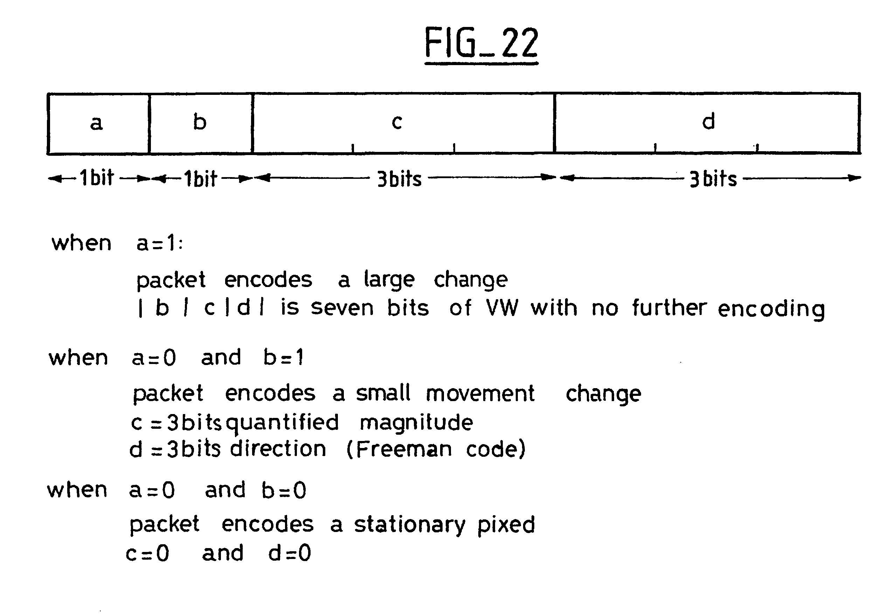

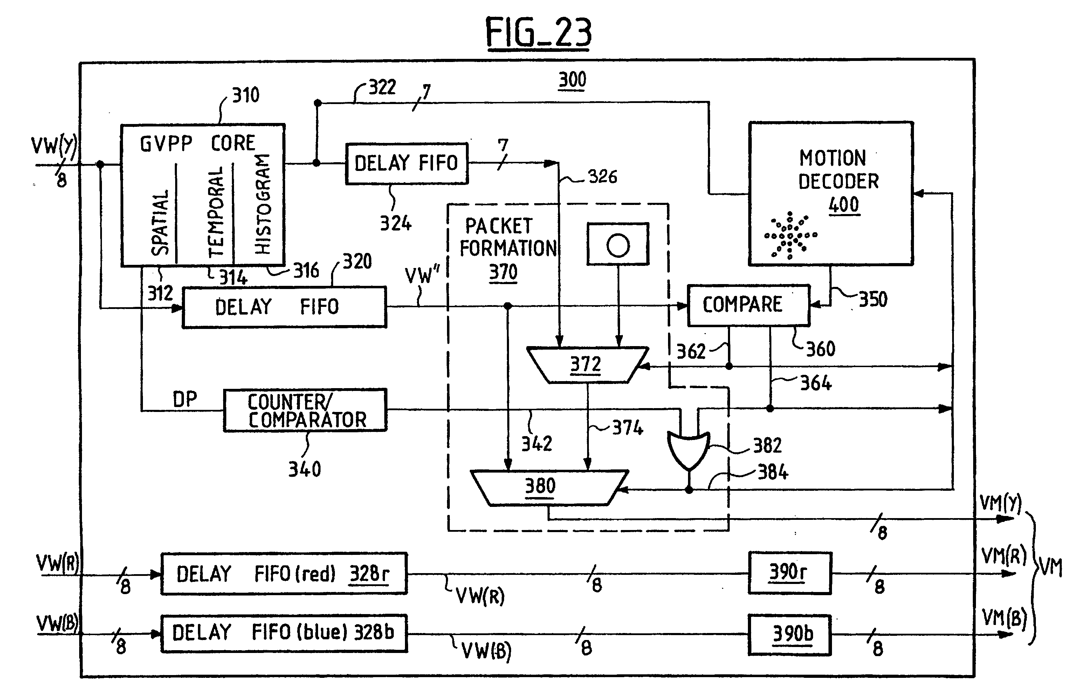

Fig. 22 is a data structure diagram describing the output of the unit of Fig. 23.

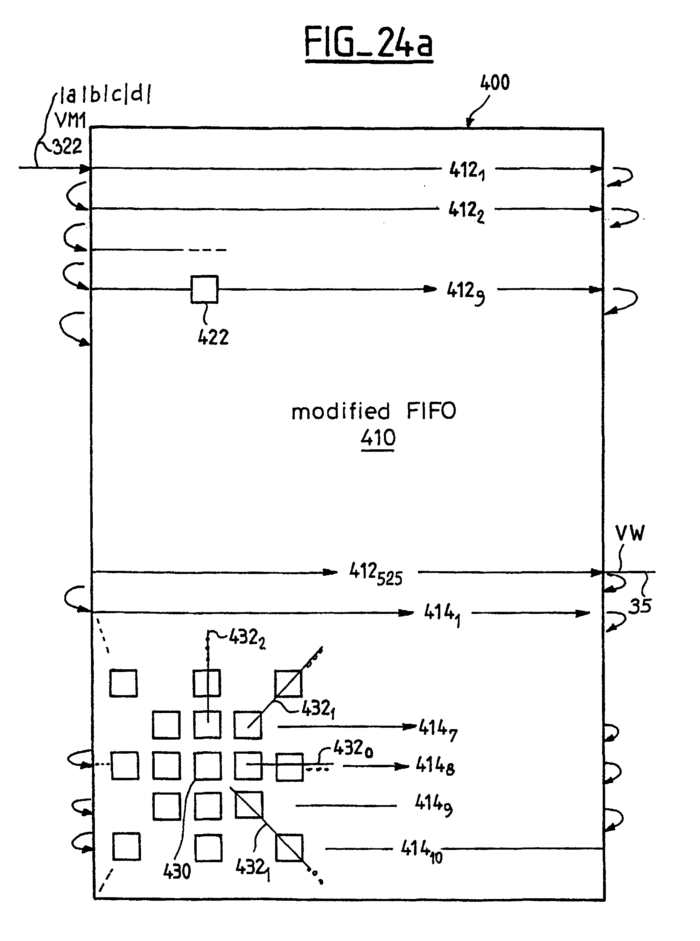

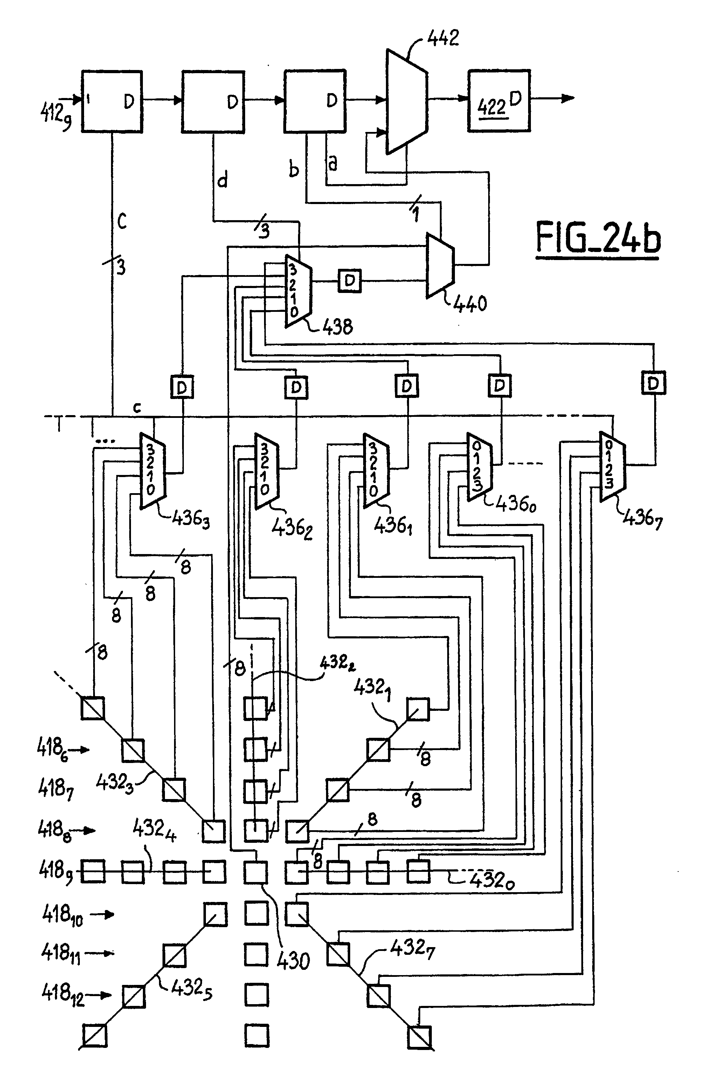

Figs. 23, 24a and 24b are block diagrams giving further detail of the compression-decompression device of Fig. 21.

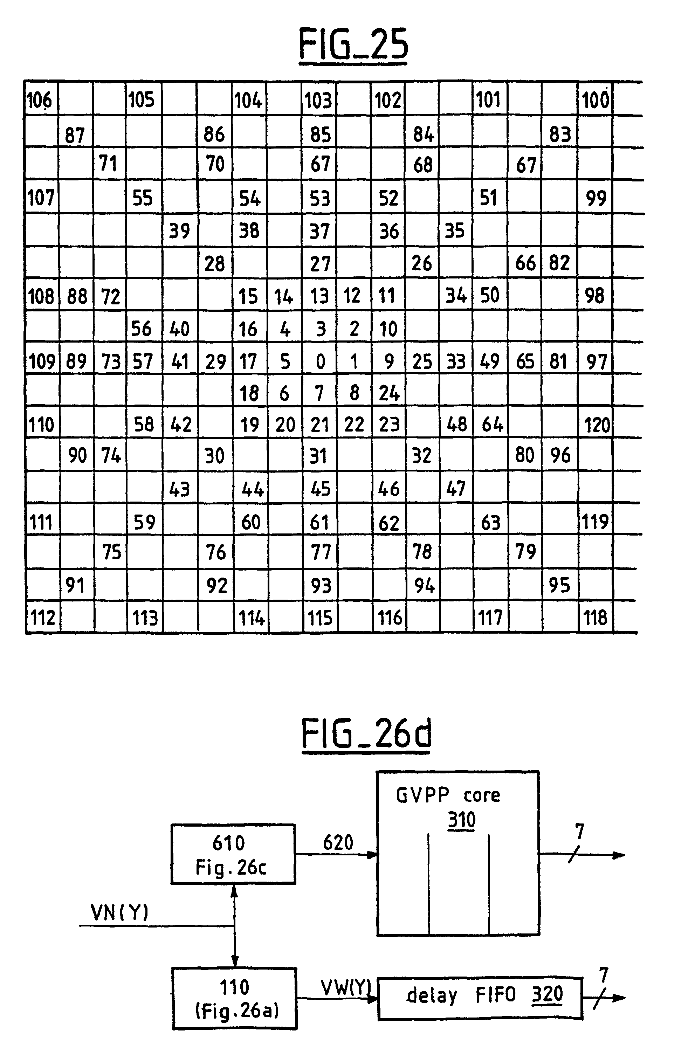

Fig. 25 shows an alternate encoding pattern for motion.

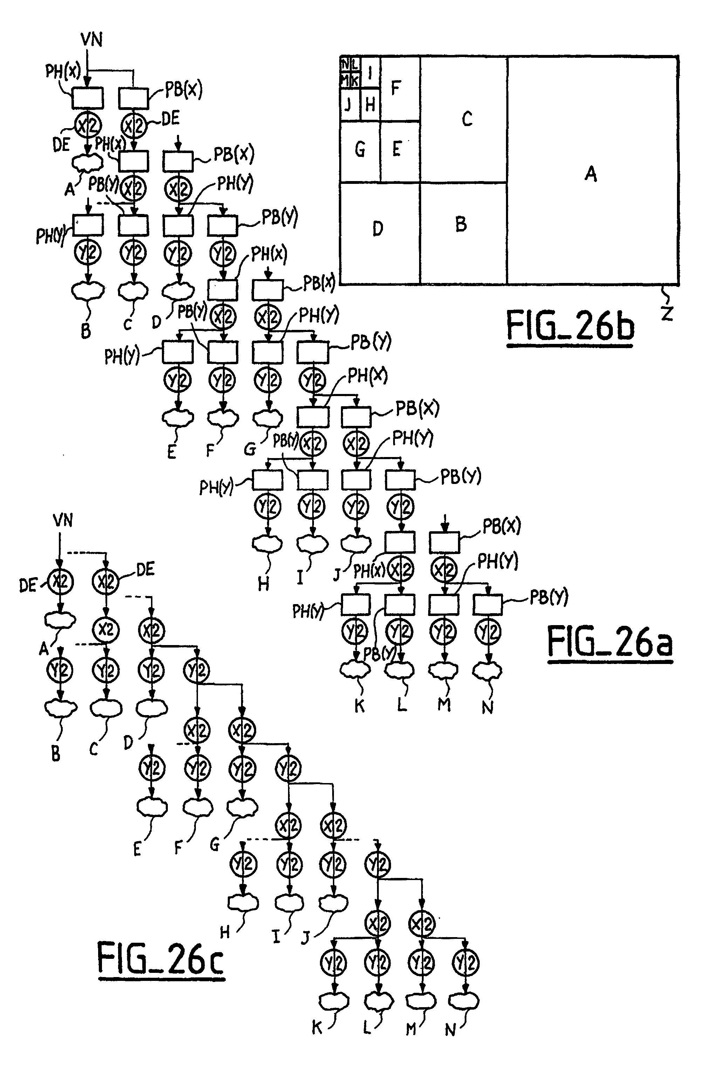

Figs. 26a and 26c show filters useful in the compression-decompression device of Fig. 21.

Fig. 26b is a representation of a Mallat diagram, a data organisation.

Fig. 26d is a block diagram of an alternative embodiment.

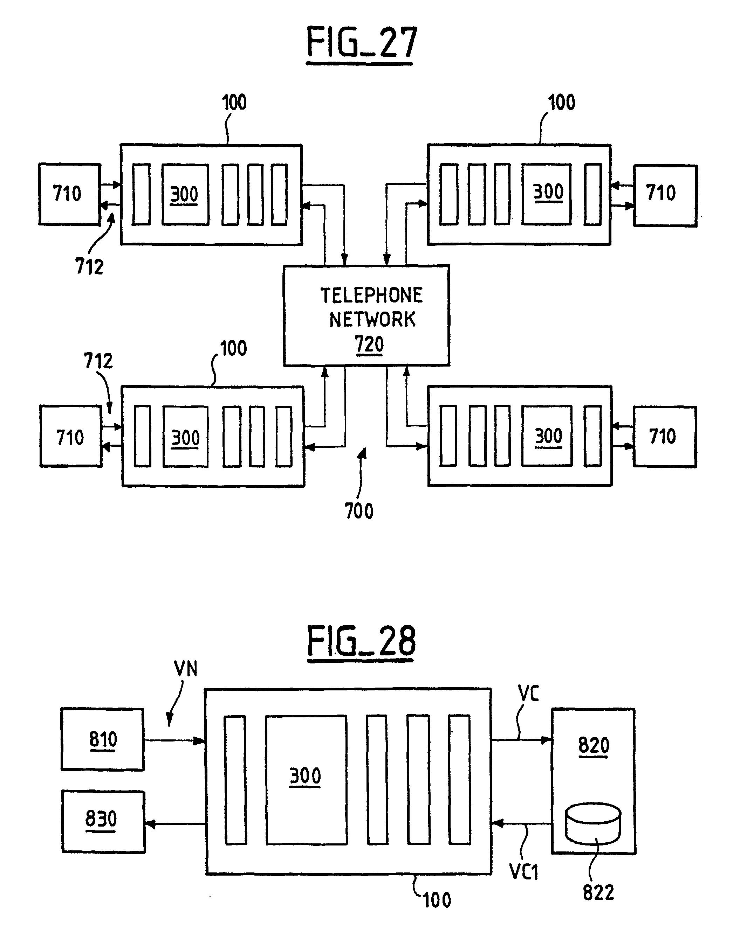

Fig. 27 is a block diagram showing use of compression and decompression device in a picturephone system.

Fig. 28, finally, is a block diagram showing recording and playback devices using a compression device.

In its preferred embodiment, a device according to the invention, implementing the process according to the invention, in a compression-decompression system; comprises, for the compression channel or portion *CP* and the decompression channel or portion *DP,* a certain number of functional units, represented by rectangular blocks on Figure 4, i.e:

- a wavelet filter 11, operating in normal encoding direction in its compression channel *CP* (upper portion of Figure 4) in order to encode the input digital video signal *VN* to be compressed and in reverse decoding direction in its decompression channel *DP* (lower portion of this figure) to generate the reconstructed output digital video signal *VN1*, whereas both these channels are separated by a horizontal dotted line on Figure 4;
- a unit for analysing and encoding the movement 12*A* operating exclusively in the compression channel *CP* in order to perform an additional encoding of the signals from the said wavelet filter;
- a unit for decoding and reconstructing the movement 12*B* operating exclusively in the decompression channel *DP* in order to perform preliminary decoding of the data before the said wavelet filter; and
- a compression-decompression assembly 13, consisting of an adaptive quantifier 13*a*, an encoder *RLC* 13*b* and a Huffman encoder 13*c* in series, whereas these three units 13*a*, 13*b*, 13*c* operate as well as in straightforward direction in the compression channel *CP* (upper portion of Figure 4) in order to perform a compression as in reverse direction in the decompression channel *DP* (lower portion of Figure 4) in order to perform a decompression.

In the compression channel *CP*, the functional units 11, 12*A*, 13*a*, 13*b*, 13*c* are connected functionally in this order in series, as illustrated by the arrows from left from right of the upper half of Figure 4, while in the decompression *DP* the functional units 13*c*, 13*b*, 13*a*, 12*B*, 11 are connected functionally in this order in series, as illustrated by the arrows from right to left in the lower half of this figure.

The compression-decompression assembly 13 finally generates on its compression output *SC* a compressed signal *SIC* containing the essential information of the input signal *VN*, while it receives on its decompression input *ED* an input signal *SIC1* to be decompressed into a signal *VN1*.

The units 11 and 13*a*, 13*b*, 13*c* (these former three making up the compression-decompression assembly 13) are of known type, as described, for instance, in both articles mentioned above of issue 69 of April 1997 of the «Electronique» magazine (pages 47 to 50 and 51 to 59 respectively) and in the «Product Catalogue» mentioned above of C-Cube Microsystems, conversely the units 12*A* and 12*B* are original (at least as regards its adaptation to the compression of data for the unit 12*A*).

We shall describe thereunder in detail the structure and the operation of these units 12*A* and 12*B* and we shall come back to the wavelet filter 11 described above with reference to Figures 2 and 3 of the state of the art, further to its role in the structure and the operation of the compression-decompression system assembly according to the invention, notably in relation to the units 12*A* and 12*B*.

In the compression channel *CP,* a wavelet filter 11, for instance such as described in the article mentioned previously of Patrick Butler in «Electronique» issue no 69 at pages 51 to 59, receives on its compression input 14, for example from the output of a video camera, a MOS imager or a *CCD* 15, the succession of digital video signals *VN* to be compressed, representing classically, a succession of frames, each comprising a succession of lines, each formed by a succession of pixels or picture-elements (such as generated by a digital video camera or other device for converting pictures into video-type digital signals, illustrated at 15).

We shall designate thereunder by «frames» the different types of video frames, regardless whether they belong to a digital video signal made of two interlaced frames per picture (and in such a case, we shall only take into account corresponding successive frames, even or odd-numbered), or to a digital video signal with a single frame per picture.

Thanks to low-pass and high-pass filters and to «decimators» according to Figure 2, this wavelet filter 11, in response to the input digital video signal *VN*, generates on its compression output 16, for each frame, an encoded signal *VM* broken down according to the Mallat diagram according to Figure 3 and representative of the information contained in the input digital video signal *VN* for this frame, as explained with reference to Figures 2 and 3, organised in a succession of frames, each comprising a succession of lines, each formed by succession of pixels.

In the decompression channel *DP*, the wavelet filter 11, reverse-operating, in a known fashion, receives, on its decompression input 17, a signal *VM1* encoded according to the Mallat diagram and generates, on its decompression output 18, a decoded signal *VN1* which forms the output signal of the device of Figure 4 in its decompression channel *DP*, i.e. a reconstructed digital video signal, capable of being visualised on the screen of a video monitor, of a television set or equivalent, or of being recorded by a recording device on an appropriate medium (for instance on the magnetic tape of a video tape using a conventional VCR, on a CD, a CD-ROM or a DVD). The rectangle 19 represents such a monitor, recorder or equivalent.

The wavelet filter 11, made in a known fashion, breaks down in its compression channel the input signal *VN* into wavelets, such a breakdown constitutes an improved alternative of the breakdown in the systems MPEG by a Fourier transform when processing the digital video signals, which are wide-band non-stationary signals.

It comprises compact low-pass and high-pass filters with finite pulse response, as illustrated on Figure 2, on which a tree or a cascade of such filters has been represented, i.e. *PH(X)* high-pass at *X, PB(X)* low-pass at *X, PH(Y)* high-pass at *Y* and *PB(Y)* low-pass at *Y* as well as of suppressers of half the outputs of such filters, whereas these suppressers are referred to as *X/2* for a division by 2, with suppression, at *X* at the outputs of the filters at *X,* or *Y/2* for a division by 2, with suppression, at *Y* at the outputs of the filters at *Y*, whereas the parameters *X* and *Y* are the orthogonal co-ordinates of both dimensions of the picture in the representation shot of the digital video signals.

The dividers *X/2* and *Y/2*, performing the suppression of half the information received and hence solely keeping half the samples received, are generally called «decimators», referred to as *DE*.

On Figure 2, illustrating the outline of the structure of the wavelet filter 11, the input *VN* consists of three components *Y, Cb* and *Cr,* i.e. luminance, colour blue (less luminance) and colour red (less luminance), respectively, of the digital video signal with successive frames of the same nature, whereas the outputs *A, B, C, D, E, F, G, H, I, J, K, L, M, N* correspond to the blocks of same denomination of the Mallat diagram of Figure 3, on which these blocks are picture portions of gradually decreasing size, each representing the complete picture *Z* of the digital video signal *VN*, but with different definitions, decreasing from *A* to *N.*

The components mentioned above *Y, Cb* and *Cr* are processed in parallel successively, one frame after the other, by the tree of filters: it results, for each of these three components, 14 sub-pictures for the 14 blocks or zones *A, B, ..., M, N,* i.e. in total 14 x 3 = 42 sub-pictures, instead of the complete picture *Z*. In other words, the complete picture *Z,* with its three components *Y, Cb, Cr*, is broken down into 42 sub-pictures which result from the association of the three components *Y, Cb, Cr* of each of the 14 blocks. The original picture, reduced after successive filterings and decimations, is located in each block, in particular in the block *N*, with gradually decreasing definitions from *A* to *N*.

We shall notice that the wavelet filter 11, illustrated on Figure 2, only performs an encoding, by breaking down each of the 3 components mentioned above into 14 sub-pictures *A, B, ..., M, N* according to the Mallat diagram of Figure 3, without any compression of the total number of bits of the digital video signals implemented, whereas the number of pixels used to represent the 14 zones or blocks *A, B, ..., M, N* is identical to that comprised in the original picture *Z* and hence the input digital video signal *VN,* for each component *Y, .., Cb* and *Cr*.

If no information compression has taken place yet, the information of the complete picture *Z* has been transferred to the high variation zones, i.e. the contours, transformed into 14 sub-pictures *A* to *N* for each component representing a multiresolution; thus, it is possible to process in a privileged way, the contours of the forms present in the picture (such as a person, a face, an animal, an object), the plain zones of the picture, inside the contours, which are represented by zero values («zeros» in the output digital signal *VM* (Figure 4) in binary code, composed of a succession of «zeros» and «ones»). It is the digital representation, corresponding to the Mallat diagram (instead of the digital representation of the complete picture *Z* by the input digital video signal *VN* of the device of Figures 1 and 4, and hence of the wavelet filter 11) making up the output signal *VM* of the wavelet filter 11 and hence the input of the unit 12*A*.

The encoded output by the wavelet filter 11, comprising 42 blocks in total, i.e. 14 blocks for each of the 3 components *Y, Cb, Cr,* i.e. the signal *VM* (Figure 4) is applied to the input 20 of a movement analysis and encoding unit 12*A* which comprises essentially (Figure 5) four functional assemblies, i.e. a movement calculation assembly 21, a delay unit assembly 22, a pixel validation assembly 23*a* and a reference assembly 23*b* collecting the results of the various processing operations of the flow of digital video signals, whereas the output 24 of the unit 12A is connected to the compression input 25 of the compression-decompression assembly 13 in order to transmit to the said assembly the output signal *VP* of the movement analysis and compression unit 12*A*.

The assemblies 21 and 22 receive in parallel, on their common input 20, the signal *VM* generated by the wavelet filter 11 in order to be processed in the movement analysis and encoding unit 12*A* (or 21-22-23*a*-23*b*), the Mallat type picture reconstruction assembly 23*b* receives the signals *VQ* at 23*c* and *VM'* at 23*d* and transmits a signal *VI* at 23*e* in relation to an error signal *Er*, applied at 23*f* from the assembly 23*a* and integrated at the output to the signal *VP,* and the assembly 23*a* receives the outputs from the assemblies 21, 22, 23*b*, i.e. respectively the signals *VQ, VM'* and *VI*, respectively on its inputs 28, 27 and 23*g*, and generates the signal VP' which makes up the output, available at 24', of the assembly 23*a* and the normal output of the said unit 12*A* and which will be compressed in the assembly 13 of Figure 4; in fact, the signal *VP'* consists (as explained below) either of the signal *VQ* or of the signal *VM',* in relation to the signal *VI* received at 23*g* from the unit 23*b*, whereas this signal *VI* distinguishes whether the reconstruction of the encoded signal *VQ* resulting from the process in the unit 21 complies with the signal *VQ*, for the frame just preceding, processed in the unit 23*b* in order to reconstruct the signal *VM* as *VI*.

More precisely, the unit 12*A* of Figure 5 calculates in its assembly 21 the relative movement or displacement in the encoded picture with 14 sub-pictures from *A* to *N,* represented by the signal *VM*, while generating on its output 25 a signal *VQ* representative as well of the oriented direction of the displacement as of the speed or amplitude of the said displacement, pixel by pixel, in the said picture, while the assembly 22 applies a series of delays to the signal *VM* in order to obtain on its output 26 essentially a signal *VM'* composed of the signal *VM* delayed by a duration equal to the processing time in the assembly 21 (whereby *VM'* is thus synchronised to *VQ*) while in a synchronous fashion, the assembly 23*b* generates the signal *VI* depending on a control or error *Er* input signal, whereas the signals *VQ, VM'* and *VI* applied to the unit 23*a* on its three inputs 27, 28 and 23*g* are therefore synchronous, i.e. each pixel in the original signal *VN* delayed in the unit 22 and represented in the signal *VM'* arrives at the input 27 of the assembly 23*a* exactly at the same time as the same pixel of this signal *VN*, processed in the assembly 21 and represented in the signal *VQ,* arrives at the input 28 of this assembly 23 and as the signal *VI* arrives at the input 23*g*; this signal *VI* is representative of the picture memorised since the previous processes aiming at reconstructing the displacement of the moving pixels, in the unit 23*b*. The unit 23*a* finally generates at 24 a signal *VP'* consisting either of the signal *VQ* representative of the displacement direction and speed in case of a limited displacement (for example during a «sequence» or a «scene», keeping the same shot or the same sequence, of the «film» represented by the succession of frames in the signal *VN)* or of the signal *VM'*, which is in fact the signal *VM* delayed without any modification, in case of a long displacement (for instance when changing shots or at the beginning of a sequence in the said «film»), whereas the transition of the transmission, by the unit 23*a*, from *VQ* to *VM'* is controlled by the error signal *Er* in relation to the compliance or non-compliance of the synchronous signals *VM'* and *VI*.

Consequently, at the beginning of each sequence, the output 24 of the movement analysis and encoding unit 12*A* generates, as a signal *VP*, the signal *VM* arriving at 20 from the output of the wavelet filter 15, but delayed by the processing time of *VM* in 21, i.e. the signal *VM'*, while at a later stage, throughout the said sequence, failing any sudden shot changes, the output 24 generates, as a signal *VP,* the quantified signal *VQ* which represents for each pixel, the (limited) modification of the said pixel, further to a (limited) displacement, whereby the said modification is accompanied by the quantification of the direction and speed or amplitude of the movement (in case of moving character(s) or object (s), a travelling shot, a zooming shot, for instance).

In fact, the signal *VQ* consists (as explained thereunder), for each portion of pixel, of a succession of identifiers *Ix, y, t+r* of Cartesian co-ordinates *x* and *y* and at the instant *t+r*, where *t* indicates the arrival instant of the pixel *VM* at 20 and *r* the delay caused by its processing in the movement calculation assembly 21, whereas the signal *VM'* (which corresponds to the signal *VM* from the wavelet filter 11, delayed by *r* in the assembly 22) consists of a succession of signals of pixels *Px, y, t+r* synchronous to the identifiers *Ix, y, t+r*.

Figure 6 illustrates, more in detail, that the functional Figure 5, the movement analysis and encoding unit 12*A* of Figure 4 and enables to pinpoint the signals / with identifiers and the signals *P* with pixels.

Figure 6 illustrates first of all the wavelet filter 11 with its portion 11*y*, which processes the luminance component *Y*, its portions 11*r* and 11*b*, which process respectively the colour red Cr and colour blue Cb components, whereas its video sequencer 11*c* carries out, thanks to the signals *SCZ* and *HPix*, respectively sequencing signals (part, conventionally, of the video signal) and clock signals (from a clock, not represented, generating clock pulses at the same rhythm as the pixels), the processing synchronism of the three components *Y*, *Cr* and *Cb* and the reconstruction of the picture format of the flow of digital video signals (frame, line, pixel).

It will be noted that we shall only describe the process of the picture signal, and more particularly that of its component *Y*, within the framework of the invention, thereby laying the audio signal aside.

The composite signal *VM* of Figures 4 and 5 consists in fact of its three components *VMY, VMr* and *VM*b, respectively for luminance, red chrominance and blue chrominance, generated by the portions 11*y*, 11*r* and 11*b*, respectively of the wavelet filter 11 (Figure 6).

Only the component *VMY* arrives at the movement analysis and calculation assembly 21, whereas the said assembly is essentially constituted as described in the French and international patent applications mentioned previously and comprising essentially a time-related processing portion 21*a*, a space-related processing portion 21*b* (whereby both these portions 21*a* and 21*b* are indeed as described in said both patent applications) and a space-related process analysis portion 21*c* which determines in relation to the said process, a succession of identifiers *Ix*, *y, t+r* which correspond to a succession of pixels *Px, y, t+r*, where *r* is the process time in the unit 21, i.e. the delay of a pixel *Px, y, t+r* coming from this output in relation to the same pixel (of co-ordinates *x, y*) entering this unit, i.e. *Px, y, t*.

As exposed in both patent applications mentioned above, the first time-related process portion 21*a* of the movement analysis and encoding assembly 21 determines, for each pixel, two parameters *DP* and *CO*.

- whereas the first *DP* is a binary signal, both possible values of which represent respectively a time-related significant variation and a significant non-variation of the value of the pixel *Px, y* between the processed frame and the preceding frame of the video signal *VN* entering the wavelet filter 11 (Figure 4) and therefore the component *VMY*, and
- the second CO is a digital signal with a limited number of bits representative of the level of this variation (whereas the value of this signal is zero, in the absence of variation).

In the second space-related process portion 21*b* of the unit 21, the signals *DP* and *CO* generated by the first time-related process portion 21*a* of this unit undergo a process consisting in distributing on a rota basis on a matrix, whose size is reduced (in number of lines and of columns) with respect to that of a frame, both these signals *DP* and *CO* for a same frame passing through the matrix and in deriving, from this matrix distribution, parameters of the relative movement.

The third analysis portion of the space movement 21*c* of the unit 21 analyses the movement parameters generated by the unit 21*b* in order to deduct the existence of a relative movement and, in case of a movement, the size and the oriented direction of this movement, while implementing the means of the patent applications mentioned above, and generates an identifier *Ix, y, t+r* which specifies, for each pixel Px, y (of co-ordinates x, y), if there is a limited movement or not and, in case of a limited movement, the amplitude and the oriented direction of the said movement, and that at the instant *t+r*, where *t* is the arrival instant of the pixel in the input signal *VM*Y of the unit 21 and *r* the processing time in the said unit; the identifier also comprises an identification of the existence of a large global movement or not (as explained thereafter).

As indicated in the patent applications mentioned above, the assembly 21, constructed according to these patent applications, enables to express the amplitude as well as the oriented direction of the displacement by a digital signal comprising a reduced number of bits, whereas the direction is located according to the Freeman code along 8 directions numbered from 0 to 7, each separated from the previous one by 45° and hence representable by a 3 bit number ($2^3$ = 8, i.e. the number of directions).

Within the framework of the preferred embodiment of this patent application, it is also possible, as a preferred example, to represent the amplitude of the movement or displacement using 8 quantification steps, hence also using 3 bits. The multiresolution caused by the breakdown into windows in the wavelet filter 11 produces a movement scale larger than 3 bits; indeed, the decimation by 2 increase accordingly the speed for a same displacement value.

In this case, the identifier *Ix, y, t+r* for a pixel *Px, y* comprises a 3 bit group _c_ of quantified amplitude and a 3 bit group _d_ of quantified oriented direction according to the Freeman code, these 6 bits are preceded by one bit, i.e. _b_, which indicates either that there is a significant movement, attached to the pixel *Px, y* (hence that the quantified amplitude is represented by a 3 bit group _c_ and the oriented direction quantified according to the Freeman code by a 3 bit group _d_, or that there is no significant movement attached to this pixel, whereas the groups _c_ and _d_ each comprise three bits equal to zero, the bit _b_ exhibiting, for example, the values «1» and «0» respectively in the case of movement and in the case of absence of movement.

A preliminary bit, i.e. $\underline{a}$, inserted at a late stage in the system, indicates

- either the beginning of a framing or scene change (or even the beginning of the first scene) or the continuation of a scene with notable global displacements, when, in both these cases, the quantity of modified pixels is quite large, i.e. exceeds a threshold corresponding for example to the maximum value of *DP,* for a notable percentage (for example 30% or 40%) of pixels in the frame,
- or conversely the continuation of a scene with limited or zero variation of the position of the pixels with respect to the pixels memorised and displaced from the assembly 23*b* and generated in a synchronous fashion as a signal *VI,* i.e. the modification amplitude of the pixels does not exceed the said threshold,

whereas the first possibility is represented by «1» and the second by «0», for instance.

In case when this preliminary bit $\underline{a}$ is indeed equal to 1, i.e. when the movement information is not complying, the following groups of bits, $\underline{b}$, $c$ and $\underline{d}$ are replaced by the pixel *Px, y, t+r.*

Accordingly, an identifier *Ix, y, t+r* comprises, in order to represent each pixel, a codification of one or four groups of bits according, respectively, to whether the first binary group $\underline{a}$ is equal to «1» and indicates a beginning of scene or notable global displacements and is followed by the pixel *Px, y, t+r* or to whether this first group $\underline{a}$ is equal to «0» and indicates the continuation of a scene (without notable displacements in the said scene), whereas the second binary group $\underline{b}$ specifies whether there has been («1») a significant displacement or movement or not («0»), the third $\underline{c}$ the amplitude of the displacement and the fourth $\underline{d}$ the oriented direction of the displacement, when $\underline{b}$ = 1; the identifier I is therefore of the type a | b | c | d |, for instance 0 | 1 | 001 | 101 |, i.e. comprises 8 bits. It will be noted that when $\underline{b}$ = 1, $\underline{c}$ may be equal to 0 |0 | 0 for the first quantification level of the displacement amplitude and $\underline{d}$ be equal to 0 | 0 | 0 for the first direction (along the oriented axis OX) of the Freeman code.

The progression of the number of zeros for this layout should be noted; indeed, only the moving pixels possess an identifier with $\underline{b}$, $\underline{c}$ and $\underline{d}$ not nil (with both exceptions mentioned above: $\underline{c}$ = 0 for the first amplitude quantification degree, quantified in 8 steps from 000 to 111, and $\underline{d}$ = 0 for the oriented direction 000 according to Freeman, also quantified in 8 steps, while compliance between the calculated movement and the validated movement (i.e. in case when the value *VI* memorised previously matches the current delayed value *VM'*) produces a zero bit $\underline{b}$, and hence groups $\underline{c}$ and $\underline{d}$ solely composed of consecutive «zeros» in the identifier I with respect to the number of «zeros» in the output of the wavelet filter 11, hence further compression in the compression-decompression assembly 13 operating in compression downstream of the unit 12A, since this assembly compresses the more so as there is a high proportion of consecutive zeros at the input.

A higher compression results therefore from the presence of the unit 12'A in the device according to the invention, in the compression-decompression 13 operating in compression, of all the pixels for which $\underline{b}$, $\underline{c}$ and $\underline{d}$ consist exclusively of «zeros» (hence of a notable number of consecutive «zeros»); i.e. the immobile pixels between two successive frames; however, the said immobile pixels are largely predominant, in principle, in a frame (an element from which the cartoonists, for instance, may benefit).

It has been specified above that processing the luminance signal *VMY* in the movement calculation assembly 21 requires a certain duration *r*.

This is the reason why the unit 12*A* of Figure 6 comprises, in «parallel» to this assembly 21, three delay units 29*y*, 29*r* and 29*b* each applying a delay equal to *r,* respectively to the luminance *VMY*, the colour red *VMr* and the colour blue *VMb* signals arriving at the unit 12*A*. We therefore obtain at the outputs 30a (of 21), 30*y* (of 29*y*), 30*r* (of 29*r*) and 30*b* (of 29*b*) synchronous signals, whereas the signals available at 30*y*, 30*r* and 30*b* consist of the three components *VMY*, *VMr* and *VMb* of the signal *VM* arriving at the unit 12A of Figure 6, but delayed by *r,* while the signal available at the output 30*a* of 21 is the signal *Ix, y, t+*r, or *b* |*c*| *d*, i.e. the representation of the movement in the movement-encoded and *r*-delayed luminance component *Y* in the displacement calculation and encoding unit 21.

In the preferred embodiment, between the points *P, Q, R, S* on the one hand and *P', Q', R', S'* on the other, of Figure 6, the assembly of Figure 7 is provided, on which these points can be seen, as well as the input *T* which receives the signals *DP* determined by the portion 21*a* of the movement analysis and encoding unit 21.

In order to locate the large amplitude displacements in a notable part of the scene represented by the processed digital video signals *VN*, notably in the luminance component *Y* of the said signals, and thus to determine the value of $\underline{a}$ (0 or 1), the signals *DP*, for the successive pixels of a frame arriving at *T* of the portion 21*a* of 21 and greater than the quantification ceiling (for example 7, i.e. 111 in binary), are counted in a counting unit *CDP* and the number of these signals *DP* exceeding the ceiling in a frame, i.e. the percentage of notably moving pixels in the total number of pixels per frame, is compared, in a comparator *CP,* with a threshold memorised in the programmable memory *SDP*; for example the threshold can be equal to 30% or 40% of the number of pixels of a frame.

To this end, the comparator *CP* comprises two inputs, i.e. *CP*1 connected to the output *CDP1* of *CDP*, generating the number of *DP* exceeding the ceiling and *CDP2* connected to the output *SDP1* of *SDP,* generating the (programmable) threshold value in the form of a number.

The binary signal *SB* representative of their threshold being exceeded or not, generated by the comparator *CP,* is memorised at each end of frame in a register *PDP* actuated by an end-of-frame signal *SF* derived from the signal *SCZ* entering the unit 11*c* of the wavelet filter 11.

In order to take into account the fact that the signal *SB* is only transmitted at the end of a complete frame, the four synchronous signals generated by 30*a*, 30*y*, 30*b* and 30*r*, arriving at *P*, *Q, R* and *S* respectively, are each delayed by a frame, respectively in the delay units 31*a*, 31*y*, 31*b* and 31*r* which impose, each, a delay *r'* of a duration equal to that of a frame.

Accordingly, the signals available at the outputs 32*a*, 32*y*, 32*b* and 32*r* of the delay units 31*a*, 31*y*, 31*b* and 31*r* respectively are synchronous to the signal *SB'* generated by the output *PDP3* of the register *PDP* when the said register receives on its input *PDP1* an end-of-frame signal *SF* which authorises the passage of *SB* arriving at the input *PDP2* of this register.

The assembly of Figure 7 may finally comprise a «switching» gate PA whose inputs *PA1* and *PA2* are connected respectively to the outputs 32*a* of 31*a* and 32*y* of 31*y* and whose output *PA4* generates at *P'* either the signal arriving at *PA2* from 31*y*, i.e. the signal *VMY* delayed by *r*+*r'* (i.e. *r* in 29*y* (Figure 6) and *r'* in 31*y*) or the signal arriving at *PA1* from 31*a*, i.e. the identifier *Ixyt*+*r*+*r'* (i.e. the identifier *Ixyt*+*r* coming out of 21*c* (Figure 6) and delayed by *r'* in the delay unit (31*a*), according to whether the signal SB' arriving at the input *PA3* controlling the gate *PA* represents an overrun or not of the threshold programmed in *SDP* by the percentage, in a frame, of the pixels for which their *DP* exceeds the quantification threshold.

The description of Figure 6 is now used again at the points *P'*, *Q'*, *R'*, *S'* in both layout cases thereunder:

- 1st case which corresponds to the preferred variation: the layout of Figure 7 is indeed provided between the points *P*, *Q*, *R*, *S* and *P', Q', R', S'*; then a signal is arranged at *P'*, either of the type *I''*, i.e. of the identifier type *Ix, y, t*+*r*, resulting from processing the signal *VMY* in the assembly 21, which takes up a time *r,* which is moreover delayed by *r'* in 31*a*, i.e. delayed with respect to the signal *VMY*, by *r*+*r'*, or of the type *P''*, i.e. of the picture mosaic type generated by the wavelet filter 11, also delayed by *r*+*r'*, successively in 29*y* (Figure 6) and in 31*y* (Figure 7) according to whether the percentage of pixels per frame for which their *DP* exceeding the quantification threshold is smaller or greater than the said programmed threshold in *SDP;* moreover, in this first case, the control signal *SB*' is applied to the input 39*d* of a threshold comparator 39, as mentioned thereafter;
- 2nd case: the layout of Figure 7 is not provided between *P, Q, R, S* and *P', Q', R', S'* which are connected respectively directly or through a layout according to Figure 7 without the gate *PA*; then the signal arriving at *P* is provided at *P',* i.e. from the identifier *Ix, y, t*+*r*.

Besides, in the first case, the signals *VMY*, *VMr*, *VMb* delayed by *r* in 29*y*, 29*r*, 29*b* respectively are provided at *Q'*, *R'*, *S'* respectively (Figure 6), then delayed by *r'* in 31y, 31*r*, 31*b* respectively (Figures 6 and 7), i.e. delayed by *r*+*r'* in total, while in the second case, the signals available at *Q, R, S*, i.e. the signals *VMY*, *VMr*, *VMb* delayed only by *r* in 29*y*, 29*r*, *29b* respectively are provided at *Q', R', S'* (Figure 6)

It will be noted that, except for the delay *r'* of the signals processed in the layout of Figure 7 which imposes this delay, the signals at the points *Q'*, *R', S'* are the same as those at the points *Q*, *R*, *S* respectively, i.e. equal to *VMY*, *VMr*, *VMb* respectively, delayed by *r,* and therefore the same ones (if we do not take the delays into account), if the additional layout of Figure 7 is provided or not in the layout of Figure 6. Conversely, in the presence of the layout of Figure 7, the signal at the point *P'* can be

- either identical, within the delay *r',* to the signal at the point *P* if the threshold provided has not been reached by the percentage of pixels whose displacement exceeds in amplitude the ceiling mentioned above (for instance the 7th level of quantification), and in this case, the signals at the points *P', Q', R', S'* are the same as those at the points *P, Q, R, S* respectively, but delayed by *r'*, which does not change their nature,
- or identical, within the delay *r',* to the signal at the point *Q*, i.e. equal to *VMY* delayed by *r,* if the said threshold has been exceeded.

The signals available at the points *P'*, *Q'*, *R'*, *S'* *are* designated in both cases by *I''*, *VMY''*, *VMr''*, *VMb''* respectively, whereas the addition of the layout of Figure 7 only affects (if we do not take into account the delay *r'* which does not modify the nature of the signals) the signal *I''* and exclusively in case when the threshold provided for the said percentage is exceeded.

The signal *I''*, available at the point *P'* consists normally of the signal *VP* at the output 30*a* of the said unit 21. The identifier *Ix*, *y*, *t*+*r* generated by the output 30*a* of the unit 21, possibly delayed by *r'* in 31*a* (1st case with Figure 7), is applied at the input 33 of a unit 34 capable of reconstructing the luminance component *Y* of the input signal *VM*, i.e. *VMY*, of the assembly 21, i.e. of the luminance component of the output of the wavelet filter 11, with of course a delay equal to the delay caused by the calculation in the assembly 21, i.e. *r* (possibly increased by the delay *r'* equal to the duration of a frame in the delayed unit 31*a* of Figure 7), whereas this unit 34 generates at an output 35 the luminance component *Yo* of a *VMY* type reconstructed signal (with the delay above mentioned).

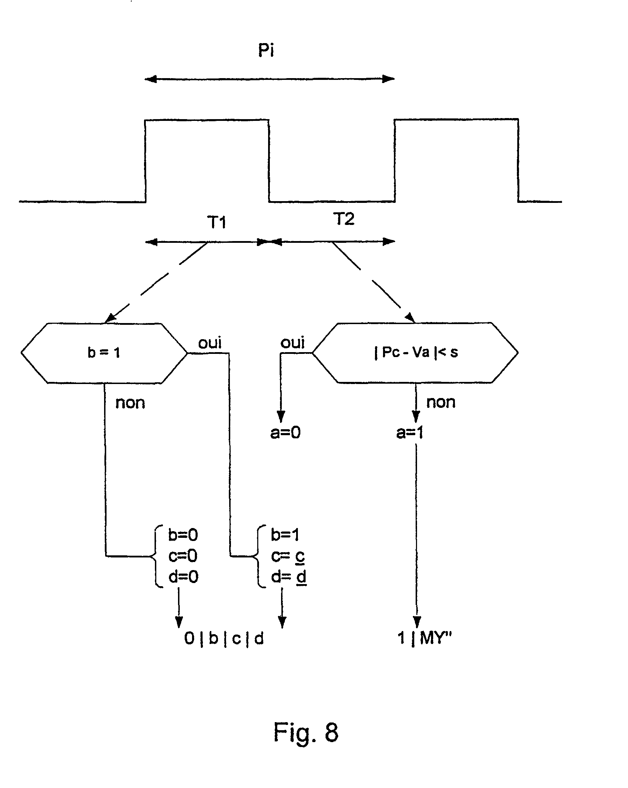

The reconstruction unit of the picture 34 is constituted and operates as exposed thereunder with reference to Figures 8 to 13, illustrating the decoding of the digital signal having passed through an encoding in the unit 21 and generated at the output 30*a* of the unit 21, whereas the digital signal of the said output 30*a* having the «format», i.e. a structure of the type a | b | c | d, unless in case when the threshold has been exceeded when it has the *Px, y, t* type.

For the signals *Yo, VMY", VMr" and VMb"* to be synchronous, the decompression in the unit 34 is performed on the frame of *VMY*, just preceding that arriving at the points *Q', R'* and *S'*.

To the assembly 34 is associated a threshold comparator 39 which receives, on the one hand at 39a, from the output 35 of this assembly 34, the luminance component *Yo* of the reconstructed signal according to the Mallat diagram and, on the other at 39*b*, in a synchronous fashion, the original Mallat type picture mosaic component *VMY* coming out of the wavelet filter 11 delayed in the delay unit 29*y* (and possibly the unit 31*y*), i.e. *VM"*. An auxiliary input 39*d* is provided to receive *SB'* in case when the layout of Figure 7 is arranged between the points *P, Q, R, S* and *P', Q', R', S'* and comprises the gate *PA* controlled by the signal *SB'*. The comparator 39 compares, for each pixel received, the similarity of the synchronous signals *VMY"* and *Yo* with a tolerance threshold taking into account the level of noise accepted. In case of overrun, an error signal is memorised and transmitted at the output 39*c*, in the second part of the pixel. The input 39*d*, which collects the signal *SB',* in case when the module of Figure 7 is used with the gate *PA*, has the precedence in relation to the processing performed by the tolerance threshold comparator at the output 39*c*.

If the comparator 39 detects that this tolerance threshold value has been exceeded, it controls a correction unit 34*a* by its output 39*c* connected to the input 34*b* of this correction unit; this unit is part of the assembly 34 which also receives, at an input 34*c*, the component *VMY"* in order to correct the signal memorised.

Besides, the threshold comparator 39 controls, by its output 39*c* (also connected to the input 40*c* of a multiplexer 40), this multiplexer in order to select between, on the one hand, the luminance component *VMY* which is not compressed in the assembly 21, but delayed by $R = r+$ possibly *r'*, i.e. *VMY"*, arriving at its input 40*a* and, on the other hand, the synchronous identifier *I"x, y, t+R*, i.e. the result of the process in the assembly 21, arriving at the input 40*b* of the multiplexer 40.

If the threshold mentioned above has not been exceeded by the absolute value of the difference between the value Yo for which *b* = 1 in *I"x, y, t+R*, processed in the assembly 34 and the value *VMY"* (and failing any forcible entry by the signal *SB'*), the threshold comparator 39, while actuating by its output 39*c* the control input 40*c* of the multiplexer 40, causes this multiplexer, on its output 40*d*, to generate the identifier *I"x, y, t+R*, (i.e. the movement of the encoded luminance component in 21*a* arriving by the input 40*b*), while if the said threshold is exceeded by the said difference calculation (or in case of forcible entry by *SB'*), the threshold comparator 39, also by its output 39*c* and the control input 40*c* of the multiplexer, causes the multiplexer to generate the signal *VMY"* (i.e. the non-encoded luminance component delayed by *R*) arriving at its input 40*a*. Somehow, the multiplexer 40 constitutes, between its inputs 40*b* and 40*a*, a selector or a «junction» between the identifier *I"x, y, t+R*, and the signal *VMY"* not transformed into an identifier, whereas this multiplexer is controlled by the threshold comparator 39 according to whether the threshold mentioned above has been exceeded or not or according to a forcible entry by the signal *SB'*. This 1-bit selection signal *a* coming out of 39*c* of the unit 39 is also integral part of the output value *VMY(R)*, on top of the 7 bit signal *VMY"* coming out of the comparator 40 at 40*d*. At the same time as the signal *VMY(R)* or *Ix, y, t+R*, comes out at 40*d*, the signals *VMCr(R)* and *VMCb(R)*, i.e. respectively *VMCr* and *VMCb*, both delayed by $R = r (+r')$, are available at the outputs 41*b* and 41*r* (for the blue and red components) of a multiplexer 41*rb*, controlled (as the multiplexer 40) by the signal *a* generated by the output 39*c* of the said comparator 39 connected to its input 41c, and in such a case of validity of this selection signal (*a* = 1, hence a global displacement); conversely, (*a* = 0, hence no global displacement), the signals *VMr"* and *VMb"* are replaced with zero values at the output, since then the signals *VMCr(R)* and *VMCb(R)* are equal to zero.

Figure 6 represents on the different connections the number of bits, i.e. 1, 7 or 8 bits, transported along a short transversal oblique bar on these connections.

Figure 8 represents the flowchart summing up the control of the output of the encoding unit 12A, in relation with a pixel *PI* comprising two portions, i.e. one, *T1*, corresponding to the value of the pixel and the other, *T2*, corresponding to the return period.

During *T1*, one determines whether *b* is equal to 1 or 0:

- if *b* = 1, then *c* and *d* represent respectively the amplitude and the oriented direction of the displacement; it will be noted that *c* may exhibit the value 0 | 0 | 0 (for the 1st amplitude quantifier step) and the same goes for *d* (for the oriented direction 000 in the Freeman code, along *O*x);
- if *b* = 0, then *c* and *d* are also equal to zero (*c* = 0 | 0 | 0 and *d* = 0 | 0 | 0 while detailing the single «0» of Figure 8).

Consequently, at the end of *T1*, we finally obtain 0 | b | c | d.

**EP 1 110 408 B1**

During *T2*, we check whether the absolute difference between the value of the central pixel of a frame (central position 60 as defined thereunder with reference to a matrix 50 on Figure 9) movement-decoded (after its movement-encoding) and the value of the same pixel in the preceding memorised frame (after its movement-encoding) is greater then a threshold *s* or not.

- if this threshold is not exceeded by the said absolute value, then a = 0 and transmission to the compression-decompression assembly 13 of the 0 | b | c| d is authorised, i.e. an identifier comprising more «zeros» than the signal before movement-encoding;
- if this threshold is exceeded by the said absolute value, *a* = 1 and the unit 12*A* transmits to the compression-decompression assembly 13 the signal 1 | *MY"*, i.e. the picture mosaic signal received from the wavelet filter 11, simply delayed, without reducing the number of «zeros».

It appears therefore that the number of «zeros» transmitted by the unit 12*A* is not reduced only in case of a significant modification in the picture represented by the digital video signal (beginning of sequence or of a shot), i.e. when a = 1. Conversely, when a=0 and b=0, the number of consecutive zeros is increased notably.

We finally obtain at the output of the assembly 12*A* of Figures 4 and 5, detailed on Figure 6, (and possibly on Figure 7): normally, on the one hand, the luminance component *VMY*(R) encoded in the unit 21 and delayed, in the form of an identifier *Ix*, *y, t+R* for each pixel and, on the other hand, the chrominance components *Cb* and *Cr,* in the form of a wavelet filter output type signal (according to the Mallat diagram), i.e. *VMCb*(R) and *VMCr*(R) delayed by *R,* hence synchronous to *VMY*(R); the signals *VMY*(R) (i.e. the identifier *Ix*, y, *t+R* in principle), whereas *VMCb*(R) and *VMCr*(R) making up the total signal *VP* (also indicated on Figure 4) advantageously comprise, each, eight bits per pixel. The former, because of its structure mentioned above a | b | c | d (<u>a</u> and <u>b</u>*:* 1 bit each, <u>c</u> and <u>d</u>: 3 bits each). If the identifier *Ix, y, t+R* is equal to zero (a = b = c = d = 0), it forces *VMCb*(R) = 0 and *VMCr*(R) = 0; if a = 0 (threshold not exceeded) and b = 1 (existence of a limited displacement), <u>c</u> | <u>d</u> indicates the amplitude and the direction of the displacement and *VMCb*(R) and *VMCr*(R) are equal to zero; finally, if <u>a</u> = 1 (threshold exceeded), on the one hand, *VMY*(R) = <u>a</u> | <u>VMY"</u> and, on the other hand, *VMr"* and *VMb"* are transmitted respectively at *VMCb*(R) and *VMCr*(R).

The three components are synchronous and each advantageously consists of 8 bits per pixel and making up the composite signal *VP* of the unit 12*A*.

Going back to Figure 4, we can see that the composite signal *VP* of the type mentioned above with three components, i.e. consisting of *VMY*(R) *VMCb*(R) and *VMCr*(R), is processed in the compression part *CP* of the compression-decompression assembly 13, formed in a known fashion (for instance described in the article of Patrick Butler mentioned above and the catalogue of C-Cube Microsystems mentioned above, whose contents have been integrated here for reference purposes), by an adaptive quantifier 13*a*, an *RLC* type encoder 13*b* and a Huffman encoder 13*c*.

It will be noted that this composite signal *VP,* making up the input at 25 of the said compression part *CP of the* assembly 13, comprises, as an average, in its component Y a larger proportion of «zeros» notably of consecutive «zeros», than the composite signal *VM* generated by the wavelet filter and processed directly by the compression-decompression assembly in the ADV 601. In case when there is no movement and no threshold is exceeded (a | b = 0|0), the signal *VP* only contains zeros, since then c | d = 0|0. In case of a movement, without any threshold overrun, (a|b = 0|1), the signal *VP* is equal to zero for its chrominance components *VMCr*(R) and *VMCb*(R) and only 7 bits not nil, maximum, for its luminance component *VMY*(R) (<u>b</u> = 1 and <u>c</u> and <u>d</u> may contain 1 to 6 bits not nil). It is only in case of threshold overrun (<u>a</u>=1) that the signal VP consists of the wavelet filter output and is processed in the compression-decompression assembly of the ADV 601 (Figure 1) without any reduction of the number of «zeros» in the movement encoding unit 12*A*.

It results from the quasi general increase in the number of consecutive «zeros», notably because for the whole portion without any displacement in the consecutive frames, the pixels are represented by 0|0|0|0, in the additional encoding in the unit 12*A*, that the compression in the compression portion *CP* of the compression-decompression assembly 13 is far more accentuated in the device according to the invention comprising the movement encoding unit 12*A* (Figures 4, 5 and 6) than in the ADV 601 (Figure 1).

We finally obtain, on the compression output *SC* of the device according to the invention (Figure 4), a compressed signal *SIC* comprising in average a number of bits per pixel which is smaller than the compressed signal *NC* available at the output of the ADV 601 (Figure 1), which enables, among other things, easier remote transmission, for instance over a telephone line, or more compact recording, notably within the framework of the applications listed in the preamble of the present patent application.

We shall now described, with reference to Figures 9 to 13, an embodiment of the picture reconstruction unit 34 of Figure 6.

It is useful here to depict the form taken by the digital signal *I"* arriving at this unit 33 (in the absence of correction by the gate *PA* if any) and consisting of a succession of identifiers representative of doubly encoded digital video signals, i.e. via the wavelet filter 11 according to the Mallat diagram and by the movement analysis unit 21, in the compression phase (Figure 6).

This signal *I″*, which represents, for each video picture frame, the successive pixels in the frame for the luminance component Y; comprises, as indicated for the output of the unit 21, in the compression portion of the device of Figure 6, advantageously eight bits distributed into four successive groups or packets:

- a first group *a* comprising a single bit, for instance equal to 1 in case of a significant change in the whole frame, with respect to the just preceding frame (in particular in case of beginning of a new scene or of a new shot) or in the case of a movement whose displacement does not correspond to what was expected, but is equal to zero in case of absence of such a significant change, or of a movement whose displacement corresponds to what was expected;
- a second group *b* comprising also a single bit, which, when a = 0, is equal to 1 in case of movement for the pixel represented, but is equal to 0 in case of the absence of movement;
- a third group *c* comprising a reduced number of bits, for example 3 bits as indicated above, and which represents in binary the quantifier size or speed of the displacement for this pixel (along 8 quantification steps from 000 to 111 for 3 bits, since $2^3 = 8$); and
- a fourth group *d*, comprising, as the third group, a reduced number of bits to represent the oriented direction of the displacement, for example 3 bits representing this direction according to the Freeman code with 8 oriented directions from 000 to 111, offset at an angle of 45° (8 x 45° = 360°), successively.

It should be reminded that when a = 1, the signal *I″* is replaced in the unit 40 by a signal *VMY″* made of a 7 bit group.

Finally, when a = 0 and b = 0 (absence of movement), the groups *c* and *d* are also equal to zero.

In conclusion, such a signal *I″* with four groups of bits exhibits the form or «format» | *a* | *b* | *c* | *d* |, *a* and *b* with 1 bit and *c* and *d* with 3 bits, i.e. 8 bits in all for each component of a pixel. Three cases are possible, according to the binary value of the single bit each of the first two groups:

- first case: *a* = 1 : beginning of a scene or at least significant change in the whole frame analysed with respect to the preceding one, or in case of a movement whose displacement does not correspond to what was expected : the unit 34 receives *VMY″*;
- second case : *a* = 0 and simultaneously *b* = 1 : no significant change in the whole frame, but a movement for the processed pixel corresponding to what was expected : the unit 34 receives 0 | 1 | c | d
- third case : *a* = 0 and simultaneously *b* = 0 : there is no movement for this pixel and we therefore also have «0» for each of the 6 bits of *c* and *d* : the unit 34 receives 0 | 0 | 0 | 0.

Figure 9 illustrates the structure and the operation of the unit 34 of Figure 6, whereas this unit is formed in order to reconstruct, from an identifier *I″* mentioned above arriving at the input 33, the signal *VMY* (of the wavelet filter output type) transformed in the assembly 21, with possibly that of Figure 7, into *I″*.

The unit 34 distributes over three spatial portion, i.e. a matrix 50 and two additional portions 51 and 52 which supplement the constitution of a looped matrix circuit, the succession in *Y″* of the pixel signals, for the luminance component, whereas the time taken by these signals to go through the loop is equal to that of a pixel frame;

- the matrix 50 is a square matrix of size identical to the matrix implemented in the movement processing unit 21 (Figure 6) in the compression channel (i.e. the matrix 21 in the patent applications mentioned above); this matrix comprises at least 2*n*+1 lines and 2*n*+1 columns, by designating by *n* the number of levels for quantifying the amplitude of pixel displacements; its size is therefore preferably equal to 17 x 17 pixels (seventeen lines and seventeen columns of pixels for 8 quantification levels); offset registers (16 per line of pixel positions in the particular case), whose position is illustrated on Figure 10 and which are described thereunder with reference to Figures 11 and 12, impose a delay equal to the time interval between the beginnings of two consecutive pixels along each line (between the 17 pixel positions) of the matrix 50 (there are therefore 16 x 17 = 272 offset registers for the 17 lines of the matrix);
- the second portion 51 comprises a number of lines equal to that of the matrix 50, reduced by one unit, i.e. 16 lines in this case, and a number of columns equal to that of a pixel frame of the digital video signal to be compressed, reduced by the number of columns in the matrix 50, i.e. reduced by 17 units in this case (the number of columns in the 50 - 51 being equal to that of the columns in the assembly 50 - 51 - 52); in a variation, this portion 51 can also be formed by a F.I.F.O. type memory with separate inputs and outputs, of a size equal to the sum of the 17 words and possessing a field of address bits such as it encompasses the number of columns in the assembly 50 - 51 - 52;
- the third portion 52 supplementing the portions 50 and 51 in order to reconstruct a whole frame of the input signal;

it therefore comprises, as illustrated on Figure 9, an input, referred to as 57, beginning after the 17th line $54_{17}$ of the matrix 50 and an output 59 connected to the input $53_1$ of the unit 50; it has a capacity in a F.I.F.O. memory at least equal to the number of pixels of the picture, reduced by 16 lines and by 16 columns.

The circulation between these three portions 50, 51 and 52 is as follows:

From the input $53_1$ of the first line $50_1$ of the matrix 50, the succession of the pixel signals of a frame first circulates from left to right through this line, whereas the first pixel of the frame occupies the last pixel position on this first line, just upstream of the output $54_1$ of this first line, while the 17th pixel of this frame occupies the first position of this line, just downstream of the input $53_1$.

Then, after 17 pixels, the signal passes from the first line $50_1$ of the matrix 50 to the first line $51_1$ of the portion 51, from the output $54_1$ of the first line $50_1$ of the matrix 50 to the input $55_1$ of the first line $51_1$ of the portion 51 and travels further along this first line $51_1$ down to the last pixel position on this first line just upstream of the output $56_1$ of this line. At this moment, the first pixel of the frame signal occupies this last position, while the set of pixels of the first line of the frame occupies, in order from right to left, the set of the first lines $51_1$ and $50_1$ of the portion or matrices 51 and 50.

The succession of the pixel signals of a frame comes out at the output $56_1$ of the first line $51_1$ of the portion 51 in order to reach the input $53_2$ of the second line $50_2$ of the matrix 50, goes through this second line $50_2$ to reach the output $54_2$ of this second line and from there, the input $55_2$ of the second line $51_2$ of the portion 51; the pixel signals go through this second line to exit at its output $56_2$. A this moment, the pixels of the first frame line of the signal occupy all the second lines $51_2$ and $50_2$ of the portions 51 and 50, respectively, from right to left, while the pixels of the second frame line of the signal occupy all the first lines $51_1$ and $50_1$ of the portions 51 and 50, also from right to left.

And so on and so forth, down to the sixteenth line of the matrix 50 and of the portion 51, respectively $50_{16}$ and $51_{16}$; consequently, after the first sixteen lines of the succession of the pixel signals of a frame, these first sixteen lines occupy the lines 16 to 1 of the matrix 50 and of the portion 51, i.e. $50_{16}$ - $51_{16}$, ... $50_2$ - $51_2$ and $50_1$ - $51_1$ from bottom to top and from right to left, along the conventional scanning diagram at the beginning of a video frame on a screen.

The output $56_{16}$ of the sixteenth line $51_{16}$ of the portion 51 (the line $56_{16}$ being the last line of this portion) is connected, in the same way as the outputs $56_1$, $56_2$, $56_{15}$ of the previous lines of this portion, to the input of the following line of the matrix 50, i.e. in this case to the input $53_{17}$ of the seventeenth line $50_{17}$ of this matrix 50.

The output $54_{17}$ of this line $50_{17}$ is connected to the input 57 of the portion 52, as indicated above. This input 57 and that of the first (incomplete) line $52_1$ of this portion. The frame then goes through the following lines $52_2$ and of the portion 52, as for the assembly 50 - 51, to reach 59.

The output 59 of the portion 52 is connected to the input $53_1$ of the portion 50, the memory capacity of the portion 52 is at least equal to the number of pixels of the picture reduced by 16 lines and 16 columns.

When the beginning of the pixel signal reaches the output 59 of the portion 52, the whole first frame, in the order of arrival at $53_1$, occupies the whole portions 50 - 51- 52, from bottom to top and from right to left.

In fact, the distinction between matrix portions (matrix 50) and quasi-matrix portions 51 and 52 is functional and explanatory, whereas these three portions form a matrix assembly through which circulates the encoded signal of each frame, whereby the final output 59 is connected to the initial input $53_1$ of this matrix assembly 50 - 51 - 52 and the time taken by a pixel signal of a frame to pass through this closed loop being equal to the frame duration of the original digital video signal. Consequently, failing any replacement order (in a multiplexing unit 60, arranged at the centre of the matrix 50, as indicated thereunder) of the signal arriving normally at this multiplexing unit in a central position of the matrix 50 by another signal in case of movement ($b = 1$) or of change of shot ($a = 1$), the succession of pixel signals arriving at the input $53_1$ of the assembly 50 - 51 - 52 goes round in circles, i.e. in a loop, in this assembly, as indicated previously: from each line $50_1$ to $50_{16}$ of the portion 50 to the corresponding line $51_1$ to $51_{16}$ of the portion 51, with return to the following line $50_2$ to $52_{17}$ of the portion 50, then from the last line $50_{17}$ of the portion 50 to the input 57 of the portion 52 delayed down to the output 59 of the portion 52, with return to the beginning of the first line $50_1$ of the portion 50.

In order to allocate exactly at each pixel position of the assembly 50 - 51 - 52, a pixel of the succession of pixel signals in a frame arriving at $53_1$, an offset register is provided, between each succession pixel position in this assembly in the conventional frame scanning order on a video screen (i.e. in the order mentioned above), or other delaying means imposing a delay equal to the time interval between the beginning of two successive pixels, whereas such a register is provided not only between the pixels of the same line of a portion 50, 51, 52, but also between the output of a line of a portion and the subsequent input, in the circulation order of the signal, in the following line of the same portion or on a line of another portion, i.e. between $54_1$ and $55_1$, $54_2$ and $55_2$, etc., between $56_1$ and $53_2$, $56_2$ and $53_3$, etc., between $56_{16}$ and $53_{17}$, between $54_{17}$ and 57, between 59 and $53_1$.

Figure 10 represents the distribution of the offset registers implemented between two successive pixel positions in the matrix 50, with control means of some of these registers, while Figures 11 to 13 illustrate the different types of functions associated with the registers.

Figures 10, 11 and 12 distinguish three types of registers, each of which imposes a delay $r''$ equal to the time interval between the beginnings of two successive pixels and their positions in the matrix 50.

The centre 60 (Figures 9 and 10) contains a multiplexer offset register 61 (detailed on Figure 11) whose structure and operation will be exposed thereunder.

Along the 8 oriented directions of the Freeman code, separate by an angle, in succession, of 360°/8 i.e. 45° from the oriented horizontal axis $62_0$ and representable by three bits ($2^3 = 8$), except for the centre 60 from which start off these 8 directions or semi-axes $62_0$, $62_1$, $62_2$, $62_3$, $62_4$, $62_5$, $62_6$, $62_7$, each line $50_1$, $50_2$, ..., $50_{17}$ comprises offset registers 63 (detailed on Figure 12) associated with multiplexers, but their structure is simpler than that of the multiplexer associated with the register 61 and their structure and their operation will be described thereunder.

Finally, in the other locations (i.e. apart from the centre 60 and the directions $62_0$ to $62_7$), between two successive pixel positions along the scanning direction in the matrix portion 50, are provided offset registers 64 which are simple delay units causing the said delay $r''$ (symbolised $2^{-1}$, for the unit delay of a pixel).

The purpose of the offset register 61 (Figure 11) in the central location 60 of the matrix portion 50 is to modify the flow of pixels circulating through the assembly 50 - 51 - 52 as a loop in the direction indicated above in case when the 1st group $\underline{a}$ of digital signals of the four groups of incoming digital signals $| \underline{a} | \underline{b} | \underline{c} | \underline{d}$ consists of a «1», i.e. when $a = 1$, which represents a global change in the video signal before compression (beginning of a scene or change of shot for instance, constituting the beginning of a sequence) or a non-match between the incoming pixel and memorised pixel and displaced; in which case the flow of pixels circulating through the assembly 50 - 51 - 52 must be modified and it is the signal not having been processed in the movement processing unit 21 of Figures 5 and 6 which must be substituted. To this end, two multiplexers 61$b$ and 61$c$ are associated with a delay unit 61$a$, analogue to the delay units 64 causing a delay $r'''$.

The structure of an offset register 63 (Figure 12) is simpler and contains only one gate type multiplexer 63$b$, associated with the delay unit 63$a$, analogue to the delay units 64 and 61$a$, which represents the function «*AND*» (symbol &). One of the offset registers 63 arranged along the 8 oriented direction of the Freeman code is operational when the 1st group $\underline{a}$ of digital signals of the four groups of incoming digital signals $| \underline{a} | \underline{b} | \underline{c} | \underline{d}$ consists of a «0», i.e. $a = 1$, and the second group $\underline{b}$ of digital signals consists of a «1», i.e. $b = 1$, - which represents a (limited) displacement along one of the said 8 directions, i.e. that on which the offset register involved is arranged - i.e. that determined by the values of $\underline{c}$ specifying the displacement amplitude and $\underline{d}$ specifying the direction in the Freeman code of this displacement. Thus, the offset register in the position $P$ on Figure 10 corresponds to $\underline{c} = 6$ (line $54_2$, i.e. 6 lines above the central line $50_8$ and $d = 1$ (on the oriented direction $62_1$ represented by «001» in the Freeman code).

The purpose of this operation is to bring back to the centre 60 the pixel in position $P$, the point is in fact to cause the central pixel to retrieve the location occupied in $P$ after its displacement in the unit 21 further to its movement, while performing, during the decompression, the reverse operation of that carried out in the compression by the assembly 21, i.e.

- to restore the position of the pixel before processing the displacement in the unit 21 of Figure 6 in case when $b = 1$ and $a = 0$ (of limited movement), and
- to restore the pre-processing signal in the unit 21 in case when $\underline{a} = 1$ (complete modification).

A register 63 (Figure 12) is formed and operates as follows: a gate 63$b$ is associated with the delay unit 63$a$, analogue to the delay units 64 causing a delay $r''$ to the value of the pixel, which represents the function «*AND*» and is validated by a non-signal $ri$, itself representative of the group of incoming digital signals $| \underline{a} | \underline{b} | \underline{c} | \underline{d}$, i.e. $i$ is equal, for $a = 0$ and $b = 1$, to the value c|d. When these conditions are met, the signal $ri$ ($| a | b | c | d |$) is equal to 0, all the other signals $ri$ are equal to 1. The purpose of this function is either to transfer the pixel for an absence of selection, or to cancel the value of the pixel at this point when selecting the position (moving pixel) for the following register, in the progression order of the pixel flow, and to transfer the value of the pixel before cancellation at $si$.

A register 61 (Figure 11) is formed and operates as follows: a multiplexer 61$b$ controlled by the signal $\underline{b}$ which selects the output of the offset register for the value 0 or the output of the encoder 61$d$ for the value 1 is associated with the delay unit 61$a$, analogue to the delay units 64 causing a delay $r''$ to the value of the pixel; this encoder 61$d$ transfers the input if, with $i = c | d$, the output of this multiplexer 61$b$ goes, on the one hand, to the output of the unit 34 at 35 and, on the other hand, to the input of a second multiplexer 61$c$, in turn controlled by the signal $\underline{a}$. The second input of this second multiplexer consists of the value of the current pixel at this position 60; it enters the unit 34 at 34$c$ (Figure 9). The control $\underline{a}$ «zero» transfers the output of the preceding multiplexer 61$b$ to the following register 63; for a equal to 1, the multiplexer 61$c$ transfers the current value of the pixel to the following register 63.

Figure 13 sums up the sequence of operations from the picture correction sub-unit. The value of the displacement $b | c | d$ enters at 33 this correction sub-unit 34$a$, if $\underline{b}$ is equal to 1; conversely ($\underline{b} = 0$) no process takes place. If the value of $\underline{a}$ is actually equal to zero, a decoder 70 sets the output $ri$ to zero, whereas $i$ is equal to c | d, to 4 in this case; this signal *ri* will control the register 63 at the position 4. The value at this position s4 is transferred to the centre 60 by the encoder 61*d*, which encodes the value *c* = 4 | d and at the same time, a zero value is proposed to the following register via the *AND* gate 63*b*. The multiplexer 61*b* controlled by *b* = 1 transfers the value of the pixel from the position «4» at the output 35 of the unit 34*a*. A threshold comparison is carried out between this signal and the current value delivered by the unit 29*y*, which produces a signal $\underline{a}$ such as:

$$|VMY'' - Y_0| < \text{THRESHOLD, hence } \underline{a} = 0; \text{ conversely } \underline{a} = 1 \text{ if inequality is not respected.}$$

The result of this calculation is validated and memorised at the beginning of the second part of the period of the pixel. It comes out of this comparator at 39*c*. This result can be forced by the active signal *SB'* when the circuit of Figure 7 exists and comprises the gate *PA*.

If the signal $\underline{a}$ becomes active ($\underline{a}$ = 1), it is necessary, on the one hand, to cancel the zero transfer command in the register 63, which is performed by the decoder 70 which resets the signal *r4* to «1» and therefore validates the gate 63*b* and, on the other hand, reset the picture while updating the central value 60 with the current value *VMY''* using the multiplexer 61*c* controlled by the signal $\underline{a}$.

We shall now describe the decompression portion *DP* of the preferred embodiment of the compression-decompression device according to the invention as represented, as a whole, on Figure 4.

This decompression portion of the device, according to the invention, of Figure 4 first comprises the decompression portion of the compression-decompression assembly 13, i.e. successively the Huffman encoder 13*c*, the *RLC* filter 13*b* and the adaptive quantifier 13*a*, al three operating in reverse, as in an ADV 601 whose description relating to the decompression has been incorporated here for reference purposes, as well as that relating to the decompression at the article mentioned above of C-Cube Microsystems.

However, it will be noted that the compressed signal *SIC*1, which should be decompressed and which is applied to the *ED* decompression input of the device according to the invention and hence to the input of the decompression portion of the compression-decompression assembly 13, is more compressed than the signal to be decompressed *NC*1 applied at the ADV 601 (Figure 1) operating in decompression, for the reasons exposed above for the compression according to the invention.

Figure 4 represents with arrows from right to left the progress of the signal decompression *SIC*1 in the assembly 13, from the *ED* input at 13*c*, from 13*c* to 13*b*, from 13*b* to 13*a* at the decompression output 36 of the assembly 13. We finally obtain a signal *VP*1 whose structure is similar to that of the signal *VP*, i.e. in which the luminance component is represented by an 8-bit identifier *I'* $\underline{a}$ | $\underline{b}$ | $\underline{c}$ | $\underline{d}$ ($\underline{a}$ and $\underline{b}$ each comprising 1 bit, $\underline{c}$ and $\underline{d}$: each comprising 3 bits), at least in the absence of significant movement in the scene represented; conversely, we have *a* | *VMY''* instead of $\underline{a}$ | $\underline{b}$ | $\underline{c}$ | $\underline{d}$.

The signal *VP*1, which is generated at the decompression output 36 of the assembly 12*B* and is received at the input 36' of the assembly 12*B*, is processed in the said assembly 12*B* illustrated on Figure 14 with the terminal decompression portion (wavelet filter 11) of the device according to the invention and partially on Figures 10 to 14. The signal processed in the assembly 12*B* is available at the output 17' of this assembly and received on the reverse input 17 of the wavelet filter 11.

This signal *VP*1 comprises a luminance component *VMy'*, made up of the identifier *I'* (of same structure as the signal *VMY*(R) generated by the assembly of Figure 6) and two components blue *VMCb'* and red *VMCr'* (these last two components having the same structure as the components VMCb(R) and *VMCr*(R) generated by the assembly of Figure 6) in case when *a* = 1 and are equal to zero conversely, $\underline{a}$ = 0.

From each component *VMy'*, *VMCb'* and *VMCr'*, the picture according to the picture mosaic type Mallat diagram is reconstructed in the picture reconstruction units 42*y* (for *VMy'*), 42*b* (for *VMCb'*) and 42*r* (for *VMCr'*), which share the same structure as the picture reconstruction unit 34 of Figure 6, a structure which has been described with reference to Figures 9 to 13, with its operation.

It will be noted as, like the unit 34, the units 42*y*, *42b* and 42*r* comprise a correction sub-unit 43*y*, 43*b*, 43*r*, respectively, which receives the possible correction control signals at its input 44*y*, 44*b*, *44r*, respectively.

The outputs 45*y*, 45*b*, 45*r* of the units 42*y*, 42*b*, 42*r* respectively, generate the signals *VMY'', VMCb''* and *VMCr'',* respectively, with the same picture mosaic structure as *VMY, VMCb* and *VMCr*, of Figure 6, i.e. according to the Mallat diagram. These signals *VMY'', VMCb''* and *VMCr''* are processed in the decompression portion of the wavelet filter 11 into three units 48*y*, 48*b*, 48*r* operating in reverse as in an ADV 601 to generate finally the three luminance components *Y'', Cb''* and *Cr''* of the digital video signal *VN*1 (which is also represented on Figure 4, illustrating the assembly of the device according to the invention), whereas these components are the counterpart of the three components *Y, Cb* and *Cr* of the digital video signal *VN* (of Figure 4) after compression and decompression; the signal *VN*1 can be applied to a monitor screen, a television screen or a picturephone screen, for example (unit 19 of Figure 4).

We shall now describe with reference to Figures 15, 16 and 17 three particular applications of the process and of the device according to the invention. On these figures, we can see the references of Figure 4 for corresponding signals and units.

Figure 15 illustrates the application of this process and of this device to picturephones, i.e. telephones with simultaneous transmission of the speakers' images (and of their surroundings if possible), notably in the case of videoconferences.

The transmission between both picturephone sets *P*1 and *P*2 (possibly more than two sets in case of videoconferences between more than two locations) is performed over a telephone line, a cable, a Hertzian channel, possibly via satellite.

Each set is formed according to the assembly of Figure 4 and comprises a sound digital television camera 15 which generates in the encoding portion of a wavelet filter 11 whose output 16 is connected to the input 20 of the movement processing unit 12*A*; the output 24 of the unit 12*A* is connected to the compression input 25 of a compression-decompression assembly 13 which generates, at its compression output *SC*, the compressed signal *SIC* which will be transmitted remotely and received at the other set as a signal *SIC*1 at the decompression input *ED* of the compression-decompression assembly 13 whose decompression output 36 is connected to the input of the movement decoding assembly 12*B*; the output of the assembly 12*B* is connected to the decoding or decompression input 17 of the wavelet filter 11, whose decoding output generates the signal *VN*1 received by a monitor screen 19 with sound reproduction.

The device of Figure 14 operates in the same way from the set *P*1, as a transmitter, to the set *P*2, as a receiver, and vice versa. The assembly made up of the digital camera 15 and of the screen 19 with a loudspeaker constitutes the picturephone properly speaking, i.e. the receiving set of the sensor 15 for the sound and picture to be transmitted and of the receiver 19 of the picture and sound received or of the sound sensor and of the sound receiver which are materially distinct.

The digital video signals are compressed in each set *P*1, *P*2 and transmitted as compressed from *P*1 to *P*2 and from *P*2 to *P*1, which enables considerable reduction of the pass-band, hence the use of telephone lines with an excellent quality of the picture received at 19, practically without any noticeable delay (only 3 frames, i.e. approx. 1/10 second).

Figure 16 illustrates a device for recording digital video signals, which have been compressed by the process and the device according to the invention, at the same time as the sound, which is concomitant to the pictures.

The device of Figure 16 comprises a sound digital camera 15 or a source of a digital video signal received from somewhere else or a reader of a previous recording, such as a video film or a scanner, which generates a digital video signal *VN*; the said signal is applied at the input 14 of a wavelet filter 11 operating on-line only, i.e. while forming pictures according to the Mallat diagram, i.e. with a picture mosaic.

The output 16 of this filter is connected to the input 20 of a movement processing assembly 12*A* (similar to that of Figures 5 to 7) whose output 24 is connected to the input 25 of a compression assembly 13', formed in the same way as the compression portion of the compression-decompression assembly 13 of Figure 4. The output *SC* of the assembly 13' generates a compressed digital signal *SIC* which is applied to an *EN* recorder of known type on a recording medium *SE*, such as a laser disc, a CD-ROM, a DVD, a magnetic tape, a floppy.

The compression carried out by the device of Figure 16 enables to record the same original document on a reduced portion of the recording medium, for instance, on a single laser disc or a portion of DVD of a two hour film, while keeping essential characteristics of the original document.

Figure 17 represents a recording reading device implementing the process and the device according to the invention.

The device of Figure 17 comprises first of all a recording reader *LE* of known type smoothing a digital video signal (sound and picture) on a medium *SE*, such as a laser disc, a CD-ROM, a DVD, a magnetic tape, a floppy or another medium. Its output digital signal *SIC*1 is applied at the decompression input *ED* of a decompression assembly 13" formed in the same way as the decompression portion of the compression-decompression assembly 13 of Figure 4. The decompressed output signal *VP*1 of 13" is applied at the input of a decoding assembly 12*B* (similar to that of Figure 13). The output signal 12*B*, consisting of a decoded signal *VM*1, is applied at the input 17 of a wavelet filter 11" operating in decoding mode as indicated for the wavelet filter 11 of Figure 4. Finally, the output 18 of the filter 11" generates the digital video signal *VN*1 which constitutes the replica, after decompression in 13" and decoding in 12*B* and 11", of the recorded, encoded and compressed digital video signal (for example by the device of Figure 16) on the medium mentioned above, as read by the reader *LE*; this signal *VN*1 is displayed on the unit 19, formed by a monitor, a television set or a computer with loudspeaker(s).

Obviously, other applications of the process and of the device according to the invention are possible. In the three applications of Figures 15, 16 and 17 and the other applications, the process and the device according to the invention exhibit, with respect to the known digital video signal compression and/or decompression systems, a large number of advantages, notably:

- a more advanced compression, while keeping similar or enhanced characteristics, hence the possibility of remote transmission with a narrower pass-band or of recording on a smaller portion of a recording medium;

- practically real time compression and/or decompression, hence improvement of communication via picturephone between two people and of videoconferences;
- improvement of quality of the compressed signal which keeps the essential characteristics of the signal before compression.

The present invention is not limited to the embodiment and to the applications, which are described and illustrated, but encompasses their variations and modifications; its extent is only limited by the claims thereunder.

In particular, the encoding assembly 12A and the decoding assembly 12B can be used without a wavelet filter 11 (or with another preliminary encoding assembly) and with a type of compression-decompression assembly other than the assembly 13.

According to another variation, the diagram of Figure 6 can be modified, in its upper left comer (without any modification of the diagram in the remainder of the Figure), as illustrated on Figure 18, on which the units and another elements shared by Figures 6 and 18 show the same differences as on Figure 6.

In this variation, the luminance signal is applied, not only to the portion 11*y* which processes this signal as in the case of the assembly according to Figure 6, i.e. while using the tree of Figure 2, but also to a unit 11*m* similar to this portion, but using the tree of Figure 19 which results directly from that on Figure 2 after suppression of the high-pass *PH(X)* and *PH(Y)* and low-pass *PB(X)* and *PB(Y)* filters, i.e. only containing the «decimators» *DE*, respectively *X/2 and Y/2*. We thus obtain at the output 11*m* a signal *VMY″* in the form of the Mallat diagram) different from the *VMY* signal (which results from the implementation of the tree of Figure 2 in the portion 11*y*). The unit 11*m* is controlled, in the same way as the portion 11*y*, by sequencing *SCZ* and clock *HPix* signals.

The output signal *VMY″* of the unit 11*m* (with the tree of Figure 19) is applied to the movement analysis and calculation assembly 21 (identical to that of Figure 6), while the output signal *VMY′* of the portion 11*y* (with the tree of Figure 2) is applied to the delay unit 29*y*.

The difference between the diagram of Figure 18 and that of the left upper corner of Figure 6 is therefore as follows:

- in the case of Figure 6, the luminance signal *Y* is processed solely by the tree of Figure 2 (with high-pass and low-pass filters) in the portion 11*y* and the output signal *VMY* is applied at the same time to the movement analysis and calculation assembly 21 and to the delay unit 29*y*, whereas
- in the case of Figure 18, the luminance signal *Y* is applied at the same time to the portion 11*y* (with the tree of Figure 2) and to the unit 11*m* (with the tree of Figure 19), whereas the portion 11*y* generates signals inside the delay unit 29*y*, while the unit 11*m* generates signals inside the assembly 21, since the portion 11*y*, the assembly 21 and the unit 29*y* are the same on Figure 18 and on Figure 6.

The variation of Figures 18 and 19 only bears upon the processing of the luminance signal *Y* upstream of the assembly 21 and of the unit 29*y*, whereas the processing of the colour components, i.e *Cr* and *Cb*, is not modified.

Besides, we have always considered in the above that we were processing, on top of the luminance signal *Y*, the signals *Cr* of red component and *Cb* of blue component to represent the colour of a pixel, whereby this colour can be represented by its luminosity component *Y*, its tone component and its saturation component. The equivalence of both representations appears immediately when considering Figure 20, on which the first quadrant of the plane with the axes *OX* and *OY* of Cartesian co-ordinates has been illustrated. If the colour of a pixel is represented (independently from its luminosity) by a point *CP* of this quadrant, the position of this point can be defined either in Cartesian co-ordinates, i.e. the length *Ox* (for *Cr*) and the length O*y* (for *Cb*) or in polar co-ordinates, i.e. the length *r* (for the tone *T*) and the angle *â* (for saturation *S*).

Within the framework of the invention, it is therefore possible, according to a third variation, to replace the couple of signals *Cr* and *Cb* with the couple of signals T for Tone (i.e. *r*) and S for Saturation (i.e. *â*), in the text as well as on the drawings, without modifying otherwise the device illustrated and process defined above, whereas the claims cover both possibilities of representing the colour by *Y, Cr* and *Cb* and *by Y, r* and *â*.

This application also encompasses the following description.

Video is conventionally distributed as a sequence of pixels. For instance, in the NTSC format used in the United States, the video is displayed as a sequence of frames at 29.97 frames per second. Each frame consists of 525 scan lines. Each line takes 63.5 microseconds to scan, and horizontal retrace takes 10 microseconds (with 5 microseconds horizontal synch pulse embedded), so the active line time is 53.5 microseconds. Each scan line is coded in three analogue channels, carrying luminance, red and blue, respectively. Because the signal is analogue, the concept of a "pixel" is not well defined; in digitised video, it is conventional to sample a scan line into about 400-500 pixels. Each frame is divided into two interlaced fields, one carrying the even-numbered lines, and one carrying the odd-numbered lines. Of the 525 scan lines, 20 are reserved for control information at the beginning of each field, so there are a maximum of 485 lines of visible data. (An ordinary TV displays about 320 lines.)

Several known digital video signal compression and decompression systems have been standardised, under the names JPEG (Joint Photographic Experts Group), designed primarily for fixed pictures, and MPEG (Moving Pictures Experts Group) designed primarily for animated pictures. MPEG versions MPEG 1 and MPEG 2 are already available commercially. Standardisation of MPEG 4 is in progress.

These standards, notably MPEG, are based on the use of the Fourier transform, while using solely the cosine component of this transform. A JPEG or MPEG digital video signal compression and decompression system uses a DCT (Discrete Cosine Transform) filter or encoder implementing Fourier transforms. In the compression portion of the system, the signal to be compressed is applied at the compression input of the DCT filter whose compression output signal (consisting of Fourier transforms) is applied at the compression input of the compression-decompression device, which produces on its compression output the compressed video signal. The decompression portion of the system accepts a compressed video signal at a decompression input, and produces decoded video out an output. The decompression portion of the system performs the inverse function of the compression portion of the system.

In MPEG, each frame of a video sequence is divided into 8 x 8 pixel blocks covering the whole picture. Each 64-pixel block is processed in succession in a DCT filter that carries out a Fourier transform in order to keep only the representative section (that of the cosine component).

Then an adaptive quantifier quantifies the frequency digital coefficient of the representative portion of the successive Fourier transforms, in order to reduce the number of their bits in the binary flow of Zeros and of Ones and to increase the number of Zeros in this flow. The time-related variations of the value of each pixel (or picture-element) of the successive frames of the DC (Discrete Cosine) signal coming from the DCT unit are determined, and the numerical output of the DCT are replaced with a replacement numerical representation selected to increase the number of Zeros.

Next, a Run-Length-Coding (RLC) encoder locates the consecutive Zero sequences, performs an encoding which transforms the DC signals thus quantified into 8-bit groups, the first four of which represent the number of Zero and the last four of which the number of bits representative of the signal before encoding.

Finally, the fifth unit of the compression-decompression device 100 is a Huffman encoder. A Huffman encoder uses an encoding spreadsheet to replace each of the 8-bit groups mentioned previously with a binary number. The most frequent 8-bit groups are replaced with very short numbers, and the less-frequent 8-bit groups are replaced with longer numbers, so that on average, each 8-bit group is replaced with a binary number containing fewer than 8 bits.

It is the flow of these binary numbers (bits) coming from the Huffman encoder that form the final compressed signal, output by the compression-decompression MPEG system, in its compression portion; this signal comprises most video information of the video signal entering this compression portion of the compression-decompression system.

The decompression portion of the compression-decompression MPEG system uses the same units in reverse order: a Huffman decoder, an RLC decoder, an adaptive quantifier and a DCT filter, in order to obtain finally a decompressed digital video signal. This decompressed signal enables to display a video picture relatively close to the initial picture.

The compression portion and the decompression portion at both ends of a transmission chain (in the broadest sense) or of a recording and reading chain, must absolutely comply with the same standard, e.g., the MPEG 1 or MPEG 2 standard.

One of the shortcomings of such an MPEG system is such that in the picture obtained after decompression, there are visual artefacts at the edges of the 8 x 8 blocks into which the initial picture has been broken down. These artefacts are known as "blocking" or "quilting" effect.

Implementing the JPEG and MPEG 1 or MPEG 2 standards, with corresponding units mentioned previously, is described more completely in the «Product Catalogue» of Fall 1994 of C-Cube Microsystems in Milpitas California, USA, incorporated herein by reference.

It is desired to further compress digital video while preserving picture quality, and/or to improve the picture quality that can be obtained from a given level of compression. These benefits are desirable in the context of previous systems, such as JPEG, MPEG and ADV 601.

Most generally, the invention relates to a video compression apparatus comprising:

a motion analysis stage, comprising circuitry and/or software designed to identify a region of a current frame of a video whose contents correspond to a different region of a previous frame of the video, and designed to produce a datum coding motion between the region of the previous frame and the region of the current frame; and
at least one other video processing stage of circuitry and/or software interconnected with the motion analysis stage to effect compression of the video.

In a preferred embodiment of said apparatus, the regions are single pixels.

According to another feature of the apparatus, the motion analysis stage further comprises circuitry and/or software designed to identify regions of the current frame whose contents corresponds to the same region of the previous frame.

The following features can be further incorporated in the apparatus, alone or in combination:

- the corresponding content is identified when a numerical value of the region of the current frame differs from the region of the previous frame within a threshold tolerance.
- a datum coding the region of the current frame whose contents corresponds to the same region of the previous frame is entirely zeros.

According to another feature, the motion analysis stage further comprises circuitry and/or software designed to convey a content of one region of the current frame instead of the datum coding motion of the one region.

More particularly, the one region is selected because of a large change in the content of the one region.

According to another feature, the motion is encoded as a spatial displacement between the region of the previous frame and the region of the current frame.

More particularly, the spatial displacement is encoded as a direction and distance.

According to another feature, the above-mentioned apparatus further comprises;

a decoder designed to decode motion coding data produced by the motion analysis stage;
a comparator designed to compare the decoded motion generated by the decoder to a representation of input to the motion analysis stage; and
circuitry and/or hardware controlled by the comparator.

The following features can be further incorporated in the apparatus, alone or in combination;

- the circuitry controlled by the comparator introduces corrections in a representation of the stored motion stored in the decoder.
- the circuitry controlled by the comparator is designed to increase a compression factor of the apparatus by introducing noise into the compression of the video.
- the circuitry controlled by the comparator suppresses a motion coding datum, and replaces it with a less-encoded datum for a corresponding portion of the video.

In another embodiment, the apparatus further comprises;

a wavelet coder upstream of the motion analysis stage.

According to another feature, the apparatus further comprises a run-length coder downstream of the motion analysis stage.

More particularly, the motion analysis stage analyses a luminance channel of the video.

According to another embodiment, chrominance channels of the video are not analysed in the motion analysis stage.

In an alternative embodiment, chrominance channels of the video are compressed based on the analysis of the luminance channel.

More particularly, chrominance channels of the video are compressed according to an intensity change during the stage that analyses the luminance channel.

The invention also concerns an apparatus for processing digitally encoded video, comprising:

a buffer of size at least one frame plus 2n lines plus 2n+1 pixels, where n is a maximum amplitude of motion encodable in pixels in the buffer; and
circuitry and/or software designed replace pixel values in a current video frame at least partially stored in the buffer with pixel values from a previous frame at least partially stored in the buffer, according to motion encoded in the current contents of the buffer.

Embodiments of the invention may offer one or more of the following advantages.

Video may be compressed more efficiently - a given number of bits will present a better picture quality (better preservation of fine detail, and without the blocking or "quilting" effect of known video compression algorithms), or a given picture quality may be obtained with a higher compression factor. The system becomes operational very rapidly after power-up, in particular after three video signal frames, whereas prior systems must wait for approx. twelve frames before becoming operational. The reliability of compression may be enhanced because the original pre-encoding video signals are reconstructed, upon completion of the coding and before final compression of the digital video signals.

The improved compression enabled by the invention may be used to extend the recording capacity of a recording medium (for instance, CD, a laser disc, a CD-ROM, a CDC-ROM, a DVD-ROM, or any other type of optical storage medium, magnetic tape, magnetic hard or floppy disk), or the channel capacity of a video channel (for example, satellite transmission, cable, Hertzian relays, telephone lines, for distribution of cinema or video films, electronic games or an interactive system). Generally speaking, the invention can be applied in the various communication systems, computers, entertainment systems (such as video games and karaoke), education and learning system, cameras, camcorders, VCRs, digital video transmitters and receivers, and more generally in any digital data transmission or recording system. A given recording medium may hold a longer program, or a given length of program may be stored with higher picture quality.

The compression occurs in nearly real time, generally with about two or three frames' latency.

The invention may enable a picturephone system between two stationary or mobile sets. Each picturephone set carries out compression and reconstitution of video for transmission between the two. The compressed video may be transmitted over a low-bandwidth channel such as a conventional telephone line, and the reproduced pictures will retain very good quality, for instance, for videoconferences. Compression and/or decompression in real time, enabled by the invention, will find special utility in such real time applications. The output is available immediately (rather than after being stored for off-line processing, as would be available for producing a recorded form), and the compression latency is reduced compared to known compression systems.

The system may be used to compress digital video signals from various sources, such as a digital video camera, an analogue video camera followed by an analogue-to-digital converter, a cinema film reader that transmits digital video signals (either directly or via an analogue-to-digital converter), a video cassette recorder or a digital output computer, a compact disc, a laser disc, a DVD, a picturephone (telephone with video camera), fixed or portable, a digital video signal with image sequence, a video signal from a data processing device (PCI interface, U.S.B, Firewire). The camera may consist of any video camera, including a micro-camera, a MOS imager or a CCD with its associated electronics on an electronic chip. The signals can be in various video systems, such as PAL, NTSC, SECAM, HDTV (high fidelity television), in black and white or colour. The system may be used to distribute video, for instance cinematographic films, for example by satellite to theatres from a broadcasting centre.

After compression and decompression, the decompressed signals may be used for the same purposes as the original video signals, including display on the screen of a television set, a monitor, a computer, a fixed or portable picturephone.

The above advantages and features are of representative embodiments only, and are presented only to assist in understanding the invention. It should be understood that they are not to be considered limitations on the invention as defined by the claims, or limitations on equivalents to the claims. For instance, some pairs of these advantages are mutually contradictory, in that they cannot be simultaneously present in a single embodiment. Similarly, some advantages are applicable to one aspect of the invention, and inapplicable to others. Thus, this summary of features and advantages should not be considered dispositive in determining equivalence. Additional features and advantages of the invention will become apparent in the following description, from the drawings, and from the claims.

I - Overview

Referring to Fig. 21, compression-decompression system 100 takes a conventional video stream VN as input, and recodes it into another form VC that takes fewer bits to represent. The recoding takes advantage of the fact that most of the time, for most pixels of most frames, the colour of each pixel is identical to the colour value of the corresponding pixel of the previous frame. Most of the pixels that differ reflect movement, and therefore the value of a pixel that changes frame-to-frame is a copy of a different but nearby pixel in the previous frame.

In one embodiment, one stage in the compression channel (the GVPP stage 300 of Figs. 24-26) determines these associations, and produces a coding that shows the movement of corresponding pixels from one frame to the next. For each pixel, the coder stage produces an eight-bit packet that either tells (a) that the pixel is unchanged from the previous frame, (b) which nearby pixel of the previous frame to look into to find the new value for the current frame, or (c) the absolute pixel value for the new frame.

In another implementation, immediately upstream of GVPP stage 300 of the coder is a coder stage such as wavelet filter 110. Just as most pixels are stationary from frame to frame, most of the coefficients output by the upstream wavelet filter 110 are stationary from frame to frame, and most of the changes in its output are small increments or decrements. GVPP stage 300 outputs 8-bit packets that show the values of the changes.

The encoding form produced by GVPP stage 300 is selected so that most of the bits output by GVPP stage 300 have the value of Zero. Downstream of GVPP stage 300 is a run-length coder 112, which compresses the large blocks of Zeros out of the final form of the compressed video representation.

Within this disclosure, the term "frame" may refer to either a non-interlaced frame, or a single field of an interlaced pair. In the latter case, "previous frame" or "next frame" will usually refer to the field two fields before or after the current frame.

As is known in the art, video signals are interpreted relative to a number of clock signals. For clarity, these clock signals are omitted from the diagrams and the discussion.

The colour of each pixel is typically encoded as a triplet of numbers. Without loss of generality, in the primary embodiment discussed in detail in sections II and III below, each pixel is encoded as a luminance/red/blue triplet, with each component encoded in eight bits. Each of the three numbers is processed separately, in a separate channel of the apparatus. Only the luminance channel is encoded using GVPP stage 300 discussed below, and the red and blue channels are encoded using conventional coding techniques. (It should also be noted that a typical video stream has an associated audio channel. The audio channel is handled by a separate mechanism, which is beyond the scope of this disclosure.)

II - Compression

A - Overall structure

Referring to Fig. 21, compression-decompression system 100 includes a compression channel CC and decompression channel CD. Much of the hardware is shared between the two channels. Compression-decompression device 100 may operate as a compression coder, taking input signal VN to generate compressed output VC, or as a decompression decoder, taking compressed video as input compressed video VC1 to produce decompressed signal VN1.

Wavelet filter 110 operates on compression channel CC (upper portion of Fig. 21) to encode signal VN to produce wavelet-coded video VW. Wavelet filter 110 operates in decompression channel CD (lower portion of Fig. 21) to reconstruct output digital video signal VN1 from an input wavelet-coded signal VW1.

GVPP stage 300 analyses, encodes and decodes movement. In compression channel CC, GVPP stage 300 takes as its input signal VW output by wavelet filter 110 and produces motion-coded video VM. In decompression channel CD, GVPP stage 300 decodes and reconstructs movement, taking as input signal VM1 and producing as output signal VN1 to be fed to the input of wavelet decoder 110.

Downstream of GVPP stage 300, compression-decompression device 100 includes adaptive quantifier 114, run-length coder (RLC) 112 and Huffman encoder 116 in series. These three units 114, 112, 116 operate in conventional manner in the compression channel CC (upper portion of Fig. 21) to compress the signal, as illustrated by the arrows from left from right of the upper half of Fig. 21. Units 114, 112, 116 operate in reverse direction in the decompression channel CD (lower portion of Fig. 21) to decompress the signal, as illustrated by the arrows from right to left in the lower half of Fig. 21.

Each of these components will be described further, below.

B - Wavelet filter 110

The first stage in compression channel CC is wavelet filter 110. Wavelet filter 110 receives ordinary video input VN, for instance from a video camera or other video source 120. Wavelet filter 110 operates in conventional fashion, to alter ordinary video VN into a sequence of signals VW that preserves the information content of the original video, but rearranges it into a form more suitable for numerical processing, and renders it somewhat distorted for viewing purposes. Wavelet filter 110 only performs an encoding, without any compression of the total number of pixels, or total number of bits encoding the video. At an informal, intuitive level, the wavelet filtering 110 identifies edges in the picture, and identifies zones of uniformity. In the uniform zones, the output of wavelet filter 110 is largely Zeros. Wavelet filtering is described in «A video compression circuit using wavelets» by Patrick Butler in «Electronique», April 1997 issue (n° 69), pages 51 to 59; the product literature for the «ADV 601» of the Analogue Devices company of the United States; the product literature of VisioWave, a French company; an article in «Electronique International» of 15th October 1998, page 42; «Wavelet analysis» by Yves Meyer, Stéphane Saffard and Olivier Rioul in «Science», September 1987 issue (n° 119), pages 28 to 37; «Wavelets: an alternative to the Fourier analysis» by Philippe Corvisier in «Electronique», April 1997 issue (n°69), pages 47 to 50; volume 1999 of the magazine «Science au présent» published in Autumn 1998 by Encyclopaedia Universalis, pages 258 to 270.

In one configuration useful in compression-decompression device 100, wavelet filter is a bi-orthogonal 7-9 wavelet transform 7-9, using seven stages of high-pass filters and low-pass filters with taps between each stage, producing a 14-pane Mallat representation, as described in the ADV 601 product literature. Typically three wavelet filters in parallel encode all three channels (luminance, red and blue).

C - GVPP stage - inputs and outputs

Downstream of wavelet filter 110, GVPP stage 300 coder operates on data arranged in an array whose size corresponds to the size of the original frame, but whose individual data are frequency components reflecting a region of the original frame, rather than magnitude values of pixels of the frame. Nonetheless, the data are conveniently referred to as "pixels."

Referring to Fig. 22, GVPP stage 300 takes as input a wavelet-coded value for each pixel, and produces as output an eight-bit packet for each pixel (for each of the luminance, red, and blue channels). Each eight-bit packet has the form

| a | b | c | d | a is one bit, b is one bit, c is three bits, and d is three bits. The a bit tells how to interpret the rest of the packet, whether the eight-bit packet encodes a small change or a large change, as described in the following paragraphs. The b bit distinguishes between packets that encode stationary pixels from pixels that moved between frames. In the case of a movement packet, the c field describes the distance of the movement. Since c is three bits, the values can range from zero to seven. Because the "zero distance" case is covered by the b bit, a c value of zero indicates one pixel of motion, a c value of one indicates two pixels' motion, etc. The d field indicates direction of motion.

When a is Zero and b is One, the packet encodes a small movement change. Three-bit group c encodes a quantified amplitude of this pixel's movement from the previous frame, and three-bit group d designates a Freeman-coded direction of movement. (The Freeman code assigns the value "0" to "right," "1" to 45° diagonal up and right, "2" to "up," "3" to 45° diagonal up and left, and so on to "7" to diagonal down and right. These eight directions can be coded in three bits.) When b is One, a c value of Zero may encode the first quantification level of the displacement amplitude.

When a and b are both Zero, then c and d are assumed to also be Zero. This indicates a stationary pixel - a pixel in which the corresponding pixel underwent no change.

When a is One, the packet encodes a large change in the VW input (a large change in the respective frequency component in luminance). The remaining seven bits of the packet is the actual value of the VW input, with no encoding. This type of packet will typically encode a scene change or beginning of a shot (where nearly every pixel's value changes by a large amount), or where the lighting is changing so that the value of nearly every pixel changes, or a frame with motion too rapid to be quantified in three bits of c, or a pixel that moved in a direction not characterisable in the 45° resolution of three bits of d.

This encoding has the following effect. When a pixel is stationary, the entire 8-bit group is encoded as eight Zeros. Since for most frames, most pixels are stationary, converting most pixels to Zeros allows the downstream stages 114, 112, 116 of the encoder (particularly run-length coder 112) to be very effective in compressing the result. This effect will be especially pronounced in animated pictures, where relatively large panels are coloured in a single colour, without much shading or fading.

When a frame exhibits a large change from one frame to the next in a large percentage of pixels, then the result of GVPP stage 300 is simply discarded for that frame (except to add a marker to the frame indicating that GVPP coding was omitted). For these frames, the output of wavelet stage 110 is passed directly to compression stages 114, 112, 116. (Note that a value of One in the a bit of a packet encodes a large change in one pixel; this paragraph addresses the case when a large portion of the pixels would be coded with a equal to One.) The threshold for shutting off GVPP stage 300 can be adapted to a favourable value, typically in the range of 30% to 40% of all pixels. A bit in the data header for a frame of VM data indicates whether GVPP stage 300 was enabled or disabled. During decompression, GVPP decode stage 300 is disabled for frames marked as GVPP-disabled.

D - GVPP stage 300 - structure and operation

Referring to Fig. 23, GVPP stage 300 takes video input VW and produces compressed motion analysis output VM. GVPP stage 300 identifies zones in the current frame that differ from the corresponding zone of the previous frame, but whose content is related to the content of nearby regions in the previous frame. In the decompression channel, GVPP stage 300 takes compressed motion analysis VM1 as input on port 17 and produces decompressed data (though still wavelet-coded) VW1 to be decoded by wavelet filter 110, where the content of data streams VM and VM1 are of the form shown in Fig. 22.

In overview, GVPP stage 300 operates as follows. GVPP core 310 and delay FIFO 320 receive signal VW from wavelet filter 110. GVPP core 310 attempts to match each pixel with either the corresponding pixel of the previous frame or a nearby pixel of the previous frame. If GVPP core 310 is successful, the result of this determination is output from GVPP core 310 as signal 322. Signal 322 is the proposed encoding to be emitted as output VM; the remainder of stage 300 is directed to determining whether to emit proposed encoding 322 as the final encoding VM or whether to revert back to the input VW. Proposed encoding 322 consists of the seven bits | b | c | d of the eight-bit packets discussed in section II.C, which convey the direction and displacement of pixels that moved from the previous frame to the current frame. Delay FIFO 320 applies a two-frame delay to signal VW equal to the processing time in GVPP core 310, generating signal VW(Y)". Delay FIFO 320 is also tapped in its middle, to supply a one-frame delay to generate signal VW(Y)'. Thus, if GVPP core 310 was successful, proposed encoding 322 carries the motion-coded (and delayed) version of signal VW, and simultaneously, VW(Y)" carry the non-GVPP-coded (though delayed) signal VW(Y) for the corresponding bit. Thus, packet formation unit 370 need only select the appropriate representation from between proposed encoding 322 or VW(Y)", and prepend the appropriate a bit to form the correct | a | b | c | d | packet for the pixel. This selection is based on whether the output 322 of GVPP core is correct, as determined by motion decoder 400 and threshold comparator 360, and whether counter-comparator 340 determines that the frame contains a scene change. A stream of | a | b | c | d | packets, one for each pixel, is emitted to form signal VM as the output of GVPP stage 300, to be forwarded to compression stages 114, 112, 116.

Fig. 23 uses the conventional notation for a multi-bit bus, a slash through a bus line with the number of bits, i.e. 1, 7 or 8 bits, noted nearby.

The operation of GVPP core 310 is described in detail in French patent application 2.751.772 published 26th July 1996, and PCT patent application WO 98-05002 published 22nd July 1997, both of which are incorporated herein by reference. In overview, GVPP core 310 includes a spatial processor 312, a temporal processor 314, and a histogram processor 316. Spatial processor 312 discerns spatial interrelationships among the pixels of a frame, and temporal processor 314 discerns interrelationships among the pixels of successive frames.

Referring again to Fig. 23, the luminance component of VW, VW(Y), arrives at movement analysis and calculation GVPP core 310. GVPP core 310 analyses the pixels of the current frame relative to the pixels of the previous frame to deduce the existence of a relative movement and, in case of a movement, the size and the direction of this movement. GVPP core 310 generates a seven-bit proposed encoding 322 for each pixel, of the form | b | c | d | described in section II.C. These seven bits describe whether there is a limited movement or not and, in case of a limited movement, the amplitude and the oriented direction of the movement.

The processing in GVPP core 310 imposes a delay on luminance component Y, an amount of time r. Motion decoder 400 imposes a second one-frame delay. In order to maintain the synchronisation of the luminance, red and blue channels, delay FIFO 324 is generates a one-frame delayed copy 326 of proposed encoding 322, and delay FIFOs 328r, 328b are inserted in the red and blue channels, to apply a delay r+1. Therefore, signal 326 (the delayed motion analysis output from GVPP core 310), signal VW(Y)" (a delayed copy of the wavelet-coded luminance data), signal VW(R)" output of delay FIFO 328r and signal VW(B)" output of delay FIFO 328b (a delayed copy of the wavelet-coded chrominance data) are synchronised to each other, each delayed by r+1 relative to signal VW input to GVPP stage 300.

Counter-comparator 340 counts the number of pixels for which a is One, that is, large-movement pixels that could neither be coded as direct copies of the previous frame, nor as pixels that moved from the previous frame. Spatial analysis portion 312 of GVPP core 310 produces signal DP when it fails to find a way to describe the motion of a pixel. Thus, counter-comparator 340 simply counts the number of pixels for which DP is asserted. At the end of each frame, the count of counter-comparator 340 is compared to a threshold value, typically a value in the range of 30% to 40% of the pixels in the frame. The result of this comparison is output at the end of each frame as signal 342. The threshold for counter-comparator may be hard-wired into the device, it may be programmable, or it may be set by continuous adaptation.

Proposed encoding 322 is supplied as an input to motion decoder 400. Motion decoder 400 performs the inverse function of the motion encoding imposed by GVPP core 310, and is discussed in detail in connection with Figs. 24a-24b. During encoding, motion decoder 400 decodes proposed encoding 322 to produce decoded signal 350. Decoded signal 350 should nearly repeat the original non-GVPP-coded luminance component VW(Y) that was received from wavelet filter 110. Threshold comparator 360 receives two inputs - decoded signal 350 reconstructed by motion decoder 400, and the original wavelet-coded signal VW(Y)' direct from wavelet filter 110 (though delayed by delay FIFO 320).

Threshold comparator 360 compares the decoded luminance signal 350 to the original luminance VW(Y)" for each pixel, with two tolerance limits, an underflow tolerance limit and a maximum error tolerance limit. The tolerance limits reflect a trade-off between an acceptable level of noise and a degree of compression desired. Larger tolerance limits result in greater compression, but more signal degradation. The underflow tolerance limit is the amount of change in a pixel that will simply be discarded. For instance, if a pixel changes in luminance from 100 to 101, the change probably reflects noise rather than an actual change in the image received. In order to improve compression, this change may be discarded. The maximum error tolerance bounds the amount of accumulated error that will be tolerated. For instance, in a video of a sunrise, each pixel gradually gets brighter. If the single-unit changes are all discarded, the entire brightening of the sunrise will be lost. When the total accumulated error exceeds the maximum error tolerance, this limit will be exceeded, and a replacement pixel at the new luminance will be emitted in output signal VM.

The comparison between decoded luminance signal 350 and original luminance VW(Y)" against the two thresholds is performed on an absolute value basis, that is, the comparison is made as follows:

| decoded luminance 350 - luminance VW(Y)" | < threshold

The two tolerance limits may be hard wired, programmable, or adaptively computed. Error signal 362 is asserted or deasserted to reflect whether the absolute value error between reconstructed signal 350 and VW(Y)" is within the underflow threshold. Similarly, error signal 364 reflects whether the absolute error is within the maximum error tolerance.

Now, all of the information is available that is required to form output signal VM in packet formation unit 370.

Multiplexer 372 takes error signal 362 as its selector input. If compare 360 determined that the pixel changed by less than the underflow threshold, then proposed encoding 326 (the delayed output of GVPP core 310) is discarded for this pixel, and the pixel is replaced by a | 0 | 0 | 0 | 0 | packet. Output 374 of multiplexer 372 is thus either the | a | b | c | d | packet proposed by GVPP core 310, or a | 0 | 0 | 0 | 0 | packet requested by the underflow threshold.

Multiplexer 380 determines whether to emit packet 374 (a packet whose a bit is Zero) or the non-encoded signal VW(Y)" (a packet whose a bit is One) as output VM(Y). Error signal 364 (whether the maximum error tolerance has been exceeded between reconstructed signal 350 and delayed signal VW") is OR'ed 382 with error signal 342 (the gross frame threshold error from comparator-counter 340). The sum 384 of OR 382 is used as the select input to multiplexer 380 to select between signal 374 (the output of multiplexer 372) or signal VW(Y)' to emit as signal VM(Y). Sum 384 of the OR is materialised as a bit of the packet. Thus, if the OR sum is Zero (indicating that the error 364 for this individual pixel is acceptable and the frame's GVPP failure threshold was not exceeded), then a packet of the form | 0 | b | c | d | is emitted as the final output VM(Y). Else, if the OR sum 384 is One, then a packet is emitted of the form «| 1| (seven bits of luminance VW" straight from wavelet filter 110) |» is emitted.

The effect of GVPP stage 300 is to increase the number of consecutive Zeros in its output VM relative to its input VW. In many cases, up to 95% of the pixels in a typical frame show no motion, and are converted to a packet of the form | 0 | 0 | 0 | 0 |. Consequently, the compression in the downstream stages 114, 112, 116 of the compression channel CC of the compression-decompression device 100 is more effective than compression coders of the prior art.

E - Adaptive quantifier 114, run-length coder 112, and Huffman coder 116

Units 114, 112, 116 are of known type, as described, for instance, in the Meyer and Butler articles in «Electronique» and the ADV and C-Cube product literature mentioned above.

III - Decompression

Referring again to Fig. 21, decompression channel CD of the compression-decompression assembly performs the reverse operation of the encoding process performed in the compression channel, as shown by the right-to-left arrows in the lower half of Fig. 21.

Wavelet stage 110, adaptive quantifier 114, RLC coder 112, and Huffman coder 116 perform in the conventional manner. Further details of these stages can be obtained in the prior disclosures mentioned above.

Referring to Figs. 24a and 24b, motion decoder 400 may be used as one stage of reconstruction of a picture, to decode the compressed video.

A - A hardware embodiment of GVPP decoding stage 300

Circulation of one frame's worth of pixels through motion decoder 400

Fig. 24a is a detail of motion decoder 400 shown as a single block in Fig. 23. Motion decoder 400 takes as its input signal VM1 (alternatively, proposed encoding 322 of Fig. 23), which consists of packets of the form | a | b | c | d |, discussed above in section II.C, and produces output VW1 (which is also reconstructed signal 350 of Fig. 23).

At a gross level, motion decoder 400 is a FIFO 410 eight bits wide and of depth equal to the number of pixels in one frame, plus sixteen lines, plus seventeen pixels. Pixels enter at the top left of FIFO 410, and progress left-to-right through the first row 4121. At the right end of row 4121, each pixel reenters the left side of FIFO 410, in second row 4122, and so on, through row 412525. (525 rows would be used in an embodiment for NTSC video, where there are 525 scan lines in two fields of a frame. Other video formats would use more rows, so that an entire frame fits.) The square matrix continues for sixteen more lines 4141-41416 plus seventeen pixels (or seventeen full rows, if that is easier to manufacture). The output of FIFO 410 is at tap 420 at the end of line 412525. The additional lines 4141-41417 are provided to memorise enough of the previous field so that the motion vectors generated by GVPP encoding stage 300 can be decoded.

The clock rate of FIFO 410 is the pixel rate, about 73 ns for NTSC or PAL, and proportionally faster to reflect the higher pixel density and refresh rates for HDTV or computer video. Nearly all of the cells of FIFO 410 are simple FIFO storage cells, each holding an eight-bit pixel packet for one pixel clock time, and then passing the pixel on to the next stage at the next clock. Sixty-six special stages in the FIFO 410 have processing capabilities, as described in detail below.

Cell 422, the eighth cell in the eighth row, is where the decoding takes place. The FIFO cells to the left of and in the rows above cell 422 hold eight-bit motion coding vectors of the | a | b | c | d | form of section II.C. FIFO cells to the right of and in all rows below cell 422 hold decoded data in the form it was received by GVPP stage 300 during coding.

The number of rows 412 after output tap 420 is 2n+1 lines, where n is the number of levels for quantifying the amplitude of pixel displacements used in GVPP core (310 of Fig. 23).

Modification of pixels in motion decoder 400 to decode encoded motion

Referring to Fig. 24b, the sixty-six exceptional cells in FIFO 410 relate to the sixty-four pixels in the previous frame from which motion can be coded in six bits of | c | d |, a sixty-fifth for the pixel in the previous frame from which a pixel can be copied with no motion, and a sixty-sixth pixel for the pixel in the current frame into which the pixel is copied.

Radiating from a cell 430 in the ninth row of the bottom portion of FIFO 410 are the eight-cell diagonal, vertical and horizontal semi-axes (corresponding to the eight directions of the Freeman code) 4320, 4321, 4322, 4323, 4324, 4325, 4326, 4327. Among a first group of eight multiplexers 4360, 4361, 4362, 4363, 4364, 4365, 4366, 4367, each multiplexer is associated with one of the semi-axes 4320-7, or, equivalently, with a value of | c |. Each one of multiplexers 4360-7 takes as its inputs the eight cells lying on the corresponding semi-axis 4320-7, and as its selector input, the value of | d |. The value of d is used to select the value of the appropriate pixel from the semi-axis. Another multiplexer 438 takes as its inputs the outputs of the eight multiplexers 4360-7, and as its selector input, the value of | c |. Thus, the output of multiplexer 438 is the value of the pixel from the previous frame encoded in the value of | c | d | of the current packet. Another multiplexer 440 selects between centre pixel 430 and the pixel selected by multiplexers 4360-7, 438, decoding the value of | b |. Another multiplexer 442 selects between the datum in the packet and the pixel that has been selected by multiplexers 4360-7, 438, 440, decoding the value of | a |. Thus, this tree of multiplexers decodes the value of | a | b | c | d |, and either finds the correct pixel in the previous frame to copy into the current frame, or copies the seven-bit datum from the packet into the current frame.

In order to allow the multiplexers to operate at the rate of the pixel FIFO, the bits of each packet to be decoded are tapped from a cell in row 4129 upstream from cell 422. Thus, the three bits of c are tapped three pixel times before cell 422, the three bits of d are tapped two pixel times before cell 422, and the two bits of a and b are tapped one pixel time before cell 422. Similarly, the data from the previous frame is tapped three or four pixel times before it is to be used to update cell 422. Therefore, for instance, centre cell 430 is not the ninth cell in row 4188, but the sixth.

When a is One, the packet instructs that the seven bits of | b | c | d | are to be copied directly from the packet to the output. Multiplexer 442 takes the a bit as its select input; when a is One, the input received as VM1 or 322 is copied directly to the output.

When a and b are both Zero, then the pixel underwent no change, and the value of the corresponding pixel from the previous frame should simply be carried forward into the current frame. In this case, multiplexers 442 and 440 will select pixel 430 from the portion of FIFO 410 that currently holds the previous frame.

When a is Zero and b is One, the packet encodes a small movement change (recall that c encodes a magnitude and d encodes a direction). With these | c | d | selector inputs, multiplexers 4360-7, 438 select the proper bit 4320-7 of the previous frame. This copying of a pixel from a different position in the previous frame to the current pixel of the current frame implements the "movement" that was encoded during compression encoding by GVPP core 310.

IV - The remainder of decompression channel CD

Referring again to Fig. 21, decompression channel CD includes Huffman encoder 116, RLC coder 112 and adaptive quantifier 114, each operating in its decode mode. Starting with compressed signal VC1 applied to the decompression input of device 100, decompression assembly 114, 112, 116 produces a signal VM1 whose structure is similar to that of signal VM, in which the luminance component is represented by an eight bit packet of the | a | b | c | d | form discussed in section II.C.

Signal VM1 is decoded in GVPP decoder stage 300 as discussed above in section III.A in connection with Figure. 24a and Figure 24b. GVPP decode stage 300 outputs signal VW1, wavelet-coded data nearly identical to the VW data that were originally received at GVPP coder stage 300.

Signal VW1 is accepted by wavelet decoder 110. Wavelet decoder 110 operates in the conventional manner to produce its output VN1, fully reconstructed and decompressed video, to be used in the same way as original video signal VN. The reconstructed video may be recorded, for instance, on a conventional video device, such as VCR, a CD, a CD-ROM or a DVD. Correction in motion decoder 400 during encoding

In overview, the correction feature of motion decoder 400 works as follows. Since each pixel of the current frame is encoded relative to the previous frame, and each step in the encoding potentially introduces noise (particularly, compare unit 360 which potentially introduces noise by allowing small changes to underflow to zero), a "reference copy" is maintained. This reference copy shows how the previous frame will be decoded the final decompressed video VW1 that will ultimately emanate from GVPP decoder stage 300, rather than the original decompressed video VW. The reference copy is compared to the original. If the two drift from each other, the proposed encoding 322, 326 of the video can be discarded, and an «| a | equal One» "correction pixel" can be inserted so that noise errors do not accumulate.

Referring again to Figs. 24a and 24b, when multiplexers 372, 380 replace a packet value in output stream VM(Y), the content of decoder FIFO 400 should be updated so that future error computations in comparator 360 are correct. Recall from Fig. 24a that the content of row 4129 to the right of pixel 422 and the content of all rows 41210-412525 is stated as pre-GVPP-coded form (encoded in the form produced by wavelet coder 110). The content of row 4129 to the left of pixel 422 and the content of all rows 4121-4129 is stated in GVPP-coded form (the | a | b | c | d | packets emitted by GVPP core 310).

When correction signal 392 (the OR of error signals 362, 364 and 384, any one of which indicates that the output 322 of GVPP core 310 was not the sole basis in forming the final output VM(Y)), then the current content of FIFO 410 is incorrect. In the FIFO cells immediately downstream of cell 422, the appropriate correction is applied. For instance, if the final packet in VM(Y) was of the form | a | equal One, for instance because of packet replacement by multiplexer 380, then the pixel value in FIFO 410 is simply replaced with the value from the | b | c | d | portion of the packet. If the final packet in VM(Y) was of the form | a | b | equal | 0 | 0 |, for instance because of packet replacement by multiplexer 372, then the value in row 4129 is replaced with the corresponding value from row 4189 (the decoded value of the corresponding pixel in the previous frame).

Alternative embodiments

Alternative coding of pixels

A number of three-number encoding systems for pictures or video are known - luminance, red, and blue (designated Y, Cb, Cr), red, green, blue (RGB), cyan, magenta, yellow, etc. The coding may be Cartesian, as these examples, or polar, such as in luminance, tone and saturation, or hue, saturation and value (HSV) coding. The different colour encodings are equivalent to each other, in the sense that a picture coded in one encoding can easily converted to another encoding by known mathematical equations (see for instance, U.S. Patent No. 5,483,259). The invention is applicable to any of these coding systems.

Referring to Fig. 25, the motion values from 0 to 127 (the seven bits of | b | c | d |) may be used to encode motion in a number of different ways. It remains desirable that value 0 always encode "stationary motion," but the other 127 values may be deployed in ways other than the distance and direction coding discussed above. For instance, Fig. 25 shows a mapping of the values from 0 to 120 onto the 17x17 neighbourhood surrounding a pixel, with at most one pixel error. GVPP core 310 may be programmed to detect motion of a pixel to any of these 120 locations (and to accept one pixel errors for those pixels that are not perfectly mapped), and to produce the corresponding value as output. A corresponding change would be made in motion decoder 400. Modifications within GVPP stage 300

Referring again to Fig. 23, in one alternative embodiment, GVPP core 310 may generate an eighth bit DP corresponding to the a bit, telling whether or not GVPP core successfully analysed the motion of the current pixel. That eighth bit DP may be used as the select input 384 to multiplexer 380 to select between signals 322 and VW(Y)" to form signal VM'. In this alternative embodiment, counter-comparator 340 and the cross-check in motion decoder 400 may be omitted, and packet formation unit 370 may rely strictly on signal DP to determine whether to produce a packet using the motion coded proposed encoding 322 (| a | b | equal to | 0 | 1 |), or using the uncoded signal VM' (a equal to One). In these embodiments, delay FIFO's 320, 328r, and 328b may be one frame time shorter. Under this approach, the additional compression enabled by underflow threshold comparison 360, 362 is not exploited.

In some embodiments, the delayed chrominance signals VW(R)" and VW(B)" are passed straight through as the chrominance outputs of GVPP stage 300. In other embodiments where more compression is desired, and more noise is tolerated, the luminance channel may be used as a proxy for the chrominance channels. When the luminance portion of GVPP stage determines that a pixel is stationary (a packet of the form | 0 | 0 | 0 | 0 |), then that determination can be used in boxes 390r and 390b to replace the chrominance data VW(R)" and VW(B)" with a packet that indicates that the previous pixel is to be copied. The run-length coder will compress these packets as well.

In another embodiment, the red and blue chrominance channels are also directed through GVPP core 310. Histogram processor 316 is programmed to compute the amount of colour change in each of the chrominance channels. For instance, for each pixel, a change of one colour unit might be recorded as no change so that any information about the pixel can be compressed away. If the pixel changes by a relatively small amount, the histogram processor can compute the amount of the change (positive or negative), and produce a packet describing the change.

In other embodiments, two GVPP cores 310 are inserted in the red and blue chrominance channels, so that full motion analysis can be performed on the chrominance channels, in a manner analogous to the motion analysis discussed above for the luminance channel.

In some embodiments, error signals 362, 364 and 384 are used to generate a correction signal 392 whereby data from VW" are inserted into motion decoder 400 to correct errors. This feature will be discussed in detail in section IV, after the primary discussion of motion decoder 400.

The French 2 751 772 and PCT WO 98/05002 patent applications describe a process of smoothing the value a pixel using a time-constant. This feature of GVPP core 310 is very useful in detecting motion, but in the context of video compression, it is to be used with caution in the temporal processing of individual pixels. The smoothing feature may be enabled in video compression in applications where it is known that most of the time-related variation of a single pixel is related to noise. (Noise variation is suppressed by an alternative mechanism, comparator 360 and multiplexer 372, described below.) However, by suppressing noise in stationary regions of the picture, this feature will tend to introduce lag noise in portions of the picture that are changing. In any event, the smoothing time constant should be very short, carrying information forward by only one frame.

The smoothing process can be very useful, however, in spatial processing. The smoothing process can be used to recognise regions of uniformity, and to recognise movement of the edges of these regions. This information can be determined from, and controlled by, the DP and CO outputs of GVPP core 310, as described in the above-mentioned French and PCT applications.

Alternatives in the stages of compression-decompression device other than GVPP stage 300

In the embodiment discussed in detail in sections II and III above, only the luminance channel of a luminance/red/blue encoding is compressed using a GVPP coder. In an alternative embodiment, the apparatus shown in Figures 21-24 may be replicated three times in a system, one channel for each of the three channels for each pixel, or as shown in Fig. 23, the channels may differ.

Similarly, the decoding apparatus may be implemented once, for only the luminance channel, or may be replicated three times in parallel, one for each of the three channels (luminance, red, and blue, or red, green and blue, or hue, saturation and value, etc. depending on the encoding).

GVPP stage 300 has been illustrated in a system with wavelet filter 110, adaptive quantifier 114, run-length coder 112, and Huffman coder 116. GVPP stage can be used in other pipelines as well. For instance, GVPP stage 300 may be used as the first stage of the compression process, working directly on the unencoded video. Alternatively, a Fourier transform or DCT coder may be used upstream of GVPP stage 300. Similarly, other coders may be used downstream of GVPP stage 300 to replace assembly 114, 112, 116.

An alternative that modifies both GVPP stage 300 and wavelet filter 110

Referring to Figs. 26a-26d, a modification to wavelet filter 110 and to GVPP stage 300 may be advantageously used with each other.

Referring to Fig. 26a, a conventional wavelet filter is built up of decimators, low pass filters, and high pass filters arranged as a tree or a cascade. Each frame of video is applied at the top left corner, as VN. The blocks labelled "PH(X)" are high-pass filters in the X dimension, those labelled "PH(Y)" are high-pass filters in the Y dimension, those labelled "PL(X)" are low-pass filters in the X dimension, and those labelled "PL(Y)" are low-pass filters in the Y dimension. Circles labelled "X/2" are decimators in the X dimension (the output omits every other X input, thus skipping every other pixel in a scan line), and circles labelled "Y/2" are decimators in the Y dimension (the output omits every other scan line). The output is arranged in a Mallat diagram (Fig. 26b) formed of 14 panes labelled A, B, C, ... M, N, corresponding to the outputs A, B, C, ... M, N along the bottom of the cascade of Fig. 26a.

Referring to Fig. 26c, the variation adds a variant filter 610, which includes only the decimators of conventional wavelet filter 110, and omits the high- and low-pass filters.

Referring to Fig. 26d, in the variation, the luminance component of normal video input VN(Y) is simultaneously applied to both a conventional wavelet filter 110, to produce signal VW(Y) discussed at length above, and to modified filter 610, to produce signal 620. Signal 620 is also arranged as a 14-pane Mallat diagram (Fig. 26b). Signal 620 is applied to GVPP core 310.

Downstream of GVPP core 310 and delay FIFO 320, the remainder of Fig. 23 is unchanged. Similarly, the two chrominance channels are unchanged. Corresponding changes are made in decoder 400.

Software implementations

Decoding of compressed video can be performed in software. For instance, the decoding of GVPP stage 300

**EP 1 110 408 B1**

stores two successive frames of compressed video VM1. (In interlaced formats, at least three fields are buffered. In some video systems, where fields are interlaced in 1-3-2-4 order, five fields at a time may be buffered.) A processing loop visits each pixel (each represented by an eight-bit packet, as discussed in section II.C, above) of the later of the two frames. For a packet whose a bit is One, the seven remaining bits are left intact. For a packet whose a bit is Zero and whose b bit is Zero, the corresponding pixel of the previous frame is copied into the current frame. For a packet whose a bit is Zero and whose b bit is One, the c and d fields of the packet are consulted to identify a pixel of the previous frame whose value is to be copied into the current frame.

The embodiment presented here is implemented in hardware. In current technologies, this is especially appropriate for coding, so that a great deal of parallel recognition processing can be done in parallel. However, the coding process can be done in software, if the time is available to do the compression off-line, or in the future, as generic microprocessors speed up to enable the required processing to be done in real time. Such real time processing will find special value in such picturephone and videoconferencing applications.

Reduced-cost apparatus for special applications

In the embodiment of Fig. 21, the compression and decompression channels are implemented together in a single apparatus. In some applications, it may be desirable to separate them. For instance, in an apparatus for recording signals onto a medium, such as CD-ROM, a DVD, magnetic tape or disk, only the compression channel is required. For a playback-only device, such as a personal video device, a playback-only VCR, a television set for displaying compressed transmission, a computer, a laser-disk player, a CD-ROM player, or magnetic disk playback player, only the decompression channel is required.

Conversely, in a picturephone system, e.g., for videoconferences or over the Internet network, each transmission-reception set should include a complete compression-decompression device with both compression and decompression channels.

Applications

The improved compression-decompression device 100 has a number of applications. Two specific applications are discussed here.

Picturephone and videoconferencing

Referring to Fig. 27, a picturephone system 700 may use compression-decompression apparatus. Each participant in a picturephone conference or videoconference has a picturephone instrument 710, which typically includes a camera and a display monitor. (A picturephone instrument would also typically include a microphone and a loudspeaker for an audio channel, a topic beyond the scope of this discussion.) The signal 712 generated by each picturephone instrument 710 is compressed using compression-decompression device 100 to produce compressed signal 714. Compressed signal 714 is communicated to a communications network 720, which may include telephone lines, cable, Hertzian channels, satellites, microwave links, and the like. When the compressed signal arrives at another remote station, a compression-decompression device 100 is used to decompress the signal for display on a remote picturephone instrument 710.

Compression-decompression device 100 offers higher compression at lower noise compared to the prior art. The compression and decompression occur on-the-fly, in real time. Because compression is accomplished in about three frame times, about 1/10 second, the lag of the video channel relative to the audio channel is reduced.

Recording and playback

Referring to Fig. 28, compression-decompression device 100 may be used in recording of video signals. A source 810 of video, such as a camera, a video disk, or scanner, generates a video signal VN. Signal VN is compressed by compression-decompression device 100 to produce compressed video VC. Compressed video VC may be stored by an appropriate storage device 820 onto its corresponding digital recording medium 822, such as a laser disc, a CD-ROM, a DVD, a magnetic tape, or magnetic hard or floppy disk.

The compression of compression-decompression device 100 allows recording of two hours of video on a single laser disk or DVD, with relatively little noise or distortion.

When device 820 reads medium 822, the digital data VC1 read from medium 822 are applied to decompression channel CD of compression-decompression device 100 to produce normal video VN1. After decompression, normal video VN1 may be displayed on any conventional video device 830, such as a monitor, a television set, a computer, etc. or may be stored on a device that accepts conventional video signals such as a VCR.

**EP 1 110 408 B1**

It should be understood that the above description is only representative of illustrative embodiments. For the convenience of the reader, the above description has focused on a representative sample of all possible embodiments, a sample that teaches the principles of the invention. The description has not attempted to exhaustively enumerate all possible variations. That alternate embodiments may not have been presented for a specific portion of the invention, or that further undescribed alternate embodiments may be available for a portion, is not to be considered a disclaimer of those alternate embodiments. One of ordinary skill will appreciate that many of those undescribed embodiments are within the literal scope of the following claims, and others are equivalent.

**Claims**

1.  A process for compressing input digital video signals and for decompressing compressed binary signals resulting from such a compression, said input digital video signals having at least a luminance component and being formed by a succession of corresponding frames, each representing a video picture and formed by a succession of pixels,

    •   whereas this compression process consists in looking for the displacements and the sudden modifications in the different corresponding pixels, between two successive frames of the input digital video signals to be encoded, and consisting in deducting from the said displacements and from the said sudden modifications, an encoded signal which comprises, for the initial sequence and for each following sequence of the digital signals beginning with a modification in the video picture represented by the said digital video signals, in a given frame with respect to the previous frame,
    on the one hand, at the beginning of sequence, as well as for the pixels suddenly modified in value, at least the said frame or the said pixels of the said digital signals to be encoded, without any modification, and
    on the other hand, throughout the sequence up to the beginning of the following sequence, a succession of correction bit packets,
    said compression process including:

        -   a preliminary encoding operation of the said input digital video signals using a wavelet analysis, favouring the transmission of the contours of the successive pictures represented by the said signals, in order to obtain a succession of mosaic encoded digital signals encoding the said signals in the form of a succession of picture mosaics,
        -   an encoding operation for producing a flow of binary signals from the succession of mosaic encoded digital signals,
        -   a compression operation of the flow of binary signals in order to produce compressed binary signals as to reduce the number of the binary signals by suppression of the majority of the binary signals of the said flow whose value is determined within both possible values of such signals, and

    •   whereas this decompression process consists in decompressing digital signals composed of the compressed binary signals resulting from the said compression process, i.e. comprising for each sequence at least a first digital signals frame, not modified by the said compression process, followed by a succession of correction bit packets,
    said decompression process including:

        -   a decompression operation of the said compressed binary signals which reconstructs the said flow of binary signals before suppression, in the said compression operation, of the majority of binary signals of determined value,
        -   a decoding operation of the said flow of binary signals producing a succession of mosaic encoded digital signals,
        -   a final decoding operation reconstructing, from a succession of picture mosaic encoded type signals, a digital video signals formed by a succession of frames, each made of a succession of pixels,

        **characterised in that**
    •   as the compression process is concerned, it comprises, moreover, at least as regards the luminance component, an additional encoding operation, applied to the succession of picture mosaic encoded digital signals resulting from the preliminary encoding operation, which is sensitive to the displacements of the contours in the said successive pictures and which consists, for each pixel of a frame, said additional encoding operation using:

a) deduction from the said succession of mosaic encoded digital signals of the correction bit packets as packets of binary signals representative of a global modification or not of the pictures between frames and of a displacement or of a non-displacement of the pixel between the frame involved and the previous frames, as well as of the amplitude and of the oriented direction of the displacement, if any, said deduction being done by subjecting the said preliminary encoded digital signals, one frame at a time:

- to a time-related process, in which for each pixel, the value of the said pixel is compared with its previous correct value; smoothed using a «time constant» which is caused to evolve over the course of time to maximise the smoothing, in order to determine two parameters significant of the time variation of the pixel value, parameters which are variable over the course of time and represented by two digital signals, i.e. a first binary signal *DP*, a first value of which represents a threshold overrun determined by the said variation and a second value the non-overrun of this threshold determined by the said variation, and a second digital signal *CO,* with a limited number of bits, representing the instant value, for the said pixel, of the said time constant,
- to a space-related process of the values, for a given frame, of said both digital signals *DP* and *CO* to determine the moving pixels for which simultaneously the said first signal *DP* exhibits the said first value representing the overrun of the said threshold and the said second signal *CO* varies significantly between neighbouring pixels,
- to a process for deducting, for the said moving pixels, the amplitude and the oriented direction of the displacement,

b) a restoration of the position of the pixel if it has been displaced,
c) a check whether the position-restored pixel in case of displacement is in compliance or in non-compliance with the corresponding pixel of the frame involved,
d) a memorisation of the result of this check, and
e) a transfer for compression operation, either, of the said packet of binary signals representative in case of compliance, or of the picture mosaic encoded signals from the said wavelet filter in case of non-compliance; and

- as the decompression process is concerned, it comprises, moreover, a preliminary decoding operation, which is applied to the said flow of decompressed binary signals, and which,

a) causes initially to circulate over a loop, from an input position on this loop, signals of the said flow of the mosaic type corresponding to a first frame of the video signals to be reconstructed and resulting from the said decompression operation, whereas the travel duration of the said signals over the said loop is equal to that of a frame of the video signals to be reconstructed, each signals of a frame circulating normally in the loop as long as no modification and no displacement is signalled in the decompressed binary signals,
b) repositions in the said loop, the pixels having undergone a displacement signalled by a group of digital signals representing, in the flow of decompressed binary signals, the amplitude and the oriented direction of the displacement, also resulting from the said decompression operation,
c) replaces the picture mosaic type signals in circulation over the said loop with the new signals of this type as they arrive,
d) extracts for transmission to the final decoding operation, from an output position on this loop located downstream of the said input position, the picture mosaic type signals circulating in the loop, after possible repositioning of the pixels.

2. A process according to claim 1, **characterised in that** it uses, for the compression and decompression processes,

- the preliminary encoding operation of the succession of the digital video signals into a succession of mosaic encoded digital signals corresponding to the scanning, in each frame, of the Mallat diagram and making up the picture mosaic, using a wavelet filter,
- the compression operation, using a compression-decompression assembly, with an adaptive quantifier, *RCL* type encoder and *CH* encoder, Huffman encoder type, operating in compression,
- the decompression operation, using a compression-decompression assembly, with an adaptive quantifier, *RCL* type encoder and *CH* encoder, Huffman encoder type, operating in decompression,
- the final decoding operation, using a reverse-operation wavelet filter.

3. A process according to claim 1 or 2, **characterised in that** the said preliminary decoding operation causes the said signals to circulate over a loop with a travel duration equal to the duration of a frame of this signals, causes the said signals, during its travel over the said loop, to pass through a pixel position matrix the number of whose rows, on the one hand, and the number of whose columns, on the other, is at least equal to 2n+1, while designating by $n$ the number of levels quantifying the displacement amplitude, whereby the said signals is injected into the said loop at a central position of the said matrix, in bringing back, after running the said first frame of each sequence, within the said central position, a pixel of the said signals, while moving inside the said matrix, which has moved between the frame involved and the previous frame, in relation to the correction bits packet regarding the said pixel, in order thus to restore the successive frames of the sequences as they were before encoding in the encoding operation, and extracts from the said loop, in a position located downstream, in the running direction, of the said central position, the successive frames thus restored.

4. A process according to any one of the claims 1 to 3, **characterised in that** the said packet of correction digital signals comprises for each pixel four groups of signals:

- the first consists of a single binary signal whereby one of both possible values of which represents a global modification of the pictures between a frame and the previous frame and the other value a global non-modification, said first one signalling the necessity of global correction or the non-necessity of such a correction,
- the second consists of a single binary signal whereby one of both possible values of which represents a displacement for the pixel and the other value a non-displacement, and,
- both other two consist of digital signals with a limited number of bits and represent, one the quantified amplitude and the other the quantified oriented direction of the displacement if any.

5. A process according to claim 4, **characterised in that** the additional encoding operation comprises the steps of:

a) encoding the said digital signals, one pixel at a time, in relation to the value variation of each pixel between the frame processed and the previous frames by implementing for each pixel, a block of four digital signals among which

- the first one, which is a binary signals, represents, by both its possible values, either the necessity of global correction or the non-necessity of such a correction,
- the second one, who is also a binary signals, appears exclusively when the said first signals represents the non-necessity of global correction and it then represents, by both its possible values, either a displacement or a non-displacement, and
- the other two, which are both digital signals with a limited number of bits, appear exclusively when the said first signals represents the non-necessity of correction and they then represent, one the quantified amplitude and the other the quantified oriented direction of the displacement in a zone of the composite frame involved;

b) determine whether the proportion, in each successive frame, of the number of pixels for which the said first binary signals has the value representative of a correction necessity with respect to the total number of pixels in the frame, exceeds a determined percentage; and

c) transmitting, one frame after the other, to the said compression operation:

- if the said percentage is not exceeded, the said block of signals related to the pixel affected,
- if the said percentage is exceeded, the mosaic encoded digital signals generated by the preliminary encoding operation.

6. A process according to any one of the claims 1 to 5, **characterised in that** the said preliminary decoding operation uses in the said loop a square matrix whose odd number of lines and whose number of columns are respectively smaller than the number of lines and the number of columns of a frame of the video signals to be reconstructed, whereas both these numbers are greater, at least by one unit, than the number of quantification levels of the said displacement amplitude, and through which circulate the signals from the said decompression operation, and the position of the pixels having been displaced is restored, whereas they are subject in the said matrix to a reverse direction translation whose quantified amplitude and whose quantified oriented direction are specified by the digital values of said both other groups of signals.

7. A device for compressing an input digital video signals having at least a luminance component and formed by a succession of corresponding frames, each representing a video picture and formed by a succession of pixels, as well as for decompressing compressed binary signals in a device of this type, operating in compression,

- whereas this compression and decompression device comprises for the compression:

  - at least one preliminary encoding wavelet filter (11) of the said digital video signals performing a wavelet analysis, favouring the transmission of the contours of the successive pictures represented by the said signals, in order to obtain a succession of mosaic encoded digital signals encoding the said signals in the form of a succession of picture mosaics,
  - an encoding assembly for producing a flow of binary signals from the succession of mosaic encoded digital signals,
  - a compression assembly (13/CP) for compressing the flow of binary signals in order to reduce the number of the binary signals by suppression of the majority of the binary signals of the said flow whose value is determined within both possible values of such signals, and

- whereas this compression and decompression device comprises for the decompression:

  - a decompression assembly (13/DP) for decompressing the said compressed binary signals which reconstructs the said flow of binary signals before suppression, in the said compression assembly, of the majority of binary signals of determined value,
  - a decoding assembly producing a succession of mosaic encoded digital signals,
  - a final decoding assembly composed of a reverse-operating wavelet filter, which reconstructs, from wavelets representing in the form of picture mosaics, a digital video signals, the said digital video signals,

  **characterised in that**

- for the compression, it comprises, moreover, at least as regards the luminance component in the said input digital video signals, an additional encoding assembly (12 A), whose input (20) is connected to the output (16) of the said wavelet filter (11) and whose output (24) is connected to the input (25) of the said compression assembly (13/CP), whereas this assembly is sensitive to the displacements of the contours in the said successive pictures represented by the said succession of encoded signals with mosaic pictures received at the input and comprising, in order to process each pixel of a frame,

  a) means (21) to deduct from the said succession of encoded signals with picture mosaics, a packet of binary signals representative of a displacement or of a non-displacement of the pixel between the frame involved and the previous frames, as well as of the amplitude and of the oriented direction of the displacement, if any, said means being:

  - means (21*a*) for a time-related process, in which for each pixel, the value of the said pixel is compared with its previous correct value, smoothed using a «time constant» which is caused to evolve over the course of time to maximise the smoothing, in order to determine two parameters significant of the time variation of the pixel value, parameters which are variable over the course of time and represented by two digital signals, i.e. a first binary signals *DP*, a first value of which represents a threshold overrun determined by the said variation and a second value the non-overrun of this threshold determined by the said variation, and a second digital signals *CO*, with a limited number of bits, representing the instant value, for the said pixel, of the said time constant,
  - means (21*b*) for a space-related process of the values, for a given frame, of said both digital signals *DP* and *CO* to determine the moving pixels for which simultaneously the said first signals *DP* exhibits the said first value representing the overrun of the said threshold and the said second signals *CO* varies significantly between neighbouring pixels, and
  - means (21*c*) to deduct, from the said moving pixels, on the one hand, the first value, representative of a displacement, for the said second binary signals and, on the other, the digital values of said both other digital groups among the said four groups of digital signals,

  b) means (34) to restore the position of the pixel if it has been displaced,
  c) means (39) to check whether the position-restored pixel in case of displacement is in compliance or in non-compliance with the corresponding pixel of the frame involved,
  d) means to memorise the result of this check, and
  e) means (40) to transfer to the said compression assembly (13/CP) either the said packet of signals representative in case of compliance, or the picture mosaic encoded signals from the said wavelet filter in case of non-compliance; and,

- for the decompression, it comprises, moreover, a preliminary decoding assembly, whose input is connected to the output of the said decompression assembly and whose output is connected to the reverse input of the said wavelet filter, which comprises:

   a) a loop (50-51-52) whose input (34c) receives, from the said decompression assembly (13/DP), the said reconstructed flow of binary signals, which starts with a picture mosaic type signals corresponding to a first frame of the video signals to be reconstructed and which circulates in the form of a picture mosaic type signals, whereas the travel duration of the said signals over the said loop is equal to that of a frame of the video signals to be reconstructed,
   b) means (70) to reposition, in the said loop, the pixels having undergone a displacement indicated by a group of digital signals which represent, in the said reconstructed flow of digital signals, the amplitude and the displacement direction,
   c) means (203) to replace the picture mosaic type signals in circulation in the loop with the new signals of this type as they arrive, and
   d) means to transmit to the final decoding operation, from an output (35) located downstream of the said input position, the picture mosaic type signals circulating in the loop, after possible repositioning.

8. A device according to claim 7, **characterised in that**, for the decompression, the said preliminary decoding assembly comprises:

   - means to cause to circulate normally, in a loop (50-51-52), a frame of the said decompressed signals, but encoded, received from the said decompression portion of the said compression-decompression assembly as long as both binary signals represent simultaneously an absence of correction and an absence of movement,
   - means to replace, in the said loop, the frame in circulation, with a new frame arriving with new pixel values, in case when the binary correction signals indicates the necessity of a correction,
   - means to perform, in a square matrix (50), whose odd number of lines and of columns is smaller than the number of lines and of columns of a frame, whereas both these numbers are greater than, by at least one unit, the number of quantification levels of the said displacement amplitude, and through which circulate the said decompressed signals, a translation operation of the moving pixels within the said matrix from their position to the centre position of pixel in the said matrix, in case when the said first binary correction signals indicates an absence of correction while the said second binary displacement signals indicates a displacement.

9. A device according to claim 7 or 8, **characterised** it comprises means (203) to cause the said digital signal encoded at the input to circulate over a loop (50-51-52), whose travel duration needed by the said signal is equal to the duration of a frame of this signal, means to cause the said signal, during its travel over the said loop, to pass through a pixel position matrix (50) the number of whose rows, on the one hand, and the number of whose columns, on the other, is at least equal to 2n+1, while designating by *n* the number of levels quantifying the displacement amplitude, whereby the said signal is injected into the said loop at a central position (60) of the said matrix (50), means (70) to bring back, after running the said first frame of each sequence, within the said central position (60) a pixel of the said signal, while moving inside the said matrix, which has moved between the frame involved and the previous frame, in relation to the packet of correction bits regarding the said pixel, in order thus to restore the successive frames of the sequences as they were before encoding in the encoding operation, and means to extract from the said loop, in a position (35) located downstream, in the running direction, of the said central position (60), the successive frames thus restored.

10. A video compression apparatus, comprising:

   - a motion analysis stage, comprising circuitry designed to identify a pixel of a current frame of a video whose contents correspond to a different pixel of a previous frame of the video, and designed to produce a datum coding motion between the pixel of the previous frame and the pixel of the current frame; and
   - at least one other video processing stage of circuitry and/or software interconnected with the motion analysis stage to effect compression of the video.

11. The apparatus of claim 10, wherein the motion analysis stage further comprises circuitry and/or software designed to identify a pixel of the current frame whose contents corresponds to the same pixel of the previous frame.

12. The apparatus of claim 11, wherein the corresponding content is identified when a numerical value of the pixel of the current frame differs from the pixel of the previous frame within a threshold tolerance.

13. The apparatus of claim 11, wherein a datum coding the pixel of the current frame whose contents corresponds to the same pixel of the previous frame is entirely zeros.

14. The apparatus of claim 10, wherein the motion analysis stage further comprises circuitry designed to convey a content of one pixel of the current frame instead of the datum coding motion of the one pixel.

15. The apparatus of claim 14, wherein the one pixel is selected because of a large change in the content of the one pixel.

16. The apparatus of claim 10, wherein the motion is encoded as a spatial displacement between the pixel of the previous frame and the pixel of the current frame.

17. The apparatus of claim 16, wherein the spatial displacement, is encoded as a direction and distance.

18. The apparatus of claim 10, further comprising:

> a decoder designed to decode motion coding data produced by the motion analysis stage;
> a comparator designed to compare the decoded motion generated by the decoder to a representation of input to the motion analysis stage; and
> circuitry controlled by the comparator.

19. The apparatus of claim 18, wherein the circuitry controlled by the comparator introduces corrections in a representation of the stored motion stored in the decoder.

20. The apparatus of claim 18, wherein the circuitry controlled by the comparator is designed to increase a compression factor of the apparatus by introducing noise into the compression of the video.

21. The apparatus of claim 18, wherein the circuitry controlled by the comparator suppresses a motion coding datum, and replaces it with a less-encoded datum for a corresponding portion of the video.

22. The apparatus of claim 10, further comprising:

> a wavelet coder upstream of the motion analysis stage.

23. The apparatus of claim 10 or 22, further comprising a run-length coder downstream of the motion analysis stage.

24. The apparatus of claim 10, wherein the motion analysis stage analyses a luminance channel of the video.

25. The apparatus of claim 24, wherein chrominance channels of the video are not analysed in the motion analysis stage.

26. The apparatus of claim 24, wherein chrominance channels of the video are compressed based on the analysis of the luminance channel.

27. The apparatus of claim 24, wherein chrominance channels of the video are compressed according to an intensity change during the stage that analyses the luminance channel.

28. Apparatus for decoding digitally encoded video which is encoded according to the compressing process part with motion analysis of the process according to claims 1 to 6, said apparatus having a preliminary decoding assembly which comprises

> a) loop in the form of a sequential buffer (410) memory of the size of at least one frame plus 2n lines plus 2n + 1 pixels, where n is the maximum amplitude of motion, and whose input receives a picture mosaic type signals corresponding to a first frame of the video signals to be decoded and which circulates in the form of a picture mosaic type signals, whereas the travel duration of the said signals over the said loop is equal to that of a frame of the video signals to be reconstructed,

b) means (70) to reposition, in the said loop, the pixels having undergone a displacement indicated by a group of digital signals which represent, in the said reconstructed flow of digital signals, the amplitude and the displacement direction,

c) means (203) to replace the picture mosaic type signals in circulation in the loop with the new signals of this type as they arrive, and

d) means to transmit to the final decoding operation, from an output (35) located downstream of the said input position, the picture mosaic type signals circulating in the loop, after possible repositioning.

**Patentansprüche**

1. Verfahren zur Kompression digitaler Videoeingangssignale und zur Dekompression komprimierter binärer Signale, die aus einer solchen Kompression hervorgehen, wobei die digitalen Videoeingangssignale mindestens eine Leuchtdichtenkomponente aufweisen und durch eine Aufeinanderfolge entsprechender Rahmen ausgebildet sind, die jeder ein Videobild darstellen und durch eine Aufeinanderfolge von Pixeln ausgebildet sind,

   • wobei dieses Kompressionsverfahren darin besteht, nach den Verschiebungen und den plötzlichen Veränderungen in den unterschiedlichen entsprechenden Pixeln zwischen zwei aufeinanderfolgenden Rahmen des zu kodierenden digitalen Videoeingangssignals zu suchen, und darin besteht, aus den Verschiebungen und aus den plötzlichen Veränderungen ein kodiertes Signal abzuleiten, welches, für die Anfangssequenz und für jede folgende Sequenz des digitalen Signals, die mit einer Veränderung in dem Videobild, die durch das digitale Videosignal dargestellt wird, beginnen, in einem gegebenen Rahmen im Verhältnis zu dem vorhergehenden Rahmen,
   einerseits, am Sequenzbeginn, als auch für die plötzlich im Wert veränderten Pixel, mindestens den Rahmen oder die Pixel des zu kodierenden digitalen Signals, ohne irgendeine Veränderung, und
   andererseits, während der gesamten Sequenz bis zu dem Beginn der folgenden Sequenz, eine Aufeinanderfolge von Korrekturbitpaketen,
   umfasst,
   wobei das Kompressionsverfahren umfasst:

   - eine vorbereitende Kodierungsoperation des digitalen Videoeingangssignals unter Verwendung einer Wavelet-Analyse. die die Übertragung der Umrandungen der aufeinanderfolgenden Bilder unterstützt, die durch die Signale dargestellt werden, damit eine Aufeinanderfolge von mosaikartig kodierten digitalen Videosignalen erreicht wird, welche die Signale in der Art einer Aufeinanderfolge von Bildmosaiken kodieren,

   - eine Kodierungsoperation zum Herstellen eines Stroms von binären Signalen aus der Aufeinanderfolge von mosaikartig kodierten digitalen Signalen,

   - eine Kompressionsoperation des Stroms von binären Signalen, damit komprimierte binäre Signale hergestellt werden, um die Anzahl der binären Signale durch Unterdrückung der Mehrheit der binären Signale des Stroms zu reduzieren, deren Wert zwischen beiden möglichen Werten von derartigen Signalen bestimmt ist, und

   • wobei dieses Dekompressionsverfahren in der Dekompression digitaler Signale besteht, die sich aus den komprimierten binären Signalen zusammensetzen, die aus dem Kompressionsverfahren hervorgehen, d.h. für jede Sequenz mindestens einen ersten digitalen Signalrahmen umfassend, der nicht durch das Kompressionsverfahren verändert wurde, gefolgt von einer Aufeinanderfolge von Korrekturbitpaketen,
   wobei das Dekompressionsverfahren umfasst:

   - eine Dekompressionsoperation der komprimierten binären Signale, welche den Strom von binären Signalen vor der Unterdrückung, in der Kompressionsoperation, der Mehrheit von binären Signalen von bestimmtem Wert wiederherstellt,

   - eine Dekodierungsoperation des Stroms von binären Signalen, die eine Aufeinanderfolge von mosaikartig kodierten digitalen Signalen herstellt,

- eine endgültige Dekodierungsoperation zum Wiederherstellen, aus einer Aufeinanderfolge von kodierten Signalen des Bildmosaiktyps, eines digitalen Videosignals, das aus einer Aufeinanderfolge von Rahmen gebildet wird, die jeder aus einer Aufeinanderfolge von Pixeln bestehen,

**dadurch gekennzeichnet, dass**

- es ferner in Bezug auf das Kompressionsverfahren, mindestens was die Leuchtdichtenkomponente betrifft, eine zusätzliche Kodierungsoperation umfasst, die auf die Aufeinanderfolge von mit Bildmosaik kodierten, digitalen Signalen, die aus der vorbereitenden Kodierungsoperation hervorgegangen sind, angewendet wird, welche auf die Verschiebungen der Umrandungen in den aufeinanderfolgenden Bildern reagiert und welche, für jedes Pixel eines Rahmens, aus der zusätzlichen Kodierungsoperation besteht, unter Verwendung von

  a) Ableitung aus der Aufeinanderfolge von mosaikartig kodierten digitalen Signalen der Korrekturbitpakete, eines Pakets binärer Signale, die repräsentativ sind für eine oder keine allgemeine Veränderung der Bilder zwischen Rahmen und für eine Verschiebung oder für eine Nicht-Verschiebung des Pixels zwischen dem beteiligten Rahmen und den vorhergehenden Rahmen, als auch für die Amplitude und für die Orientierungsrichtung der Verschiebung, falls vorhanden, wobei die Ableitung vorgenommen wird, indem die vorbereitend kodierten digitalen Signale, ein Rahmen nach dem anderen, unterzogen werden:

  - einem zeitbezogenen Prozess, in welchem, für jedes Pixel, der Wert des Pixels mit seinem vorhergehenden korrekten Wert verglichen wird, der unter Verwendung einer "Zeitkonstanten" geglättet wird, deren Entwicklung während des Zeitverlaufs zur Optimierung der Glättung veranlasst wird, damit zwei für die zeitliche Veränderung des Pixelwerts signifikante Parameter bestimmt werden, wobei die Parameter während des Zeitverlaufs variabel sind und durch zwei digitale Signale dargestellt werden, d.h. ein erstes binäres Signal $DP$, dessen erster Wert die Überschreitung eines Schwellenwerts, der durch die Veränderung bestimmt wird, und ein zweiter Wert die Nicht-Überschreitung dieses Schwellenwerts, der durch diese Veränderung bestimmt wird, darstellt, und wobei ein zweites digitales Signal $CO$, mit einer reduzierten Anzahl an Bits, den momentanen Wert der Zeitkonstante für das Pixel darstellt,

  - einem raumbezogenen Prozess für die Werte, für einen gegebenen Rahmen, von den beiden digitalen Signale $DP$ und $CO$, um die sich bewegenden Pixel zu bestimmen, für welche gleichzeitig das erste Signal $DP$ den ersten Wert anzeigt, der die Überschreitung des Schwellenwerts darstellt und das zweite Signal $CO$ sich auf signifikante Weise zwischen benachbarten Pixeln verändert,

  - einem Prozess zum Ableiten für die sich bewegenden Pixel, der Amplitude und der Orientierungsrichtung der Verschiebung,

  b) einer Wiederherstellung der Position des Pixels, wenn es sich verschoben hat,

  c) einer Überprüfung, ob das in der Position wiederhergestellte Pixel im Fall von Verschiebung mit dem entsprechenden Pixel des beteiligten Rahmens übereinstimmt oder nicht übereinstimmt,

  d) einer Speicherung des Ergebnisses dieser Überprüfung, und

  e) einer Übermittlung zu der Kompressionsoperation, entweder, des Pakets von binären, im Fall der Übereinstimmung, repräsentativen Signalen, oder der mit Bildmosaik kodierten Signale aus dem Wavelet-Filter im Fall der Nicht-Übereinstimmung; und

- es ferner in Bezug auf das Dekompressionsverfahren eine vorbereitende Dekodierungsoperation umfasst, welche auf den Strom von dekomprimierten binären Signalen angewendet wird, und welches

  a) zuerst verursacht, dass in einer Schleife, von einer Eingabeposition auf dieser Schleife, ein Signal des Mosaiktyps des Stroms zirkuliert, das einem ersten Rahmen des wiederherzustellenden Videosignals entspricht und aus der Dekompressionsoperation hervorgegangen ist, wobei die Durchlaufzeit des Signals in der Schleife gleich derjenigen eines Rahmens des wiederherzustellenden Videosignals ist, wobei jedes Signal eines Rahmens normalerweise so lange in der Schleife zirkuliert, wie keine Veränderung und keine Verschiebung in den dekomprimierten binären Signalen signalisiert wird,

b) die Pixel in der Schleife wieder anordnet, die eine Verschiebung erfahren haben, die durch eine Gruppe von digitalen Signalen signalisiert wird, die, in dem Strom von dekomprimierten binären Signalen, die Amplitude und die Orientierungsrichtung der Verschiebung darstellen, die außerdem aus der Dekompressionsoperation hervorgehen,

c) die Signale vom Bildmosaiktyp beim Zirkulieren in der Schleife mit den neuen Signalen dieses Typs ersetzt, sobald sie ankommen,

d) für die Übertragung zu der endgültigen Dekodierungsoperation, von einer Ausgabeposition, die in dieser Schleife stromabwärts der Eingabeposition angeordnet ist, die in der Schleife zirkulierenden Signale vom Bildmosaiktyp gewinnt, nach möglicher Wiederanordnung der Pixel.

2. Verfahren nach Anspruch 1, **dadurch gekennzeichnet, dass** es für die Kompressions- und die Dekompressionsverfahren verwendet,

- die vorbereitende Kodierungsoperation der Aufeinanderfolge der digitalen Videosignale zu einer Aufeinanderfolge von mosaikartig kodierten digitalen Signalen, die dem Abtasten, in jedem Rahmen, des Mallatdiagramms und dem Aufbauen des Bildmosaiks, unter Verwendung eines Wavelet-Filters, entsprechen

- die Kompressionsoperation, unter Verwendung einer Kompressions-/Dekompressionsanordnung, mit einem adaptiven Quantifikator, einer Kodierungseinrichtung vom *RCL-Typ* und einer *CH*-Kodierungseinrichtung vom Typ einer Huffman Kodierungseinrichtung, die bei Kompression funktioniert,

- die Dekompressionsoperation, unter Verwendung einer Kompressions-/Dekompressionsanordnung, mit einem adaptiven Quantifikator, einer Kodierungseinrichtung vom *RCL-Typ* und einer *CH*-Kodierungseinrichtung vom Typ einer Huffman Kodierungseinrichtung, die bei Dekompression funktioniert,

- die endgültige Dekodierungsoperation unter Verwendung eines Operationsumkehr-Wavelet-Filters.

3. Verfahren nach Anspruch 1 oder 2, **dadurch gekennzeichnet, dass** die vorbereitende Dekodierungsoperation verursacht, dass das Signal in einer Schleife mit einer Durchlaufzeit zirkuliert, die gleich der Zeitdauer eines Rahmens dieses Signals ist, verursacht, dass das Signal, während seines Durchlaufens in der Schleife durch eine Matrix von Pixelpositionen geht, deren Reihenanzahl einerseits und deren Spaltenanzahl andererseits mindestens gleich 2n + 1 ist, wobei mit *n* die Anzahl von Ebenen, die die Verschiebungsamplitude quantifiziert, bezeichnet wird, wobei das Signal an einer zentralen Position der Matrix in die Schleife eingeblendet wird, wobei ein Pixel des Signals zu der zentralen Position zurückgebracht wird, nach dem Durchlaufen des ersten Rahmens jeder Sequenz, beim Durchlaufen in der Matrix, welches sich zwischen dem beteiligten Rahmen und dem vorhergehenden Rahmen bewegt hat, im Verhältnis zu dem Paket an Korrekturbits bezüglich des Pixels, damit auf diese Weise die aufeinanderfolgenden Rahmen der Sequenzen so wiederhergestellt werden, wie sie vor der Kodierung in der Kodierungsoperation waren, und aus der Schleife, in einer in Durchfaufrichtung gesehen stromabwärts zur zentralen Position gelegenen Position, gewonnen werden.

4. Verfahren nach irgendeinem der Ansprüche 1 bis 3, **dadurch gekennzeichnet, dass** das Paket von digitalen Korrektursignalen für jedes Pixel vier Gruppen von Signalen umfasst:

- die erste besteht aus einem einzelnen binären Signal, wobei dessen einer von zwei möglichen Werten eine allgemeine Veränderung der Bilder zwischen einem Rahmen und dem vorhergehenden Rahmen und der andere Wert eine allgemeine Nicht-Veränderung darstellt, wobei der erste die Notwendigkeit allgemeiner Korrektur oder die Nicht-Notwendigkeit solch einer Korrektur signalisiert,

- die zweite besteht aus einem einzelnen binären Signal, wobei dessen einer von zwei möglichen Werten eine Verschiebung für das Pixel und der andere Wert eine Nicht-Verschiebung darstellt, wobei die zweite und

- die beiden anderen aus digitalen Signalen mit einer reduzierten Anzahl an Bits bestehen und eine die quantifizierte Amplitude und die andere die quantifizierte Orientierungsrichtung der Verschiebung, falls vorhanden, darstellen.

**EP 1 110 408 B1**

5. Verfahren nach Anspruch 4, **dadurch gekennzeichnet, dass** die zusätzliche Kodierungsoperation die folgenden Schritte umfasst:

a) Kodieren des digitalen Signals, ein Pixel nach dem anderen, im Verhältnis zu der Wertveränderung jedes Pixels zwischen dem verarbeiteten Rahmen und den vorhergehenden Rahmen durch Verwenden eines Blocks von vier digitalen Signalen für jedes Pixel, von denen

- das erste, welches ein binäres Signal ist, durch seine beiden möglichen Werte entweder die Notwendigkeit allgemeiner Korrektur oder die Nicht-Notwendigkeit solch einer Korrektur darstellt,

- das zweite, welches ebenfalls ein binäres Signal ist, ausschließlich erscheint, wenn das erste Signal die Nicht-Notwendigkeit allgemeiner Korrektur darstellt, und es dann durch seine beiden möglichen Werte entweder eine Verschiebung oder eine Nicht-Verschiebung darstellt, und

- die beiden anderen, welche beide digitale Signale mit einer reduzierten Anzahl an Bits sind, ausschließlich erscheinen, wenn das erste Signal die Nicht-Notwendigkeit von Korrektur darstellt, und dann das eine die quantifizierte Amplitude und das andere die quantifizierte Orientierungsrichtung der Verschiebung, in einem Bereich des zusammengesetzten beteiligten Rahmens, darstellen;

b) Bestimmen, ob die Proportion, in jedem aufeinanderfolgenden Rahmen, der Anzahl an Pixeln, für welche das erste binäre Signal den repräsentativen Wert einer Korrekturnotwendigkeit aufweist, im Verhältnis zu der Gesamtanzahl an Pixeln in dem Rahmen, einen bestimmten Prozentsatz überschreitet; und

c) Übertragen, einen Rahmen nach dem anderen, zu der Kompressionsoperation:

- wenn der Prozentsatz nicht überschritten wird, des Blocks von Signalen bezüglich des betroffenen Pixels,

- wenn der Prozentsatz überschritten wird, des mosaikartig kodierten digitalen Signals, das durch die vorbereitende Kodierungsoperation erzeugt wurde.

6. Verfahren nach irgendeinem der Ansprüche 1 bis 5, **dadurch gekennzeichnet, dass** die vorbereitende Dekodierungsoperation in der Schleife eine quadratische Matrix verwendet, deren ungerade Zeilenanzahl und deren Spaltenanzahl jeweils kleiner ist als die Zeilenanzahl und Spaltenanzahl eines Rahmens der wiederherzustellenden Videosignale, wobei diese Anzahl beide Male größer ist, mindestens um eine Einheit, als die Anzahl der Quantifikationsebenen der Verschiebungsamplitude, und durch welche die Signale aus der Dekompressionsoperation zirkulieren, und die Position der Pixel, die verschoben worden sind, wiederhergestellt wird, wobei sie in der Matrix einer Umsetzung in Gegenrichtung unterzogen werden, deren quantifizierte Amplitude und deren quantifizierte Orientierungsrichtung durch die digitalen Werte der beiden anderen Gruppen von Signalen spezifiziert werden.

7. Vorrichtung zur Kompression eines digitalen Videoeingangssignals, das mindestens eine Leuchtdichtenkomponente aufweist und aus einer Aufeinanderfolge entsprechender Rahmen ausgebildet ist, die jeder ein Videobild darstellen und durch eine Aufeinanderfolge von Pixeln gebildet sind, als auch zur Dekompression des komprimierten binären Signals in einer Einrichtung dieses Typs, die bei Kompression funktioniert,

• wobei diese Kompressions- und Dekompressionseinrichtung für die Kompression umfasst:

- mindestens einen vorbereitenden Wavelet-Filter (11) für Kodierung des digitalen Videosignals, der eine Wavelet-Analyse durchführt, wodurch die Übertragung der Umrandungen der aufeinanderfolgenden Bilder, die durch das Signal dargestellt werden, begünstigt wird, damit eine Aufeinanderfolge von mosaikartig kodierten digitalen Signalen, mit der das Signal in Form einer Aufeinanderfolge von Bildmosaiken kodiert wird, erhalten wird,

- eine Kodierungsanordnung zur Herstellung eines Stroms von binären Signalen aus der Aufeinanderfolge von mosaikartig kodierten digitalen Signalen,

- eine Kompressionsanordnung (13/CP) zur Kompression des Stroms von binären Signalen, damit die Anzahl der binären Signale durch Unterdrückung der Mehrheit der binären Signale des Stroms reduziert wird, deren Wert innerhalb beider möglichen Werte von solchen Signalen bestimmt wird, und

41

- • wobei diese Kompressions- und Dekompressionseinrichtung für die Dekompression umfasst:

  - - eine Dekompressionsanordnung (13/DP) zur Dekompression der komprimierten binären Signale, welche den Strom von binären Signalen vor der Unterdrückung, in der Kompressionsanordnung, der Mehrheit der binären Signale von bestimmtem Wert wiederherstellt,

  - - eine Dekodierungsanordnung zum Herstellen einer Aufeinanderfolge von mosaikartig kodierten digitalen Signalen,

  - - eine endgültige Dekodierungsanordnung, die einen Wavelet-Filter für Operationsumkehr umfasst, welches das digitale Videosignal, aus Wavelets, die ein digitales Videosignal in Form von Bildmosaiken darstellen, wiederherstellt,

  **dadurch gekennzeichnet, dass**

- • sie für die Kompression ferner, mindestens was die Leuchtdichtenkomponente in dem digitalen Videoeingangssignal betrifft, eine zusätzliche Kodierungsanordnung (12A) umfasst, deren Eingang (20) mit dem Ausgang (16) des Wavelet-Filters (11) verbunden ist und deren Ausgang (24) mit dem Eingang (25) der Kompressionsanordnung (13/CP) verbunden ist, wobei diese Anordnung auf die Verschiebungen der Umrandungen in den aufeinanderfolgenden Bildern reagiert, die durch die Aufeinanderfolge von mit Mosaikbildern kodierten Signalen dargestellt werden, die am Eingang empfangen wurden, und zur Verarbeitung jedes Pixels eines Rahmens umfasst:

  a) Mittel (21), um, aus der Aufeinanderfolge von mit Mosaikbildern kodierten Signalen, ein Paket von binären Signalen abzuleiten, die eine Verschiebung oder eine Nicht-Verschiebung der Pixel zwischen dem beteiligten Rahmen und den vorhergehenden Rahmen, als auch der Amplitude und der Orientierungsrichtung der Verschiebung, falls vorhanden, darstellen, wobei diese Mittel sind:

  - - Mittel (21a) für einen zeitbezogenen Prozess, in welchem für jedes Pixel der Wert des Pixels mit seinem vorhergehenden korrekten Wert verglichen wird, der unter Verwendung einer "Zeitkonstanten" geglättet wird, deren Entwicklung während des Zeitverlaufs zur Optimierung der Glättung veranlasst wird, damit zwei für die zeitliche Veränderung des Pixelwerts signifikante Parameter bestimmt werden, wobei die Parameter während des Zeitverlaufs variabel sind und durch zwei digitale Signale dargestellt werden, d.h. ein erstes binäres Signal *DP,* dessen erster Wert durch die Überschreitung eines Schwellenwerts, der durch die Veränderung bestimmt wird, und dessen zweiter Wert die Nicht-Überschreitung des Schwellenwerts, der durch die Veränderung bestimmt wird, darstellt, und ein zweites digitales Signal *CO,* mit einer reduzierten Anzahl an Bits den momentanen Wert der Zeitkonstante für das Pixel darstellt,

  - - Mittel (21b) für einen raumbezogenen Prozess für die Werte, für einen gegebenen Rahmen, der beiden digitalen Signale *DP* und *CO,* um die sich bewegenden Pixel zu bestimmen, für welche gleichzeitig das erste Signal *DP* den ersten Wert anzeigt, der die Überschreitung des Schwellenwerts darstellt, und das zweite Signal CO sich auf signifikante Weise zwischen benachbarten Pixeln verändert, wobei diese beiden Prozesse, zeitbezogen und raumbezogen, und

  - - Mittel (21c) zum Ableiten, von den sich bewegenden Pixeln, einerseits des ersten für eine Verschiebung repräsentativen Wertes für das zweite binäre Signal, und andererseits der digitalen Werte der beiden anderen digitalen Gruppen unter den vier Gruppen von digitalen Signalen,

  b) Mittel (34) zum Wiederherstellen der Position des Pixels, wenn es verschoben worden ist,

  c) Mittel (39) zum Überprüfen, ob das in der Position wiederhergestellte Pixel, im Fall von Verschiebung, mit dem entsprechenden Pixel des Pixels des beteiligten Rahmens übereinstimmt oder nicht übereinstimmt,

  d) Mittel zum Speichern des Ergebnisses dieser Überprüfung, und

  e) Mittel (40) zum Übermitteln zu der Kompressionsanordnung (13/CP) entweder des Pakets von repräsentativen Signalen, im Fall von Übereinstimmung, oder des mit Bildmosaik kodierten Signals von dem Wavelet-Filter im Fall von Nicht-Übereinstimmung; und

- sie für die Dekompression ferner eine vorbereitende Dekodierungsanordnung umfasst, deren Eingang mit dem Ausgang der Dekompressionsanordnung verbunden ist und deren Ausgang mit dem Umkehreingang des Wavelet-Filters verbunden ist, welche umfasst:

  a) eine Schleife (50-51-52), deren Eingang (34c) von der Dekompressionsanordnung (13/DP) den wiederhergestellten Strom von binären Signalen empfängt, welcher mit einem Signal des Bildmosaiktyps beginnt, das einem ersten Rahmen des wiederherzustellenden Videosignals entspricht, und welcher in der Form eines Signals des Bildmosaiktyps zirkuliert, wobei die Durchlaufzeit des Signals in der Schleife gleich derjenigen eines Rahmens des wiederherzustellenden Videosignals ist,

  b) Mittel (70) zum Wiederanordnen, in der Schleife, der Pixel, die eine Verschiebung erfahren haben, die durch eine Gruppe von digitalen Signalen angezeigt wird, welche, in dem wiederhergestellten Strom von digitalen Signalen, die Amplitude und die Richtung der Verschiebung repräsentieren,

  c) Mittel (203) zum Ersetzen der Signale des Bildmosaiktyps, die in der Schleife zirkulieren, durch neue Signale diesen Typs, sobald sie ankommen, und

  d) Mittel zum Übertragen zu der endgültigen Dekodierungsoperation, von einem stromabwärts der Eingangsposition angeordneten Ausgang (35), der in der Schleife zirkulierenden Signale des Bildmosaiktyps, nach möglicher Wiederanordnung.

8. Vorrichtung nach Anspruch 7, **dadurch gekennzeichnet, dass** die vorbereitende Dekodierungsanordnung für die Dekompression umfasst:

   - Mittel, um einen Rahmen der dekomprimierten, aber kodierten Signale, die von dem Dekompressionsbereich der Kompressions-/Dekompressionsanordnung empfangen wurden, normalerweise so lange in einer Schleife (50-51-52) zirkulieren zu lassen, wie beide binäre Signale gleichzeitig ein Fehlen von Korrektur und ein Fehlen von Bewegung darstellen,

   - Mittel zum Ersetzen, in der Schleife, des zirkulierenden Rahmens durch einen neuen Rahmen, der mit neuen Pixelwerten ankommt, falls das binäre Korrektursignal die Notwendigkeit einer Korrektur anzeigt,

   - Mittel zum Durchführen in einer quadratischen Matrix (50), deren ungerade Anzahl an Zeilen und Spalten kleiner ist als die Anzahl an Zeilen und Spalten eines Rahmens, wobei diese Anzahl beide Male um mindestens eine Einheit größer ist als die Anzahl an Quantifikationsebenen der Verschiebungsamplitude, und durch welche die dekomprimierten Signale zirkulieren, einer Umsetzungsoperation der sich in der Matrix bewegenden Pixel von ihrer Position bis zu der zentralen Pixelposition in der Matrix, Falls, das erste binäre Korrektursignal ein Fehlen von Korrektur anzeigt, während das zweite binäre Verschiebungssignal eine Verschiebung anzeigt.

9. Vorrichtung nach Anspruch 7 oder 8, **dadurch gekennzeichnet, dass** sie Mittel (203) umfasst, um zu verursachen, dass das digitale kodierte Eingangssignal in einer Schleife (50-51-52) zirkuliert, wobei die erforderliche Durchlaufzeit des Signals gleich der Zeitdauer eines Rahmens dieses Signals ist, Mittel, um zu verursachen, dass das Signal während seines Durchlaufens in der Schleife durch eine Matrix (50) von Pixelpositionen geht, deren Reihenanzahl einerseits und deren Spaltenanzahl andererseits mindestens gleich 2n + 1 ist, wobei mit n die Ebenenanzahl bezeichnet wird, die die Verschiebungsamplitude quantifiziert, wobei das Signal an einer zentralen Position (60) der Matrix (50) in die Schleife eingeblendet wird, Mittel (70), um, nach dem Durchlaufen des ersten Rahmens jeder Sequenz, ein Pixel des Signals, während es sich innerhalb der Matrix bewegt, zu der zentralen Position (60) zurückzubringen, welches sich zwischen dem betroffenen Rahmen und dem vorhergehenden Rahmen bewegt hat, im Verhältnis zu dem Paket von Korrekturbits bezüglich dieses Pixels, um auf diese Weise die aufeinanderfolgenden Rahmen der Sequenzen so wiederherzustellen, wie sie vor ihrer Kodierung in der Kodierungsoperation waren, und Mittel, um aus der Schleife, an einer Position (35), die in Durchlaufrichtung stromabwärts von der zentralen Position (60) angeordnet ist, die aufeinanderfolgenden auf diese Weise wiederhergestellten Rahmen zu gewinnen.

10. Videokompressionsvorrichtung, umfassend

- eine Stufe der Bewegungsanalyse, die eine Schaltungsanordnung umfasst, die ausgestaltet ist, um ein Pixel eines aktuellen Rahmens eines Videos zu identifizieren, dessen Inhalt einem anderen Pixel eines vorhergehenden Rahmens eines Videos entspricht, und die ausgestaltet ist, um bewegungskodierende Daten zwischen dem Pixel des vorhergehenden Rahmens und dem Pixel eines aktuellen Rahmens herzustellen; und

- mindestens eine weitere videoverarbeitende Stufe der Schaltungsanordnung und/oder Software, die mit der Stufe der Bewegungsanalyse in Wechselwirkung steht, um die Kompression des Videos zu erzielen.

**11.** Vorrichtung nach Anspruch 10, wobei die Stufe der Bewegungsanalyse ferner eine Schaltungsanordnung und/oder Software umfasst, die ausgestaltet ist, um ein Pixel des aktuellen Rahmens zu identifizieren, dessen Inhalte demselben Pixel des vorhergehenden Rahmens entsprechen.

**12.** Vorrichtung nach Anspruch 11, wobei der entsprechende Inhalt identifiziert wird, wenn sich ein numerischer Wert des Pixels des aktuellen Rahmens von dem Pixel des vorhergehenden Rahmens innerhalb einer Schwellenwerttoleranz unterscheidet.

**13.** Vorrichtung nach Anspruch 11, wobei eine Datenkodierung des Pixels des aktuellen Rahmens, dessen Inhalte demselben Pixel des vorhergehenden Rahmens entsprechen, nur aus Nullen besteht.

**14.** Vorrichtung nach Anspruch 10, wobei die Stufe der Bewegungsanalyse ferner eine Schaltungsanordnung umfasst, die ausgestaltet ist, um einen Inhalt von einem Pixel des aktuellen Rahmens, anstatt der bewegungskodierten Daten des einen Pixels, zu befördern.

**15.** Vorrichtung nach Anspruch 14, wobei das eine Pixel wegen einer großen Veränderung in dem Inhalt des einen Pixels ausgewählt wird.

**16.** Vorrichtung nach Anspruch 10, wobei die Bewegung als eine räumliche Verschiebung zwischen dem Pixel des vorhergehenden Rahmens und dem Pixel des aktuellen Rahmens kodiert wird.

**17.** Vorrichtung nach Anspruch 16, wobei die räumliche Verschiebung als eine Richtung und Entfernung kodiert wird.

**18.** Vorrichtung nach Anspruch 10, ferner umfassend:

einen Dekodierer, der ausgestaltet ist, bewegungskodierte Daten zu dekodieren, die durch die Stufe der Bewegungsanalyse hergestellt wurden;

eine Vergleichsschaltung, die ausgestaltet ist, um die dekodierte Bewegung, die durch den Dekodierer erzeugt wurde, mit einer Darstellung einer Eingabe in die Stufe der Bewegungsanalyse zu vergleichen; und

eine Schaltungsanordnung, die durch die Vergleichsschaltung gesteuert wird.

**19.** Vorrichtung nach Anspruch 18, wobei die durch die Vergleichsschaltung gesteuerte Schaltungsanordnung Korrekturen an einer Darstellung der gespeicherten Bewegung, die in dem Dekodierer gespeichert ist, vornimmt.

**20.** Vorrichtung nach Anspruch 18, wobei die durch die Vergleichsschaltung gesteuerte Schaltungsanordnung ausgestaltet ist, um einen Kompressionsfaktor der Vorrichtung durch Einführung von Geräusch in die Kompression des Videos zu erhöhen.

**21.** Vorrichtung nach Anspruch 18, wobei die durch die Vergleichsschaltung gesteuerte Schaltungsanordnung ein bewegungskodierendes Datum unterdrückt und es durch ein weniger kodiertes Datum für einen entsprechenden Abschnitt des Videos ersetzt.

**22.** Vorrichtung noch Anspruch 10, ferner umfassend
eine Wavelet-Kodierung zulaufseitig der Stufe der Bewegungsanalyse.

**23.** Vorrichtung nach Anspruch 10 oder 22, die ferner eine Lauflängenkodierung ablaufseitig der Stufe der Bewegungsanalyse umfasst.

**24.** Vorrichtung nach Anspruch 10, wobei die Stufe der Bewegungsanalyse einen Leuchtdichtenkanal des Videos analysiert.

**25.** Vorrichtung nach Anspruch 24, wobei Farbwertkanäle des Videos nicht in der Stufe der Bewegungsanalyse analysiert werden.

**26.** Vorrichtung nach Anspruch 24, wobei Farbwertkanäle des Videos auf der Analyse des Leuchtdichtenkanals beruhend komprimiert werden.

**27.** Vorrichtung nach Anspruch 24, wobei Farbwertkanäle des Videos gemäß einer Intensitätsveränderung während der Stufe komprimiert werden, in der der Leuchtdichtenkanal analysiert wird.

**28.** Vorrichtung zum Dekodieren eines digital kodierten Videos, welches gemäß dem Bereich des Kompressionsverfahrens mit Bewegungsanalyse des Verfahrens nach den Ansprüchen 1 bis 6 kodiert ist, wobei die Vorrichtung eine vorbereitende Dekodierungsanordnung aufweist, welche umfasst

a) eine Schleife in der Form eines sequentiellen Pufferspeichers (410) in der Größe von mindestens einem Rahmen plus 2n Zeilen plus 2n + 1 Pixel, wobei n die maximale Bewegungsamplitude ist, und deren Eingang ein Signal vom Bildmosaiktyp empfängt, das einem ersten Rahmen des zu dekodierenden Videosignals entspricht, und welches in der Form eines Signals vom Bildmosaiktyp zirkuliert, wobei die Durchlaufzeit des Signals in der Schleife gleich derjenigen eines Rahmens des wiederherzustellenden Videosignals ist,

b) Mittel (70) zum Wiederanordnen, in der Schleife, der Pixel, die eine Verschiebung erfahren haben, die durch eine Gruppe von digitalen Signalen angezeigt wird, welche, in dem wiederhergestellten Strom von digitalen Signalen, die Amplitude und die Verschiebungsrichtung darstellen,

c) Mittel (203) zum Ersetzen des in der Schleife zirkulierenden Signals vom Bildmosaiktyps durch die neuen Signale dieses Typs, sobald sie ankommen, und

d) Mittel zum Übertragen des in der Schleife zirkulierenden Signals vom Bildmosaiktyp, von einem Ausgang (35), der ablaufseitig von der Eingabeposition angeordnet ist, nach möglicher Wiederanordnung, zu der endgültigen Dekodierungsoperation.

**Revendications**

**1.** Procédé de compression de signaux vidéo numériques d'entrée et de décompression de signaux binaires compressés résultant d'une telle compression, lesdits signaux vidéo numériques d'entrée ayant au moins une composante de luminance et étant formés d'une succession de trames correspondantes, chacune représentant une image vidéo et formée d'une succession de pixels,

- attendu que ce procédé de compression consiste à rechercher les déplacements et les modifications soudaines dans les différents pixels correspondants, entre deux trames successives des signaux vidéo numériques d'entrée à coder, et consiste à déduire desdits déplacements et desdites modifications soudaines, un signal codé qui comporte, pour la séquence initiale et pour chaque séquence suivante des signaux numériques commençant par une modification de l'image vidéo représentée par lesdits signaux vidéo numériques, dans une trame donnée par rapport à la trame précédente,
  d'une part, au début de séquence, ainsi que pour les pixels soudainement modifiés en termes de valeur, au moins ladite trame ou lesdits pixels desdits signaux numériques à coder, sans modification quelconque, et
  d'autre part, tout au long de la séquence jusqu'au début de la séquence suivante, une succession de paquets de bits de correction,
  ledit procédé de compression incluant :

- une opération de codage préliminaire desdits signaux vidéo numériques d'entrée utilisant une analyse par ondelettes, favorisant la transmission des contours des images successives représentées par lesdits signaux, afin d'obtenir une succession de signaux numériques codés mosaïques codant lesdits signaux sous la forme d'une succession de mosaïques d'images,
- une opération de codage destinée à produire un flux de signaux binaires à partir de la succession de signaux numériques codés mosaïques,

- une opération de compression du flux de signaux binaires afin de produire des signaux binaires compressés de manière à réduire le nombre de signaux binaires par suppression de la majorité des signaux binaires dudit flux dont la valeur est déterminée parmi deux valeurs possibles de tels signaux, et

- attendu que le procédé de décompression consiste à décompresser des signaux numériques constitués des signaux binaires compressés résultant dudit procédé de compression, c'est-à-dire comportant pour chaque séquence au moins une première trame de signaux numériques, non-modifiée par ledit procédé de compression, suivi par une succession de paquets de bits de correction,
  ledit procédé de décompression incluant :

  - une opération de décompression desdits signaux binaires compressés qui reconstruit ledit flux de signaux binaires avant suppression, dans ladite opération de compression, de la majorité des signaux binaires de valeur déterminée,
  - une opération de décodage dudit flux de signaux binaires produisant une succession de signaux numériques codés mosaïques,
  - une opération de décodage finale reconstruisant, à partir d'une succession de signaux de type codés à mosaïques d'images, des signaux vidéo numériques formés d'une succession de trames, chacune étant constituée d'une succession de pixels,

  **caractérisé en ce que** :
- lorsque le procédé de compression est concerné, il comporte, de plus, au moins en ce qui concerne la composante de luminance, une opération de codage supplémentaire, appliquée à la succession de signaux numériques codés à mosaïques d'images résultant de l'opération de codage préliminaire, qui est sensible aux déplacements des contours desdites images successives et qui consiste, pour chaque pixel d'une trame, en ladite opération de codage supplémentaire utilisant :

  a) une déduction à partir de ladite succession de signaux numériques codés mosaïques des paquets de bits de correction en tant que paquets de signaux binaires représentatifs d'une modification globale ou non des images entre des trames et d'un déplacement ou d'un non-déplacement du pixel entre la trame impliquée et les trames précédentes, ainsi que de l'amplitude et de la direction orientée du déplacement, s'il en existe, ladite déduction étant effectuée en soumettant lesdits signaux numériques codés préliminaires, une trame à la fois :

    - à un traitement temporel, dans lequel pour chaque pixel, la valeur dudit pixel est comparée à sa valeur correcte précédente, lissée en utilisant une "constante de temps" qui est amenée à évoluer au cours du temps pour maximiser le lissage, afin de déterminer deux paramètres significatifs de la variation temporelle de valeur du pixel, paramètres variables dans le temps et représentés par deux signaux numériques, à savoir un premier signal binaire $DP$, dont une première valeur représente le dépassement d'un seuil déterminé par ladite variation et une seconde valeur le non-dépassement de ce seuil déterminé par ladite variation, et un second signal numérique $CO$, à nombre réduit de bits, représentatif de la valeur relative à l'instant, pour ledit pixel, de ladite constante de temps,
    - à un traitement spatial des valeurs, pour une trame donnée, desdits deux signaux numériques $DP$ et $CO$ pour déterminer les pixels en mouvement dans lesquels à la fois ledit premier signal $DP$ présente ladite première valeur représentative de dépassement dudit seuil et ledit second signal $CO$ varie d'une manière significative entre pixels voisins,
    - à un traitement pour déduire, pour lesdits pixels en mouvement, l'amplitude et la direction orientée du déplacement,

  b) un rétablissement de la position du pixel s'il a été déplacé,
  c) un contrôle pour déterminer si le pixel à position rétablie dans le cas d'un déplacement est en conformité ou en non-conformité avec le pixel correspondant de la trame impliquée,
  d) une mémorisation du résultat de ce contrôle, et
  e) un transfert pour une opération de compression, soit dudit paquet de signaux binaires représentatifs en cas de conformité, soit des signaux codés à mosaïques d'images provenant dudit filtre à ondelettes en cas de non-conformité, et

- lorsque le procédé de décompression est concerné, il comporte, de plus, une opération de décodage préliminaire, qui est appliquée audit flux de signaux binaires décompressés, et qui,

a) fait circuler initialement sur une boucle, à partir d'une position d'entrée sur cette boucle, des signaux dudit flux du type à mosaïque correspondant à une première trame des signaux vidéo à reconstruire et résultant de ladite opération de décompression, alors que la durée du parcours desdits signaux sur ladite boucle est égale à celle d'une trame des signaux vidéo à reconstruire, chaque signal d'une trame circulant normalement dans la boucle tant qu'aucune modification et qu'aucun déplacement n'est signalé dans les signaux binaires décompressés,

b) repositionne dans ladite boucle, les pixels ayant subi un déplacement signalé par un groupe de signaux numériques représentant, dans le flux de signaux binaires décompressés, l'amplitude et la direction orientée du déplacement, résultant également de ladite opération de décompression,

c) remplace les signaux de type à mosaïque d'images en circulation sur ladite boucle par les nouveaux signaux de ce type lorsqu'ils arrivent,

d) extrait pour les transmettre à l'opération de décodage finale, à partir d'une position de sortie sur cette boucle située en aval de ladite position d'entrée, les signaux de type à mosaïques d'images circulant dans la boucle, après un possible repositionnement des pixels.

2. Procédé selon la revendication 1, **caractérisé en ce qu'**il utilise, pour les procédés de compression et de décompression,

- l'opération de codage préliminaire de la succession des signaux vidéo numériques en une succession de signaux numériques codés mosaïques correspondant au balayage, dans chaque trame, du diagramme de Mallat et constituant la mosaïque d'images, par l'intermédiaire d'un filtre à ondelettes,
- l'opération de compression, utilisant un ensemble de compression-décompression, à quantificateur adaptatif, un codeur de type *RCL* et un codeur *CH,* codeur de type Huffinan, fonctionnant en compression,
- l'opération de décompression, utilisant un ensemble de compression-décompression, à quantificateur adaptatif, codeur de type *RCL* et codeur *CH,* codeur de type Huffman, fonctionnant en décompression,
- l'opération de décodage finale, utilisant un filtre à ondelettes à fonctionnement inverse.

3. Procédé selon la revendication 1 ou 2, **caractérisé en ce que** ladite opération de décodage préliminaire amène lesdits signaux à circuler sur une boucle avec une durée de trajet égale à la durée d'une trame de ces signaux, amène lesdits signaux, pendant leur parcours sur ladite boucle, à passer à travers une matrice de positions de pixels dont le nombre de lignes, d'une part, et le nombre de colonnes, d'autre part, est au moins égal à 2n+1, *n* désignant le nombre de niveaux quantifiant l'amplitude de déplacement, de sorte que lesdits signaux sont injectés dans ladite boucle au niveau d'une position centrale de ladite matrice, en ramenant, après course de ladite première trame de chaque séquence, dans ladite position centrale, un pixel desdits signaux, tout en se déplaçant à l'intérieur de ladite matrice, laquelle s'est déplacée entre la trame impliquée et la trame précédente, en relation au paquet de bits de correction concernant ledit pixel, afin de rétablir ainsi les trames successives des séquences telles qu'elles étaient avant le codage dans l'opération de codage, et extrait depuis ladite boucle, dans une position située en aval, dans la direction de course, de ladite position centrale, les trames successives ainsi rétablies.

4. Procédé selon l'une quelconque des revendications 1 à 3, **caractérisé en ce que** ledit paquet de signaux numériques de correction comporte pour chaque pixel quatre groupes de signaux :

- le premier est constitué d'un signal binaire unique de sorte que l'une parmi deux valeurs possibles de celui-ci représente une modification globale des images entre une trame et la trame précédente et l'autre valeur représente une non-modification globale, ledit premier groupe signalant la nécessité d'une correction globale ou la non-nécessité d'une telle correction,
- le deuxième est constitué d'un signal binaire unique de sorte que l'une parmi deux valeurs possibles de celui-ci représente un déplacement pour le pixel et l'autre valeur un non-déplacement, et,
- les deux autres groupes sont constitués de signaux numériques ayant un nombre limité de bits et représentent, l'un l'amplitude quantifiée et l'autre la direction orientée quantifiée du déplacement, s'il en existe.

5. Procédé selon la revendication 4, **caractérisé en ce que** l'opération de codage supplémentaire comporte les étapes consistant à :

a) coder lesdits signaux numériques, un pixel à la fois, en relation à la variation de valeur de chaque pixel entre la trame traitée et les trames précédentes en implémentant pour chaque pixel, un bloc de quatre signaux numériques parmi lesquels

- le premier, qui est un signal binaire, représente, par ses deux valeurs possibles, soit la nécessité d'une correction globale, soit la non-nécessité d'une telle correction,
- le deuxième, qui est également un signal binaire, apparaît exclusivement lorsque ledit premier signal représente la non-nécessité d'une correction globale et il représente ensuite, par ses deux valeurs possibles, soit un déplacement, soit un non-déplacement, et
- les deux autres signaux, qui sont tous deux des signaux numériques ayant un nombre limité de bits, apparaissent exclusivement lorsque lesdits premiers signaux représentent la non-nécessité d'une correction et ils représentent ensuite, l'un l'amplitude quantifiée et l'autre la direction orientée quantifiée du déplacement dans une zone de la trame composite impliquée,

b) déterminer si la proportion, dans chaque trame successive, du nombre de pixels pour lequel lesdits premiers signaux binaires ont la valeur représentative d'une nécessité de correction par rapport au nombre total de pixels dans la trame, dépasse un pourcentage déterminé, et

c) transmettre, une trame après l'autre, à ladite opération de compression :

- si ledit pourcentage n'est pas dépassé, ledit bloc de signaux relatif au pixel affecté,
- si ledit pourcentage est dépassé, les signaux numériques codés mosaïques générés par l'opération de codage préliminaire.

6. Procédé selon l'une quelconque des revendications 1 à 5, **caractérisé en ce que** ladite opération de décodage préliminaire utilise dans ladite boucle une matrice carrée, dont le nombre impair de lignes et le nombre de colonnes sont respectivement plus petits que le nombre de lignes et le nombre de colonnes d'une trame des signaux vidéo à reconstruire, alors que ces deux nombres sont plus grands, au moins d'une unité, que le nombre de niveaux de quantification de ladite amplitude de déplacement, et à travers laquelle circulent les signaux provenant de ladite opération de décompression, et la position des pixels ayant été déplacés est rétablie, tandis qu'ils sont soumis dans ladite matrice à une translation de direction inverse dont l'amplitude quantifiée et dont la direction orientée quantifiée sont spécifiées par les valeurs numériques desdits deux autres groupes de signaux.

7. Dispositif pour compresser un signal vidéo numérique d'entrée ayant au moins une composante de luminance et formé d'une succession de trames correspondantes, chacune représentant une image vidéo et formée d'une succession de pixels, ainsi que pour décompresser des signaux binaires compressés dans un dispositif de ce type, fonctionnant en compression,

- attendu que ce dispositif de compression et décompression comporte pour la compression :

  - au moins un filtre à ondelettes de codage préliminaire (11) desdits signaux vidéo numériques exécutant une analyse par ondelettes, favorisant la transmission des contours des images successives représentées par lesdits signaux, afin d'obtenir une succession de signaux numériques codés à mosaïque codant lesdits signaux sous la forme d'une succession de mosaïques d'images,
  - un ensemble de codage pour produire un flux de signaux binaires à partir de la succession de signaux numériques codés à mosaïque,
  - un ensemble de compression (13/CP) pour compresser le flux de signaux binaires afin de réduire le nombre des signaux binaires par suppression de la majorité des signaux binaires dudit flux dont la valeur est déterminée parmi deux valeurs possibles de tels signaux, et

- attendu que ce dispositif de compression et de décompression comporte pour la décompression :

  - un ensemble de décompression (13/DP) pour décompresser lesdits signaux binaires compressés, lequel reconstruit ledit flux de signaux binaires avant suppression, dans ledit ensemble de compression, de la majorité des signaux binaires de valeur déterminée,
  - un ensemble de décodage produisant une succession de signaux numériques codés mosaïques,
  - un ensemble de décodage final constitué d'un filtre à ondelettes à fonctionnement inverse, qui reconstruit, à partir d'ondelettes se présentant sous la forme de mosaïques d'images, un signal vidéo numérique, lesdits signaux vidéo numériques,

    **caractérisé en ce que** ;

- pour la compression, il comporte, de plus, au moins en ce qui concerne la composante de luminance desdits signaux vidéo numériques d'entrée, un ensemble de codage (12A) supplémentaire, dont l'entrée (20) est reliée à la sortie (16) dudit filtre à ondelettes (11) et dont la sortie (24) est reliée à l'entrée (25) dudit ensemble de compression (13/CP), alors que cet ensemble est sensible aux déplacements des contours desdites images successives représentées par ladite succession de signaux codés ayant des mosaïques d'images reçues à l'entrée et comportant, afin de traiter chaque pixel d'une trame,

  a) des moyens (21) pour déduire à partir de ladite succession de signaux codés ayant des mosaïques d'images, un paquet de signaux binaires représentatifs d'un déplacement ou d'un non-déplacement du pixel entre la trame impliquée et les trames précédentes, ainsi que de l'amplitude et de la direction orientée du déplacement, s'il en existe; lesdits moyens étant :

  - des moyens (2 la) pour un traitement temporel, dans lequel pour chaque pixel, la valeur dudit pixel est comparée à sa valeur correcte précédente, lissée en utilisant une "constante de temps" qui est amenée à évoluer au cours du temps pour maximiser le lissage, afin de déterminer deux paramètres significatifs de la variation temporelle de la valeur du pixel, paramètres variables dans le temps et représentés par deux signaux numériques, à savoir un premier signal binaire *DP,* dont une première valeur représente le dépassement d'un seuil représenté par ladite variation et une seconde valeur le non-dépassement de ce seuil déterminé par ladite variation, et un second signal numérique *CO*, à nombre réduit de bits, représentatif de la valeur relative à l'instant, pour ledit pixel, de ladite constante de temps,
  - des moyens (21b) pour un traitement spatial des valeurs, pour une trame donnée, desdits deux signaux numériques *DP* et *CO* pour déterminer les pixels en mouvement dans lesquels à la fois ledit premier signal *DP* présente ladite première valeur représentative du dépassement dudit seuil et ledit second signal *CO* varie d'une manière significative entre pixels voisins, et
  - des moyens (21c) pour déduire, à partir desdits pixels en mouvement, d'une part, la première valeur, représentative d'un déplacement, pour ledit second signal binaire et, d'autre part, les valeurs numériques desdits deux autres groupes numériques parmi lesdits quatre groupes de signaux numériques,

  b) des moyens (34) pour rétablir la position du pixel s'il a été déplacé,
  c) des moyens (39) pour contrôler si le pixel à position rétablie en cas de déplacement est en conformité ou en non-conformité avec le pixel correspondant de la trame impliquée,
  d) des moyens pour mémoriser le résultat de ce contrôle, et
  e) des moyens (40) pour transférer audit ensemble de compression (13/CP) soit ledit paquet de signaux représentatifs en cas de conformité, soit les signaux codés à mosaïque d'images provenant dudit filtre à ondelettes en cas de non-conformité, et

- pour la compression, il comporte, de plus, un ensemble de décodage préliminaire, dont l'entrée est reliée à la sortie dudit ensemble de décompression et dont la sortie est reliée à l'entrée inverse dudit filtre à ondelettes, lequel comporte :

  a) une boucle (50-51-52) dont l'entrée (34c) reçoit, depuis ledit ensemble de décompression (13/DP), ledit flux reconstruit de signaux binaires, qui commence par des signaux de type à mosaïque d'images correspondant à une première trame des signaux vidéo à reconstruire et qui circule sous la forme d'un signal de type à mosaïque d'images, tandis que la durée du trajet desdits signaux sur ladite boucle est égale à celle d'une trame des signaux vidéo à reconstruire,
  b) des moyens (70) pour repositionner, dans ladite boucle, les pixels ayant subi un déplacement indiqué par un groupe de signaux numériques qui représentent, dans ledit flux reconstruit de signaux numériques, l'amplitude et la direction de déplacement,
  c) des moyens (203) pour remplacer les signaux de type à mosaïque d'images en circulation dans la boucle par les nouveaux signaux de ce type lorsqu'ils arrivent, et
  d) des moyens pour transmettre à l'opération de décodage finale, à partir d'une sortie (35) située en aval de ladite position d'entrée, les signaux de type à mosaïque d'images circulant dans la boucle, après un possible repositionnement.

8. Dispositif selon la revendication 7, **caractérisé en ce**, pour la décompression, ledit ensemble de décodage préliminaire comporte :

- des moyens pour amener à circuler normalement, dans une boucle (50-51-52), une trame desdits signaux décompressés, mais codés, reçus depuis ladite partie de décompression dudit ensemble de compression-décompression tant que les deux signaux binaires représentent simultanément une absence de correction et une absence de mouvement,
- des moyens pour remplacer, dans ladite boucle, la trame en circulation, par une nouvelle trame arrivant avec de nouvelles valeurs de pixels, au cas où les signaux binaires de correction indiquent la nécessité d'une correction, et
- des moyens pour effectuer, dans une matrice carrée (50), dont le nombre impair de lignes et de colonnes est plus petit que le nombre de lignes et de colonnes d'une trame, alors que ces deux nombres sont plus grands que, d'au moins une unité, que le nombre de niveaux de quantification de ladite amplitude de déplacement, et à travers laquelle circulent lesdits signaux décompressés, une opération de translation des pixels en mouvement dans ladite matrice de leur position vers la position centrale de pixel dans ladite matrice, au cas où ledit premier signal binaire de correction indique une absence de correction tandis que ledit second signal binaire de déplacement indique un déplacement.

9. Dispositif selon la revendication 7 ou 8, **caractérisé en ce qu'**il comporte des moyens (203) pour amener ledit signal numérique codé au niveau de l'entrée à circuler sur une boucle (50-51-52), dont la durée du trajet nécessaire pour ledit signal est égale à la durée d'une trame de ce signal, des moyens pour amener ledit signal, pendant son trajet sur ladite boucle, à passer à travers une matrice de positions de pixels (50) dont le nombre de lignes, d'une part, et le nombre de colonnes, d'autre part, est au moins égal à 2n+1, $n$ désignant le nombre de niveaux quantifiant l'amplitude de déplacement, de sorte que ledit signal est injecté dans ladite boucle à une position centrale (60) de ladite matrice (50), des moyens (70) pour ramener, après course de ladite première trame de chaque séquence, dans ladite position centrale (60), un pixel dudit signal, tout en se déplaçant à l'intérieur de ladite matrice, qui s'est déplacé entre la trame concernée et la trame précédente, en relation avec le paquet de bits de correction concernant ledit pixel, afin de rétablir ainsi les trames successives des séquences telles qu'elles étaient avant le codage dans l'opération de codage, et des moyens pour extraire à partir de ladite boucle, dans une position (35) située en aval de ladite position centrale (60),, dans la direction de course, les trames successives ainsi rétablies.

10. Dispositif de compression vidéo, comportant :

- une étape d'analyse de mouvement, comportant un ensemble de circuit conçu pour identifier un pixel d'une trame en cours d'une vidéo dont le contenu correspond à un pixel différent d'une trame précédente de la vidéo, et conçu pour produire une donnée codant le mouvement entre le pixel de la trame précédente et le pixel de la trame en cours, et
- au moins une autre étape de traitement vidéo d'un ensemble de circuit et/ou d'un logiciel interconnecté à l'étape d'analyse de mouvement pour réaliser une compression de la vidéo.

11. Dispositif selon la revendication 10, dans lequel l'étape d'analyse de mouvement comporte de plus un ensemble de circuit et/ou un logiciel conçu pour identifier un pixel de la trame en cours dont le contenu correspond au même pixel de la trame précédente.

12. Dispositif selon la revendication 11, dans lequel le contenu correspondant est identifié lorsqu'une valeur numérique du pixel de la trame en cours diffère du pixel de la trame précédente dans une tolérance de seuil.

13. Dispositif selon la revendication 11, dans lequel une donnée codant le pixel de la trame en cours dont le contenu correspond au même pixel de la trame précédente est entièrement constitué de zéros.

14. Dispositif selon la revendication 10, dans lequel l'étape d'analyse de mouvement comporte de plus un ensemble de circuit conçu pour acheminer un contenu d'un pixel de la trame en cours à la place de la donnée de codage de mouvement du pixel.

15. Dispositif selon la revendication 14, dans lequel ledit pixel est sélectionné à cause d'un grand changement du contenu dudit pixel.

16. Dispositif selon la revendication 10, dans lequel le mouvement est codé sous forme d'un déplacement spatial entre le pixel de la trame précédente et le pixel de la trame courante.

17. Dispositif selon la revendication 16, dans lequel le déplacement spatial est codé sous forme d'une direction et d'une distance.

18. Dispositif selon la revendication 10, comportant de plus :

    un décodeur conçu pour décoder des données de codage de mouvement produites par l'étage d'analyse de mouvement,
    un comparateur conçu pour comparer le mouvement décodé généré par le décodeur à une représentation d'entrée dans l'étage d'analyse de mouvement, et
    un ensemble de circuit commandé par le comparateur.

19. Dispositif selon la revendication 18, dans lequel l'ensemble de circuit commandé par le comparateur introduit des corrections dans une représentation du mouvement mémorisé mémorisé dans le décodeur.

20. Dispositif selon la revendication 18, dans lequel l'ensemble de circuit commandé par le comparateur est conçu pour accroître un facteur de compression du dispositif en introduisant du bruit dans la compression de la vidéo.

21. Dispositif selon la revendication 18, dans lequel l'ensemble de circuit commandé par le comparateur supprime une donnée de codage de mouvement, et la remplace par une donnée moins codée dans une partie correspondante de la vidéo.

22. Dispositif selon la revendication 10, comportant de plus :

    un codeur à ondelettes en amont de l'étage d'analyse de mouvement.

23. Dispositif selon la revendication 10 ou 22, comportant de plus un codeur à longueur variable en aval de l'étage d'analyse de mouvement.

24. Dispositif selon la revendication 10, dans lequel l'étage d'analyse de mouvement analyse un canal de luminance de la vidéo.

25. Dispositif selon la revendication 24, dans lequel des canaux de chrominance de la vidéo ne sont pas analysés dans l'étage d'analyse de mouvement.

26. Dispositif selon la revendication 24, dans lequel des canaux de chrominance de la vidéo sont compressés en se basant sur l'analyse du canal de luminance.

27. Dispositif selon la revendication 24, dans lequel des canaux de chrominance de la vidéo sont compressés conformément à un changement d'intensité pendant l'étape qui analyse le canal de luminance.

28. Dispositif pour décoder numériquement de la vidéo codée qui est codée conformément à la partie du procédé de compression avec l'analyse de mouvement du procédé selon les revendications 1 à 6, ledit dispositif ayant un ensemble de décodage préliminaire qui comporte :

    a) une boucle sous la forme d'une mémoire tampon (410) séquentielle de la taille d'au moins une trame plus 2n lignes plus 2n+1 pixels, où n est l'amplitude maximale du mouvement, et dont l'entrée reçoit des signaux de type à mosaïques d'images correspondant à une première trame des signaux vidéo à décoder et qui circulent sous la forme de signaux de type à mosaïque d'images, tandis que la durée du trajet desdits signaux sur ladite boucle est égale à celle d'une trame des signaux vidéo à reconstruire,
    b) des moyens (70) pour repositionner, dans ladite boucle, les pixels ayant subi un déplacement indiqué par un groupe de signaux numériques qui représentent, dans ledit flux reconstruit de signaux numériques, l'amplitude et la direction de déplacement,
    c) des moyens (203) pour remplacer les signaux de type à mosaïques d'images en circulation dans la boucle par les nouveaux signaux de ce type lorsqu'ils arrivent, et
    d) des moyens pour transmettre à l'opération de décodage finale, à partir d'une sortie (35) située en aval de ladite position d'entrée, les signaux de type à mosaïques d'images circulant dans la boucle, après un possible repositionnement.

FIG_1

FIG_2

FIG_3

Fig. 4

Fig. 5

Fig. 6

Fig. 7

Pi

T1    T2

b = 1    oui    oui    | Pc - Va |< s

non

a=0    non

a=1

b=0
c=0
d=0

b=1
c= c
d= d

0 | b | c | d    1 | MY"

Fig. 8

Fig. 9

Fig 10

Fig. 11

Fig. 12

Fig. 13

Fig. 14

EP 1 110 408 B1

Fig. 15

Fig. 16

Fig. 17

Fig. 18

Fig. 19

Fig. 20

## FIG_21

# FIG_22

| a | b | c | d |
|---|---|---|---|

←—1bit—→←—1bit—→←——— 3bits ———→←——— 3bits ———→

when  a=1:

    packet  encodes  a  large  change

    | b | c | d | is seven bits  of VW with  no  further  encoding

when  a=0  and  b=1

    packet  encodes  a small  movement   change

    c =3bits quantified  magnitude

    d =3bits direction  (Freeman  code)

when  a=0  and  b=0

    packet  encodes  a stationary pixed

    c=0  and  d=0

EP 1 110 408 B1

## FIG_23

300

GVPP CORE 310 — SPATIAL 312, TEMPORAL 314, HISTOGRAM 316

DELAY FIFO 320

DELAY FIFO 324

MOTION DECODER 400

COMPARE 350, 360, 362, 364

COUNTER/COMPARATOR 340

PACKET FORMATION 370 — 372, 374, 380, 382, 384

322, 326, 342

DP

VW"

VW(Y) 8

VW(R), DELAY FIFO (red) 328r

VW(B), DELAY FIFO (blue) 328b

VM(Y), VM(R), VM(B) — VM

390r, 390b

8

# FIG_24a

|a|b|c|d|
VM1
322

400

412₁

412₂

- - -

422

412₉

modified FIFO
410

412₅₂₅

VW

414₁

35

432₂

432₁

414₇

432₀

414₈

414₉

430     432₁     414₁₀

FIG_24b

# FIG_25

| | | | | | | | | | | | | | | | | |
|---|---|---|---|---|---|---|---|---|---|---|---|---|---|---|---|---|
| 106 | | | 105 | | | 104 | | 103 | | 102 | | | 101 | | | 100 |
| | 87 | | | | 86 | | | 85 | | | 84 | | | | 83 | |
| | | 71 | | | 70 | | | 67 | | | 68 | | | 67 | | |
| 107 | | | 55 | | | 54 | | 53 | | 52 | | | 51 | | | 99 |
| | | | | 39 | | 38 | | 37 | | 36 | | 35 | | | | |
| | | | | | 28 | | | 27 | | | 26 | | | 66 | 82 | |
| 108 | 88 | 72 | | | | 15 | 14 | 13 | 12 | 11 | | 34 | 50 | | | 98 |
| | | | 56 | 40 | | 16 | 4 | 3 | 2 | 10 | | | | | | |
| 109 | 89 | 73 | 57 | 41 | 29 | 17 | 5 | 0 | 1 | 9 | 25 | 33 | 49 | 65 | 81 | 97 |
| | | | | | | 18 | 6 | 7 | 8 | 24 | | | | | | |
| 110 | | | 58 | 42 | | 19 | 20 | 21 | 22 | 23 | | 48 | 64 | | | 120 |
| | 90 | 74 | | | 30 | | | 31 | | | 32 | | | 80 | 96 | |
| | | | | 43 | | 44 | | 45 | | 46 | | 47 | | | | |
| 111 | | | 59 | | | 60 | | 61 | | 62 | | | 63 | | | 119 |
| | | 75 | | | 76 | | | 77 | | | 78 | | | 79 | | |
| | 91 | | | | 92 | | | 93 | | | 94 | | | | 95 | |
| 112 | | | 113 | | | 114 | | 115 | | 116 | | | 117 | | | 118 |

# FIG_26d

FIG_26b

FIG_26a

FIG_26c

# FIG_27

# FIG_28